# EUROPEAN PATENT SPECIFICATION

(11) **EP 4 364 948 B1**
(45) Date of publication and mention of the grant of the patent: **08.07.2026**
(21) Application number: 22832238.4
(22) Date of filing: 29.08.2022
(51) Int. Cl.: B41C 1/05, B23K 26/362, B23K 26/06, B23K 26/067, B23K 26/08, B23K 26/402

(54) **LASER PLATE MAKING DEVICE AND PLATE MAKING SYSTEM COMPRISING SUCH DEVICE**
LASERPLATTENHERSTELLUNGSVORRICHTUNG UND PLATTENHERSTELLUNGSSYSTEM MIT EINER SOLCHEN VORRICHTUNG
DISPOSITIF DE FABRICATION DE PLAQUE AU LASER ET SYSTÈME DE FABRICATION DE PLAQUE COMPRENANT UN TEL DISPOSITIF

(30) Priority: 30.06.2021 CN 202110740196
(43) Date of publication of application: 08.05.2024
(60) Divisional application: 26181629.2
(73) Proprietor: China Banknote Security Printing Technology Research Institute Co., Ltd, Beijing 100070 (CN); China Banknote Designing And Engraving Co., Ltd., Beijing 102629 (CN); China Banknote Printing and Minting Corp., Beijing 100044 (CN)
(72) Inventor: QU, Mingsheng, Beijing 100070 (CN); LIU, Yongjiang, Beijing 100070 (CN); QU, Yuan, Beijing 100070 (CN); DONG, Xueliang, Beijing 100070 (CN); PAN, Pinli, Beijing 100070 (CN); MA, Jian, Beijing 100070 (CN); ZHANG, Linyuan, Beijing 100070 (CN); WANG, Chuan, Beijing 100070 (CN); HAN, Xuyan, Beijing 100070 (CN); WANG, Xue, Beijing 100070 (CN); WANG, Xue, Beijing 100070 (CN); LI, Feng, Beijing 100070 (CN); YAO, Zongyong, Beijing 100070 (CN); BO, Yuxia, Beijing 100070 (CN); GUO, Lisha, Beijing 100070 (CN)
(74) Representative: Dr. Weitzel & Partner
(86) International application number: PCT/CN2022/115376
(87) International publication number: WO 2023/274426

(56) References cited:
- CN-A- 1 689 803
- CN-A- 1 689 803
- CN-A- 1 824 499
- CN-A- 103 521 926
- CN-A- 113 634 903
- CN-U- 201 824 616
- CN-U- 211 889 438
- JP-A- H0 516 317
- JP-A- H0 516 317
- US-A- 4 383 483
- US-A- 5 427 026

## Description

The present invention relates to the field of plate making using laser engraving, and specifically, relates to a laser plate making device and a plate making system, see claims 1 and 39.

A technology of using laser to directly engrave a metal gravure plate and a screen plate is a direction of the development of the plate making technology in the banknote printing industry, and compared with traditional processes of gravure original plate, nickel gravure printing plate and plate making using electroplating, a traditional plate making process of burning plate and eroding multi-layer metal plates, an electroformed screen process, etc., engraving a banknote gravure plate and a screen plate using laser directly can improve not only the fine degree of the pattern of a printing plate, but further the anti-counterfeiting ability of products, and a direct engraving machine plate further conforms to environmental polices, and embodies the idea of sustainable development.

Currently, international technical systems of engraving a gravure plate using laser directly are mainly a CTiP system of a KBA-Notasys corporation, an FIT 2^{nd} Generation system of a G&D corporation and a DLE system of a Jura corporation, and the three engraving systems differ from each other in aspects such as engraving methods and plate materials, and the CTiP system which is internationally used the most widely uses a resin plate for laser engraving, and can only make the gravure original plate, in view of the characteristics of resin materials, the original plate can only be used once. The FIT 2^{nd} Generation system is mainly a gravure original plate engraving technology of combining a machine engraving with a laser engraving, and its plate making efficiency is improved to a certain extent compared with pure laser engraving. The DLE system is a technology of engraving a copper alloy plate using laser, and can make the gravure original plate or a machine printing plate, while its printability is not high for the machine printing plate, and it is not suitable for an application for a large print run of banknotes. The three gravure plate making systems are mainly used in making the gravure original plate, and then make the plate for the printing plate through a way of electroplating and casting, while a Romanian banknote printing factory uses the DLE system and a vacuum chromium plating technology to make a direct engraving machine gravure printing plate, and this embodies the development idea of green plate making while can only meet the need of a small print run.

In a word, in current laser plate making devices, most of them fix a printing plate on a planar platform to process, while the printing plate actually presents a bending state on the roller of a printing press, and thus the pattern processed in a planar state has certain deformation after the bending of the printing plate occurs, which affects printing effect. A few laser plate making devices can process patterns on the roller, while they can only process a gravure printing plate, or can only process a screen printing plate, and there is a lack of a universal device that can process both the gravure plate and the screen plate; moreover, most of laser processing devices only have one processing head, and then the processing efficiency is not high; a few devices having multiple processing heads do not take into consideration the problem that if a processing head fails, the space it occupies will lead to the insufficient processing space of the remaining processing heads.

JP H0 516 317 A (describing the preamble of claim 1), shows a plate making device to shorten a plate making time when a gravure plate of a full size is made by a method wherein a plate securely wound on a cylindrical roller forming a plate cylinder is irradiated with laser beams from semiconductor lasers. The constitution is as follows :A plurality of laser blocks respectively provided with semiconductor lasers are arranged in the direction (a Y axis) of rotating a plate cylinder wound with a plate or the direction (an X axis) of a rotating shaft thereof. The semiconductor lasers in these two or more laser blockes are simultaneously driven to make a plate in a parallel system.

CN 1 689 803 A discloses in the field of electronic reproduction technology, an apparatus for clamping and holding a printing plate on the surface of an exposure drum. The clamping apparatus has actuating elements that are accommodated in the interior of the exposure drum. Only the clamping bars that clamp the printing plate fixedly protrude slightly beyond the drum surface. Terminating elements are provided for holding the rear edge of the printing plate, which terminating elements can be displaced in the suction grooves of the drum surface and primarily restrict the vacuum that draws the printing plate onto the drum surface to the surface below the printing plate. Additionally, the terminating elements are provided with a roof element that protrudes beyond the rear edge of the printing plate and, thus, encloses the rear edge in the gap between the roof element and the exposure drum without, however, clamping it fixedly. Accordingly, devices for locking the terminating elements in their circumferential position are not required.

The present invention aims to solve at least one of the problems existing in the prior art or relate art.

This aim is solved by a laser plate making device with the features of claim 1.

Furthermore this aim is solved by a plate making system comprising such a laser plate making device correspondingly, see claim 39.

Further advantageous embodiments of the laser plate making device as well as of the plate making system are defined in the claims depending thereof.

In order to achieve at least one of the above purposes, the invention provides a laser plate making device, including: a base; a roller movably provided on the base, and the roller is rotatable relative to the base, moves along the axial direction of the roller, and is provided with a printing plate; at least one optical path platform movably provided on the base, and each optical path platform is provided with at least one laser machining assembly, the processing range of the laser machining assembly covers the moving range of the printing plate in the axial direction through the movement of the optical path platform and/or the roller, and the laser machining assembly is capable of machining, on the printing plate, gravure plates and/or screen plates.

According to the present invention, the roller comprises: a roller body, and the roller body is hollow, the two ends of the roller body are respectively provided with an opening, and the roller body is sleeved by a roller housing; a positioning filler, provided at the two ends of the roller body, and the positioning filler adapts to the shape of the opening, to seal the openings of the roller body through the positioning filler.

It can be understood that the laser plate making device belongs to a large machinery in view of its volume and weight, and the interior of the roller body is disposed to be hollow to reduce the weight of the roller body, and the two ends of the roller body are provided with the opening, the positioning filler adapts to the shape of the openings in the two ends of the roller body, and the openings of the roller body are sealed through the positioning filler; firstly, the roller is clamped and positioned through the positioning filler, and secondly, outside impurities are prevented from entering the interior of the roller body. And the roller housing is sleeved on the roller body, to help arrange the printing plate, that is, the printing plate is provided on the roller housing, and the roller housing is sleeved on the roller body.

According to the present invention, the roller housing is provided with a plurality of positioning grooves extending in an axial direction, each positioning groove is provided with a first through hole and a first blind hole, and an internal thread is provided on the inner wall of the first blind hole.

Through providing the plurality of positioning grooves extending in the axial direction in the roller housing, an assembling space is formed on the roller housing, to mount parts on the roller housing, and the first through hole and the first blind hole are provided in the positioning groove, and through the first through hole and the first blind hole, the connection between the roller housing and the roller body or the connection between the roller housing and the printing plate can be achieved. Furthermore, the first blind hole is provided with the thread, and thus the threaded connections between the roller housing and other parts can be achieved through the first blind hole and a connecting member.

According to the present invention, there is a gap between the roller and the printing plate, so that, in use, an axial airflow is formed in the gap when the roller rotates.

The roller and the printing plate are arranged at an interval, and there exists the gap between them which allows for air inflow; when the roller rotates, the roller and the printing plate bring the air in the gap to flow, to form an axial airflow in the gap, and this increases the heat dissipation area of the printing plate and improves the heat dissipation efficiency of the printing plate, and can reduce the unfavorable effect to the size and material of the printing plate caused by laser processing heat.

According to the present invention, the laser plate making device further comprises a fixing assembly provided in the positioning groove, and the fixing assembly is configured to fix the relative position between the printing plate and the roller.

Through providing the fixing assembly in the positioning groove, the printing plate is fixed to the roller through the fixing assembly, and the printing plate can be brought by the roller to move. The fixing assembly forms support at multiple positions on the inner wall surface of the printing plate, and the relative position between the printing plate and the roller has a better accuracy, and this helps improve the quality of the engraved patterns.

And each positioning groove is provided with one fixing assembly; the fixing assembly can be a sealing strip and can further be a fixing strip, and meanwhile, the positions and numbers of adsorbing blocks and isolating blocks can be adjusted on the fixing strip according to needs.

According to the present invention, the fixing assembly comprises the fixing strip and the sealing strip, and a portion of the positioning grooves which are covered by the projection of the printing plate on the roller housing are provided with the fixing strips, the printing plate is fixed through the fixing strips, and each positioning groove is provided with the fixing strip or the sealing strip.

The fixing assembly comprises the fixing strip and the sealing strip; the fixing strip is configured to fix the printing plate, the sealing strip is configured to seal the through holes in the positioning groove, and the portion of the positioning groove which is not covered by the printing plate can be sealed by the sealing strip. The printing plate can be a fully circumferential cylindrical printing plate or a non fully circumferential printing plate; the projection of the fully circumferential cylindrical printing plate on the roller housing covers all of the positioning grooves, then each positioning groove is provided with the fixing strip to achieve fixing the printing plate. The projection of the non fully circumferential printing plate on the roller housing only covers a portion of the positioning grooves, then this portion of positioning grooves which are covered are provided with the fixing strip for fixing the printing plate, and the portion of the positioning grooves which are not covered are provided with the sealing strip for sealing the through holes in the positioning grooves.

According to the present invention, the fixing strip presents a rectangular strip shape, and is provided with a plurality of first connecting hole assemblies, and the laser plate making device further comprises the adsorbing blocks provided on the fixing strips, and the adsorbing blocks are connected to the fixing strips through the first connecting hole assemblies.

The fixing strip presents a rectangular strip shape, and the outer wall profile of the fixing strip cooperates with the positioning groove, to achieve the positioning of the fixing strip; in addition, through the cooperation between a plurality of outer side profiles and the positioning groove, the stability of the connection between the fixing strip and the positioning groove is improved, and the shaking of the fixing assembly is reduced. In addition, a plurality of the first connecting hole assemblies are further provided in the fixing strip, the adsorbing block is connected to the fixing strip through the first connecting hole assembly, and through the first connecting hole assemblies, the air inside the roller body flows out via the first through holes in the positioning grooves, the first connecting hole assemblies and the adsorbing blocks, or the air from the outside flows into the internal space of the roller body through the adsorbing blocks, the first connecting hole assemblies and the first through holes in the positioning grooves.

According to the laser plate making device provided in the present invention, through disposing the printing plate on the roller, the roller is movably provided on the base, and the roller is rotatable relative to the base and can move along the axial direction of the roller, and the roller can bring the printing plate to rotate relative to the base, and the roller can further move along its axial direction, to help process the printing plate, and the rotation of the printing plate relative to the base and the movement along the axial direction of the roller can make wider the processing range of the laser machining assembly corresponding to a single optical path platform, that is, the laser machining assembly can process patterns in the circumferential area of the printing plate, and can further process patterns along the axial direction. And at least one optical path platform is provided on the base, and the optical path platform can move relative to the base, at least one laser machining assembly is provided on each optical path platform, and the working range of the laser machining assembly can cover the moving range of the printing plate in the axial direction, and the laser machining assembly can process patterns at any position of the printing plate, and in the case that there are multiple laser machining assemblies, when one of or a portion of the multiple optical path platforms and the laser machining assemblies are damaged, the movement of the optical path platforms and the roller relative to the base brings the laser machining assemblies to move relative to the base and the roller, to solve the problem that the processing space of the remaining laser machining assemblies is rendered insufficient as a portion of the laser machining assemblies fail and occupy space. In an embodiment, as a roller platform is relatively heavy, usually only the roller is driven to rotate, and it does not move along the axial direction. The optical path platform is relatively light, in normal cases laser heads are brought to move along the axial direction, which covers the axial direction of the roller. When there are two optical path platforms and the laser head of one of the platforms fails, the optical path platform where it is located can move to the idle area of the base, and this prevents occupying the axial moving space of the remaining processing heads. If there are three or more than three optical path platforms and the laser head on the optical path platform located at a middle position fails or the optical path platform per se fails, this inevitably affects the axial processing of the remaining processing heads on the two sides, and at this moment remedy is needed through the axial movement of the roller.

Furthermore, the laser machining assembly can process gravure plate patterns or screen plate patterns on the printing plate, to process the gravure plate patterns or screen plate patterns on the printing plate, or, through providing multiple different laser machining assemblies, a portion of the laser machining assemblies process the gravure plate patterns on the printing plate, and the other portion of the laser machining assemblies process the screen plate patterns on the printing plate, and the laser plate making device can process the gravure plate patterns and the screen plate patterns on one printing plate or multiple printing plates at the same time.

And there can be one optical path platform or multiple optical path platforms, which is determined according to the axial processing range of the printing plate on the roller, definitely, during design and production, due to the cost and the maintenance of the laser plate making device, usually a maximum number of optical path platforms is provided, thus, when the size of the printing plate in the axial direction is relatively small, a few optical path platforms can be started, and when the size of the printing plate in the axial direction is relatively large, a large number of optical path platforms can be started to process the patterns. It needs to be explained that the laser machining assembly can be wholly provided on the optical path platform, and can further be partially provided on the base, and its connection with the processing head is achieved through a flying optical path or an optical fiber.

It is understandable that for the printing plate provided on the roller, there can be one or multiple printing plates, the multiple printing plates can be provided on the outer wall of the roller along the axial direction of the roller, and can further be provided on the outer wall of the roller along the circumferential direction of the roller.

And the material of the base can choose marble, which can provide more stable support for the roller and the optical path platform.

In the above embodiment, the base is provided with a portal frame, the two sides of the portal frame are respectively provided with a roller guide rail provided corresponding to the roller and an optical path guide rail provided corresponding to the optical path platform, to achieve the movement of the roller in the axial direction through the roller guide rail and achieve the movement of the optical path platform through the optical path guide rail.

Through providing the portal frame on the base and respectively providing the roller guide rail provided corresponding to the roller and the optical path guide rail provided corresponding to the optical path platform at the two sides of the portal frame, the roller and the optical path platform respectively achieve through the roller guide rail and the optical path guide rail that the roller moves along the axial direction of the roller and the optical path platform slides on the optical path guide rail, to move relative to the base.

In an embodiment, through providing the roller guide rail and the optical path guide rail at the front side and the rear side of the portal frame, the portal frame can distinguish the optical path platform from the roller, to reduce the possibility of generating mutual interference during processing. More specifically, the roller guide rail is provided at the front side of the portal frame, and the optical path guide rail is provided at the rear side of the portal frame.

The extending direction of the optical path guide rail is the same with the extending direction of the roller guide rail.

Through disposing the extending direction of the optical path guide rail to be the same with the extending direction of the roller guide rail, the roller moves relative to the base along the axis of the roller, or, when the optical path platform slides along the optical path guide rail and then generates relative movement between the roller and the optical path platform, along a direction perpendicular to the axis of the roller, the distance between the optical path platform and the roller does not change, and thus the distance between the laser machining assembly provided on the optical path platform and the printing plate provided on the roller does not change, to reduce, when the optical path platform and the roller respectively slide on the optical path guide rail and the roller guide rail, the possibility of generating the change of the processing distance when the laser machining assembly engraves the printing plate.

In the above embodiment, the laser plate making device further comprises a support guide portion provided below the optical path platform, and the moving path of the optical path platform is limited through the cooperation between the support guide portion and the optical path guide rail.

Through providing the support guide portion below the optical path platform, the shape of the support guide portion can be formed by protruding downward from the surface at the lower side of the optical path platform, and can further be formed by depressing upward from the surface at the lower side of the optical path platform, and the protruding support guide portion can extend into the optical path guide rail, and the depressed support guide portion can be available for the extension of the optical path guide rail. Firstly, the support guide portion can slide on the optical path guide rail along the extending direction of the optical path guide rail, to limit the moving path of the optical path platform, and secondly, the support guide portion provides a support force for the optical path platform through abutting on the optical path guide rail.

It is understandable that the base is provided with the optical path guide rail cooperating with the support guide portion, and the guiding of the optical path platform is achieved under the joint effect of the support guide portion and the optical path guide rail. In addition, a limiting structure can be provided at the two ends of the support guide portion, and this better helps reduce the possibility of the occurrence of the falling off due to excessive movement when the optical path platform is moved.

In the above embodiment, the optical path platform achieves a straight line movement on the base through a linear motor; or the optical path platform achieves a straight line movement on the base through a screw nut transmitting mechanism, or achieves the straight line movement through a pinion and rack mechanism with an anti-backlash design. The optical path platform achieves the straight line movement on the base through the linear motor or the screw nut transmitting mechanism, and the linear motor can directly achieve the straight line movement of the platform under the driving of electric power, to help limit the straight line movement of the optical path platform on the base through limiting the power supply to the linear motor. And the structure of the linear motor is compact, the moving speed is fast, which is conducive to the miniaturization of the optical path platform and to improving the moving speed of the optical path platform. The screw nut transmitting mechanism makes the optical path platform move relative to the base through transforming the spiral movement of the nut into the straight line movement of the screw, the nut can be driven through a servo motor, the control speed and the position precision of the servo motor are very accurate, and then the moving precision of the optical path platform can be improved. In addition, the pinion and rack mechanism is configured to achieve the straight line movement, and the pinion is driven through a servo motor, the pinion and rack is subjected to anti-backlash through methods such as main and auxiliary pinions and main and auxiliary racks, and then the precision of the straight line movement of the optical path platform is ensured.

In the above embodiment, the laser machining assembly comprises: a laser optical path, provided on the optical path platform; a processing head, and one end of the processing head is electrically connected to the laser optical path, and the processing head is provided corresponding to the printing plate, to achieve the processing through emitting a laser to the printing plate by the processing head.

The laser machining assembly comprises the laser optical path and the processing head, and the laser optical path is provided on the optical path platform, to provide the laser that the processing needs through the laser optical path. In addition, one end of the processing head is electrically connected to the laser optical path, and the processing head is arranged corresponding to the printing plate, and the laser optical path supplies the laser to the processing head, and then the processing head emits the laser to the printing plate, and thus engraving patterns by the laser on the printing plate is achieved.

It needs to be explained that one processing head can be electrically connected to one laser optical path; and one laser optical path can further be connected to multiple processing heads; and the number of lasers is reduced.

One processing head can further be electrically connected to multiple laser optical paths at the same time, when a single laser optical path is damaged, another one can be used as a spare laser optical path for the processing.

In the above embodiment, one end of the optical path platform is provided with a processing mounting plate, the processing head is provided on the processing mounting plate, and the processing head can move in a vertical direction with respect to the processing mounting plate, the processing mounting plate can drive the processing head to move forward and backward on the optical path platform along the light emitting direction of the processing head.

Through providing the processing mounting plate on one end of the optical path platform, and through disposing the processing head movably on the processing mounting plate, the processing head can move in a vertical direction with respect to the processing mounting plate, thus the height of the processing head with respect to the optical path platform and the roller is changed, and this helps adjust the relative height of the processing head and the printing plate, and improve the quality of the engraved patterns.

In an embodiment, the position of the processing head can be adjusted on the processing mounting plate, to change the height in the vertical direction.

In a further embodiment, the processing mounting plate can be a piezoelectric ceramic actuator or a servo electric driven wedge mechanism.

In addition, the processing mounting plate can move forward and backward on the optical path platform along the light emitting direction of the laser processing head. When the diameter of the roller changes too much and goes beyond the focusing ability of a focus adjusting device, a processing mounting plate is configured to promote the position adjustment of the processing head in the radial direction of the roller, and then it is ensured that the focus point of the laser is still located on the surface of the printing plate.

In an embodiment, the processing mounting plate is connected to the optical path platform preferably through the linear motor, a linear module mover is located under the processing mounting plate, and a linear module stator is located on the optical path platform.

The laser optical path comprises: a laser generator, used for generating laser; at least one optical path protection tube, and the optical path protection tube is hollow, one end of the optical path protection tube is connected to the laser generator, and the laser is propagated in the optical path protection tube.

The laser optical path comprises the laser generator and the optical path protection tube; the laser generator is used for generating the laser, one end of the optical path protection tube is connected to the laser generator, the laser generated from the laser generator is emitted to the optical path protection tube; since the optical path protection tube is hollow, the laser can be propagated in the optical path protection tube, and meanwhile, outside influence can be reduced under the effect of the optical path protection tube at the same time, and the loss of the laser is further reduced in the propagating process.

It needs to be explained that there is one or multiple optical path protection tubes, and there can be an included angle between the multiple optical path protection tubes, i.e., the optical path of the laser has a bending angle.

Apparently, the light propagates in a straight line, and thus, each optical path protection tube is a straight tube.

In the above embodiment, the laser optical path further comprises: at least one reflective sheet, and direction of the optical path of the laser can be changed under the effect of the reflective sheet, and the optical path protection tube is provided between any two adjacent reflective sheets.

Through providing at least one reflective sheet, the direction of the optical path of the laser is changed through the reflective sheet. When the laser is irradiated on the reflective sheet, the reflecting laser and the incident laser present an included angle therebetween, which is not zero, under the reflecting effect of the reflective sheet, to change the direction of the optical path of the laser. And the optical path protection tube is provided between any two adjacent reflective sheets, thus after the laser is irradiated on a reflective sheet, the direction of the optical path is changed and the laser is emitted into the optical path protection tube and emitted out from the other end of the optical path protection tube, and the direction of the optical path is changed again through the other reflective sheet, and therefore, the length of the optical path protection tube or the reflection angle between the two adjacent reflective sheets can be adjusted according to needs, to change the propagating path of the laser and then align with the processing heads of different positions.

In the above embodiment, the laser optical path further comprises: a beam expanding and collimating device, provided on the optical path of the laser generated from the laser generator, and the beam expanding and collimating device can compress the divergence angle of the laser; a shaping device, provided on the optical path of the laser generated from the laser generator, and the shaping device can change the arrangement uniformity of the intensity of a laser beam; a focus adjusting device, provided on the optical path of the laser generated from the laser generator, and the focus adjusting device can adjust the position of the focus point of the laser; a detecting device, provided on the optical path of the laser generated from the laser generator, and the detecting device can achieve one or multiple of a power detection, a focus point detection and an orientation detection for the laser, and the optical path propagation between any two of the beam expanding and collimating device, the shaping device, the focus adjusting device and the detecting device is achieved by the optical path protection tube.

The laser optical path further comprises: the beam expanding and collimating device, the shaping device, the focus adjusting device and the detecting device. And the beam expanding and collimating device is provided on the optical path of the laser generated from the laser generator, the beam expanding and collimating device can compress the divergence angle of the laser, to reduce the volume that needs to be occupied during the propagation of the laser and improve the propagation efficiency of the laser; the shaping device is provided on the optical path of the laser generated from the laser generator, to change the arrangement uniformity of the intensity of the laser beam. The focus adjusting device can adjust the position of the focus point of the laser, to ensure the energy of the laser in the process of laser propagation. The detecting device is provided on the optical path of the laser generated from the laser generator, and the power, the focus point and the orientation of the laser are detected through the detecting device. The optical path propagation between any two of the beam expanding and collimating device, the shaping device, the focus adjusting device and the detecting device is achieved by the optical path protection tube, therefore, when the laser is propagated outside the beam expanding and collimating device, the shaping device, the focus adjusting device and the detecting device, the laser is propagated through the optical path protection tube, to reduce the influence on the laser from external environments and improve the quality of laser propagation.

In the above embodiment, the laser generated from the laser generator is emitted into the processing head after passing the beam expanding and collimating device, the shaping device and the focus adjusting device.

The laser generated from the laser generator is emitted into the processing head after passing through the beam expanding and collimating device, the shaping device and the focus adjusting device, and the laser generated from the laser generator is emitted into the processing head after the sequential completion of compressing the divergence angle, changing the arrangement uniformity of the intensity of the laser beam and adjusting the focus point of the laser, to help improve the precision and the quality of the patterns engraved by the laser.

In the above embodiment, the laser plate making device further comprises a beam splitter provided on the optical path platform, and the laser flowing to the beam splitter emits at least two optical paths under the effect of the beam splitter, and the optical paths emitted out of the beam splitter correspond to at least one processing head.

Through providing the beam splitter on the optical path platform, under the effect of the beam splitter, the laser flowing into the beam splitter can be converted into multiple optical paths and then emitted to the outside, and the optical paths emitted out of the beam splitter correspond to one or multiple processing heads, and one beam of laser generated from the laser generator emits laser to one or multiple processing heads under the effect of the beam splitter, under the precondition that the number of the laser generator is definite, the number of the processing heads is increased to improve the efficiency of a laser engraving operation.

In the above embodiment, the processing head comprises at least one reflective sheet, an output head and a focusing device, and the laser emitted into the processing head from the laser optical path is emitted to the printing plate to achieve processing after passing the reflective sheet, the output head and the focusing device successively.

The processing head is formed jointly by at least one reflective sheet, the output head and the focusing device, the laser emitted into the processing head from the laser optical path is reflected by at least one reflective sheet to change the direction of the optical path of the laser, then the laser is emitted into the output head, and when the laser is emitted out of the output head, after the focusing of the focusing device, the energy of the laser is enhanced and the laser is emitted to the printing plate, to engrave patterns on the printing plate.

And it needs to be explained that there is a telescopic optical path protection tube between two adjacent reflective sheets, and this does not affect the change of the distance between the reflective sheets.

In addition, since the laser is subjected to beam expansion and collimation, the change of the optical distance between the reflective sheets does not affect the propagation quality of the laser.

In the above embodiment, the plurality of positioning grooves are uniformly provided in the roller housing, the first through hole runs through both the inner side and the outer side of the roller housing, and the first through holes and the first blind holes are provided in the positioning groove alternatively.

There are a plurality of positioning grooves in the roller housing, the plurality of positioning grooves are arranged uniformly along the circumferential direction of the roller housing, i.e., the included angle formed between any positioning groove and the axis is the same with the included angle formed between an adjacent positioning groove and the axis, and the first through holes and the first blind holes are provided in the positioning groove alternatively, and this indirectly renders that the objects connected by a plurality of the first through holes are in a uniformly stressed connection with the roller housing, and likewise, the objects connected by a plurality of the first blind holes are further in a uniformly stressed connection with the roller housing. And when the fixing assemblies are mounted in the positioning grooves through the first blind holes, the fixing assemblies can be distributed uniformly on the roller housing, meanwhile, the first through hole runs through both the inner side and the outer side of the roller housing, and this helps the air in the roller housing communicate with the air outside the roller housing through the first through holes when the first through holes are not connected to the remaining structures.

In the above embodiment, the roller body is formed with a hollow shaft therein, the hollow shaft separates the space inside the roller body along the radial direction into a hollow cavity communicating with the opening and a support cavity; the roller further comprises: a rib plate, provided in the support cavity, and the rib plate is respectively connected to the inner wall of the roller body and the outer wall of the hollow shaft at the two sides distributed along the radial direction.

The hollow shaft is formed inside the roller body, and can provide support for the structure and the shape of the roller housing, and the positioning for the roller body can be achieved through the hollow shaft. The hollow shaft separates the space inside the roller body along the radial direction into the hollow cavity communicating with the opening and the support cavity, and the air in the hollow cavity can flow out of the roller body from the opening, or the air enters the hollow cavity and the support cavity through the opening.

Furthermore, the support cavity is further provided with the rib plate; the rib plate is respectively connected to the inner wall of the roller body and the outer wall of the hollow shaft at the two sides along the radial direction, thus the supporting and positioning for the roller housing can be achieved through the rib plate, and furthermore, the rib plate can further limit the relative position of the roller housing and the hollow shaft.

In the above embodiment, a plurality of first vents are provided in the rib plate, and a plurality of second vents are provided in the hollow shaft.

Through providing the plurality of first vents in the rib plate, firstly, the weight of the rib plate is reduced through the arrangement of the plurality of first vents, and secondly, the first vents communicate the spaces of the support cavities at the two sides of each rib plate, and the support spaces of different areas separated by the rib plate communicate with each other; and the plurality of the second vents are provided in the hollow shaft to communicate the hollow cavity with the support cavity, and the air in the support cavity communicates with the opening through the second vents and the hollow cavity, and thus the air in the support cavity and the hollow cavity can be in circulation with the air outside the roller through the opening.

In the above embodiment, the rotating axis of the positioning filler is provided on the axis of the roller body, and a positioning cone hole is provided at the rotating axis of the positioning filler.

The rotating axis of the positioning filler is provided on the axis of the roller body, and the positioning cone hole is provided at the rotating axis of the positioning filler, and the axis of a clamp coincides with the axis of the roller body after the roller body is clamped and fixed through the positioning cone hole, and the rotating center line of the roller body coincides with the axis of the roller body when the roller body is brought to rotate, and the rotation of the roller body is more stable.

In a further embodiment, the positioning filler is in a circular shape. And when the clamp clamps the positioning filler, the positioning cone hole has a guiding function, and the clamp can find the clamping position quickly and accurately.

In the above embodiment, a valve is provided inside the positioning filler which is provided at one end of the roller body, and the printing plate can be limited to be adsorbed to the roller or to fall off the roller through the valve.

Through providing the positioning filler at one end of the roller body and providing the valve inside the positioning filler, when the valve opens, the interior of the roller body can communicate with the outside, i.e., the air can flow into the interior of the roller body or flow out of the interior of the roller body through the valve, and through drawing the air in the internal space of the roller body through the opened valve, a negative pressure is generated in the internal space of the roller body, and then the printing plate is adsorbed onto the surface of the roller. It can be understood that air is input into the internal space of the roller body through the opened valve, and the air pressure of the internal space is greater than the outside air pressure, and then the printing plate is expanded, and this helps take off the printing plate from the roller.

In the above embodiment, the first connecting hole assembly comprises: a first step through hole, and a second blind hole arranged outside the first step through hole along the radial direction; a second step through hole, provided between any two adjacent first step through holes, and the second step through hole is arranged corresponding to the first blind hole; and a third sealing ring groove, winding the side of the fixing strip away from the first step through hole, and the inner wall of the second blind hole is provided with an internal thread.

The first connecting hole assembly which connects the adsorbing block with the fixing strip comprises the first step through hole and the second blind hole, and the second blind hole is provided with the internal thread, a bolt passes through the adsorbing block and extends into the second blind hole, and then the adsorbing block is fixed to the fixing strip. The first step through hole, firstly, extends a portion of the adsorbing block into the first step through hole, to achieve the positioning of the adsorbing block, and secondly, the first step through hole communicates the adsorbing block with the internal space of the roller body, and thus, when the internal space of the roller body presents a negative pressure, the adsorbing blocks adsorb the printing plate and the printing plate is adsorbed to the adsorbing blocks, and when the air pressure in the internal space of the roller body is greater than the outside air pressure, the air escapes from the adsorbing blocks and the printing plate is detached from the adsorbing blocks. Furthermore, the first connecting hole assembly further comprises the second step through hole, the second step through hole is provided between any two adjacent first step through holes, and the second step through hole is provided corresponding to the first blind hole, and the bolt can pass through the second step through hole and extend into the first blind hole, to achieve a fixed connection between the fixing strip and the positioning groove.

In addition, the third sealing ring groove is provided and winds the other side opposite to the opening of the first step through hole of the fixing strip, and is mainly configured to place a sealing ring, to prevent the air from escaping from the gap between the fixing strip and the positioning groove after the fixing strip is fixed in the positioning groove. It needs to be supplemented that the axis of the third sealing ring groove coincides with the axis of the first through hole in the roller housing, which plays a role that the sealing ring can seal the first through hole of the roller housing after the fixing strip is fixed in the positioning groove, and thus prevents the air from escaping from the gap between the fixing strip and the roller housing.

In the above embodiment, there are two second blind holes in the first connecting hole assembly, the two second blind holes are symmetrically arranged outside the first step through hole, and the central axes of the two second blind holes are not perpendicular to the sidewall of the fixing strips.

The number of the second blind holes in each first connecting hole assembly is two, and thus, when the adsorbing blocks are connected to the fixing strip, the moving of the adsorbing blocks are limited through the two second blind holes, and this prevents the case that the freedom of the rotating of the adsorbing blocks cannot be limited completely due to the improper arrangement of the position and the number of the second blind holes, and the adsorbing blocks can rotate around the axis of the second blind holes, and the second blind holes are symmetrically disposed outside the first step through hole, i.e., the two second blind holes are provided at the two sides of the first step through hole in a diameter direction, and the two second blind holes and the first step through hole are located in one straight line, and the adsorbing blocks can cover the step through hole when they are connected to the second blind holes. Furthermore, through defining that the central axes of the two second blind holes are not perpendicular to the sidewall of the fixing strip, the adsorbing blocks are not perpendicular to the sidewall of the fixing strip, and when the plurality of adsorbing blocks are fixed to the fixing strip, the included angle between each of the plurality of adsorbing blocks and the sidewall of the fixing strip is not zero, and a passage allowing for the flowing of the air is formed between two adjacent adsorbing blocks, and the passage is inclined with respect to the axis of the roller body; when the roller body rotates, the plurality of adsorbing blocks form a structure similar to an axial-flow fan, and the adsorbing blocks bring the air to flow, and the air between the printing plate and the surface of the roller housing is impelled to flow along the axial direction of the roller body and then forms an airflow, and the airflow flows axially in the gap between the inner surface of the printing plate and the outer surface of the roller body. It is understandable that compared with the passage arranged directly along the axial direction, the passage allowing for the flowing of the air has a larger length, i.e., the heat dissipation area is larger, and this improves the heat dissipation efficiency of the printing plate and can reduce the unfavorable effect to the size and material of the printing plate caused by the laser processing heat.

In the above embodiment, the adsorbing block comprises: an adsorbing block body; a first positioning column, provided on the adsorbing block body, and the first positioning column is arranged corresponding to the first step through hole; a first positioning groove, provided at the side of the adsorbing block close to the fixing strip, and the shape of the first positioning groove adapts to the shape of the fixing strip; a first threaded through hole, provided in the first positioning column, and the first threaded through hole coincides with the axis of the first step through hole; and a fourth step through hole, disposed corresponding to the second blind hole.

The adsorbing block comprises the adsorbing block body, the first positioning column, the first positioning groove and the first threaded through hole; the first positioning column is provided on the adsorbing block body and extends into the first step through hole, and thus the positioning of the adsorbing block is achieved through the cooperation between the first positioning column and the first step through hole. The shape of the first

positioning groove matches the shape of the fixing strip, and the first positioning groove is provided at the side of the adsorbing block close to the fixing strip, and the fixing strip can extend into the first positioning groove when the adsorbing block is fixed to the fixing strip, and the sidewalls at the two sides of the fixing strip abut on the inner wall of the first positioning groove, to limit the moving of the adsorbing block along a direction perpendicular to the sidewall of the fixing strip, and improve the stability of the adsorbing block; in addition, the first threaded through hole coincides with the axis of the first step through hole, and the first threaded through hole communicates with the first step through hole, thus the internal space of the roller body is communicated with the outer space of the roller body, and the air can enter the internal space of the roller body through the first threaded through hole and the first step through hole, or flow out from the internal space of the roller body via the first step through hole and the first threaded through hole successively.

Furthermore, the fourth step through hole is provided in the adsorbing block body and disposed corresponding to the second blind hole, to achieve the fixed connection between the adsorbing block and the fixing strip by passing a bolt through the fourth step through hole and extending it into the second blind hole.

In the above embodiment, the laser plate making device further comprises a first sealing ring groove, provided to wind the first positioning column.

The first sealing ring groove is provided to wind the first positioning column, and this helps dispose a sealing ring in the first sealing ring groove, and the sealing ring winds the first step through hole and the first threaded through hole to seal the gap between the adsorbing block and the fixing strip, and this prevents the air from escaping from the gap between the adsorbing block and the fixing strip when the airflows through the first step through hole and the first threaded through hole.

In the above embodiment, a third step through hole and a third blind hole are provided at an interval in the length direction of the sealing strip, and the inner wall of the third blind hole is provided with an internal thread, and a fourth sealing ring groove is provided at the other side of the sealing strip opposite to the third blind hole.

The third step through hole and the third blind hole are provided at an interval in the length direction of the sealing strip, and a bolt can pass through the third step through hole and extends into the first blind hole in the positioning groove, to connect the sealing strip to the positioning groove.

And the inner wall of the third blind hole is provided with an internal thread, to help achieve the threaded connection through the bolt and improve the stability after screwing the bolt.

In addition, the fourth sealing ring groove is provided at the other surface of the sealing strip opposite to the third step through hole, the axis of the fourth sealing ring groove coincides with the axis of the first through hole of the roller housing, and this plays a role that the sealing ring can seal the first through hole of the roller housing when the sealing strip is fixed in the positioning groove, and the air is prevented from escaping from the gap between the sealing strip and the roller housing.

Furthermore, the third step through hole is provided between any two adjacent third blind holes, and is provided corresponding to the second blind hole, and a bolt can pass through the third step through hole and extend into the second blind hole, and then connecting the sealing strip is achieved.

In the above embodiment, the laser plate making device further comprises an isolating block provided on the fixing strip.

Through providing the isolating block on the fixing strip, firstly, when the isolating block is fixed to the fixing strip, the first step through hole in the fixing strip is sealed, and secondly, the isolating block and the adsorbing block form a structure similar to an axial-flow fan, and the adsorbing block and the isolating block bring the air to flow when the roller body rotates, and the air between the printing plate and the surface of the roller housing is impelled to flow along the axial direction of the roller body and forms an airflow, and the airflow flows axially in the gap between the inner surface of the printing plate and the outer surface of the roller body, and the heat dissipation area and the heat dissipation efficiency of the printing plate are improved, and this can reduce the unfavorable effect to the size and material of the printing plate caused by the laser processing heat.

In the above embodiment, the isolating block comprises: an isolating block body; a second positioning column, provided on the isolating block body, and the second positioning column is disposed corresponding to the third step through hole; a second positioning groove, provided at the side of the isolating block body close to the fixing assembly, and the shape of the positioning groove matches the shape of the fixing assembly; a fifth step through hole, disposed corresponding to the second blind hole, and the connection between the isolating block and the fixing strip is achieved through passing a connecting member through the fifth step through hole and the second blind hole.

The isolating block comprises the isolating block body, the second positioning column provided on the isolating block body, the second positioning groove and the fifth step through hole. The second positioning column can extend into the third step through hole, the positioning for the isolating block is achieved by the cooperation between the second positioning column and the third step through hole, and the shape of the second positioning groove adapts to the shape of the fixing assembly, i.e., the shape of the fixing strip matches the shape of the sealing strip, and the second positioning groove is provided at the side of the isolating block close to the fixing assembly, and thus, when the isolating block is fixed to the fixing strip or the sealing strip, the fixing strip or the sealing strip can extend into the second positioning groove, and the sidewalls at the two sides of the fixing strip or the sealing strip abut on the inner wall of the second positioning groove, to limit the moving of the isolating block along a direction perpendicular to the sidewall of the fixing strip or the sealing strip, and then improve the stability of the isolating block. In addition, the fifth step through hole is disposed corresponding to the second blind hole, to achieve the connection between the isolating block and the fixing strip through passing the connecting member through the fifth step through hole and the second blind hole. It needs to be explained that the second positioning column extends into the first step through hole when the isolating block is connected to the fixing strip, to seal the first step through hole.

In the above embodiment, the laser plate making device further comprises a second sealing ring groove, provided to wind the second positioning column.

The second sealing ring groove is provided to wind the second positioning column, to help dispose the sealing ring in the second sealing ring groove, and the sealing ring winds the first step through hole to seal the gap between the adsorbing block and the fixing strip, and this prevents the air from escaping from the gap between the adsorbing block and the fixing strip when the airflows through the first step through hole.

In the above embodiment, the minimum distance between the second positioning groove and the side of the isolating block body away from the fixing assembly is less than the minimum distance between the first positioning groove and the side of the adsorbing block body away from the fixing strip, and there is a gap between the isolating block and the printing plate.

The minimum distance between the second positioning groove and the side of the isolating block body away from the fixing assembly is less than the minimum distance between the first positioning groove and the side of the adsorbing block body away from the fixing strip, and when the printing plate is adsorbed to the adsorbing block, there is a gap between the isolating block and the printing plate, and when screen plate patterns are engraved on the printing plate by the laser, the laser will penetrate the printing plate. And the isolating blocks are mounted on a position corresponding to the screen plate patterns, firstly, the isolating blocks are fixed to the fixing strips, which has a sealing function to them, and secondly, there is an air gap for protection between the isolating blocks and the inner surface of the printing plate, and therefore, the laser which engraves hole patterns in the printing plate is not sufficient to damage the isolating black when the laser contacts the isolating block. It needs to be explained that the printing pate has a certain thickness and rigidity, although the area where the hole patterns are located does not have any support, they can still maintain the shape under the support of the adsorbing blocks around the isolating blocks.

And the number of the isolating blocks on the fixing strip is adjusted according to the size of the area of the hole patterns, and the adsorbing blocks still need to be fixed at the left end and the right end of the fixing strip to support and adsorb the printing plate.

In the above embodiment, the printing plate presents an arc shape, at least one side of the printing plate in the circumferential direction is formed with a folded edge bending towards the roller, and the two sides of the printing plate along the axial direction are respectively provided with the second through holes corresponding to the first threaded through holes.

The printing plate presents an arc shape, and when the roller housing needs to rotate, the arc shaped printing plate better matches the shape of the roller housing, and this helps the processing for the patterns. At least one side of the printing plate in the circumferential direction is formed with the folded edge bending towards the roller, and the moving of the printing plate in a direction perpendicular to the fixing strip is limited as the folded edge abuts on the adsorbing block. The two sides of the printing plate along the axial direction are respectively provided with the second through holes corresponding to the first threaded through holes, the connecting member passes through the second through hole and extends into the first threaded through hole, and then the two sides of the printing plate along the axial direction are fixed to the adsorbing block. The roller housing is uniformly provided with the fixing strips in the area covered by the printing plate, the printing plate is fixed by the fixing strip through a fixing block provided on the fixing strip, the bolt passes through the second through hole in the two sides of the printing plate along the axial direction and is fixed in the first threaded through hole in the fixing strip, and the arc shaped area of the printing plate is adsorbed by the adsorbing block on the fixing strip.

It needs to be explained that the area of the roller housing which is not covered by the printing plate is wholly sealed by the sealing strip.

Furthermore, when the arc length of the printing plate increases, the sealing strip can be replaced by the fixing strip with the adsorbing block; and when the arc length of the printing plate decreases, the fixing strip can be replaced by the sealing strip.

And when the printing plate which presents an arc shape is assembled, firstly, the folded edge of the printing plate leans on a positioning surface of the adsorbing block, and the end of the printing plate along the axial direction is firstly fixed through a screw to the adsorbing block of the fixing strip, then the roller body rotates and the remaining portion of the printing plate gradually contacts the adsorbing block, and meanwhile it draws air to the outside through the positioning filler and the printing plate is gradually compressed tightly by the air pressure on the surface of the roller body, and finally, the other end of the printing plate along the axial direction is fixed through a screw to the fixing strip. In a further embodiment, before the printing plate is fixed, heating and warming up can be carried out appropriately, and the printing plate is further attached to the roller body due to shrinking after the temperature is lowered.

After the printing plate is fixed to the roller body, the valve should be closed timely before drawing air from the positioning filler is stopped, and the printing plate should be transferred to the laser machining assembly timely, and the roller maintains the negative pressure in a short time by its own sealing.

It needs to be supplemented that even if the roller has a case of air leakage, the printing plate still can keep the reliable fixation on the roller as the two ends of the printing plate in its circumferential direction are fixed to the fixing strip through screws.

In the above embodiment, the printing plate presents a cylindrical shape, and each positioning groove is provided with the fixing strip, and the curvature radius corresponding to the adsorbing block of the fixing strip is not greater than the radius of the inner surface of the printing plate.

The printing plate presents a cylindrical shape; when the printing plate is mounted on the roller body, the printing plate can be integrally sleeved outside the roller housing, and each positioning groove is provided with the fixing strip, and the adsorbing block is provided on the fixing strip to sleeve the printing plate outside the adsorbing block and then provide support to the printing plate through the adsorbing block, and the curvature radius corresponding to the adsorbing block of the fixing strip is not greater than the radius of the inner surface of the printing plate, and thus, when there is a negative pressure inside the roller body, the adsorbing block is configured to adsorb the printing plate, and the printing plate can be attached tightly to the outer surface of the adsorbing block, and this prevents generating a gap between the printing plate and the outer surface of the adsorbing block, to close the first threaded through hole in the adsorbing block, and thus the printing plate is adsorbed on the adsorbing block.

In the above embodiment, the size of the printing plate can be changed according to the rising and falling of the temperature; when the printing plate is mounted on the roller, the printing plate is heated and the inner diameter of the printing plate is greater than the outer diameter of the roller, and then the printing plate is cooled and the printing plate is attached to the roller.

When the printing plate which presents a cylindrical shape is assembled, since the size of the printing plate can be changed according to the rising and falling of the temperature, and when the temperature of the printing plate rises, the integral size of the printing plate increases due to the principle of thermal expansion and cold contraction, i.e., the radius of the inner surface of the printing plate increases, when it is assembled, the temperature of the printing plate is made to rise first, and its inner radius is slightly greater than the distance between the axis of the roller body and the support surface of the adsorbing block, and thus the printing plate is smoothly sleeved on the roller body, and then, the temperature of the printing plate is made to fall gradually to the same temperature of the roller body, and the printing plate, which shrinks due to the cooling, is attached to the support surface of the adsorbing block provided on the roller body.

It needs to be explained that the temperature of the roller body needs to be consistent with the temperature during the laser processing (for example, the room temperature of 22°C), to prevent the printing plate from falling off the roller due to the reason that the temperature of the printing plate is made to be greater than the temperature of the roller body when the printing plate is engraved by the laser, then the radius of the inner wall of the printing plate increases due to thermal expansion, and thus the radius of the inner wall of the printing plate is greater than the distance between the axis of the roller body and the support surface of the adsorbing block.

In detail, the temperature rising of the printing plate should be calculated according to its plate materials such as stainless steel, copper and nickel, as long as the inner radius of the printing plate is slightly greater than the distance between the axis of the roller body and the support surface of the adsorbing block.

In the above embodiment, under the effect of laser machining assembly, the printing plate forms a line pattern sinking from one side to the other side; and/or under the effect of laser machining assembly, the printing plate forms a hole pattern which penetrates the two side of the printing plate, and the adsorbing blocks are provided in the positioning groove in the roller corresponding to the line pattern, and the isolating blocks are provided in the positioning groove in the roller corresponding to the hole pattern.

The printing plate forms the line pattern sinking from one side to the other side under the effect of the laser machining assembly, and the laser can engrave a strip gravure pattern in the printing plate which does not penetrate the printing plate; or under the effect of the laser machining assembly, the printing plate forms the hole pattern which penetrates the two sides of the printing plate, and the laser can engrave the hole pattern (i.e., a screen plate pattern) in the printing plate which penetrates the printing plate; or through the laser machining assembly, the strip gravure pattern and the hole pattern can be engraved in the printing plate at the same time. When the entirety of the printing plate forms the line gravure pattern, on the fixing strip are only the adsorbing blocks, which have the function of supporting and adsorbing the printing plate. When the printing plate forms the hole pattern locally, the isolating blocks are provided in the positioning groove corresponding to the hole pattern, firstly, the isolating blocks are fixed to the fixing strip to seal the first step through hole in the fixing strip to achieve the sealing function, and secondly, an air gap is rendered between the isolating blocks and the inner surface of the printing plate, and the laser which engraves the hole pattern in the printing plate is not sufficient to damage the isolating blocks when it passes the air gap and contacts the isolating blocks.

It needs to be explained that as the printing plate has a certain thickness and rigidity, although the area where the hole pattern is located does not have any support, it still can maintain the shape under the support of the adsorbing blocks around the isolating blocks.

And the number of the isolating blocks on the fixing strip is adjusted according to the size of the area of the hole pattern, while the adsorbing blocks still need to be fixed on the left end and the right end of the fixing strip, for supporting and adsorbing the printing plate.

In the above embodiment, the printing plate presents a nonfully circumferential arc shape, and the laser plate making device further comprises a counterweight block detachably connected to the sealing strip, and the counterweight block and the printing plate are respectively provided at the two sides of the axis of the roller.

When the printing plate is one in a nonfully circumferential arc shape, the roller needs to be provided with the counterweight block. It can be understood that the position of the counterweight block should be in the area on the roller where the printing plate is not provided, to ensure a dynamic balance, and generally, the counterweight block and the printing plate are provided at the two sides of the axis of the roller, and they are not necessarily disposed on the positions opposite to each other, as long as they are staggered from each other and are not at the same position in the circumferential direction of the roller, and this helps mount the counterweight block through the sealing strip to keep a dynamic balance of the integral roller.

The counterweight block is mounted and only mounted on the sealing strip.

Furthermore, the counterweight block presents a rectangular shape.

In the circumferential direction of the roller, the counterweight block and the nonfully circumferential printing plate are respectively provided at the two sides of the axis of the roller, the position of the counterweight block in the axial direction of the roller is determined according to the size of the nonfully circumferential printing plate in the axial direction and the mounting position of the nonfully circumferential printing plate in the axial direction of the roller. There can be one counterweight block, and there can further be multiple blocks, and its weight and number are determined according to the size of the nonfully circumferential printing plate, and the purpose is to keep the dynamic balance of the roller.

In the above embodiment, it comprises a sixth step through hole provided in the counterweight block, and the axis of the sixth step through hole coincides with the axis of the third blind hole, and the connection between the counterweight block and the sealing strip is achieved through passing a fastener through the sixth step through hole and the third blind hole.

The counterweight is provided with the sixth step through hole, and the axis of the sixth step through hole coincides with the third blind hole of the sealing strip, and thus, after passing through the sixth step through hole, the fastener is screwed into the third blind hole, to fix the counterweight block on the sealing strip.

Furthermore, the sixth step through holes are distributed equidistantly.

In the above embodiment, the laser plate making device further comprises a roller moving assembly movably provided on the base, and the roller moving assembly is provided with the roller, to achieve the moving of the roller with respect to the base through the cooperation between the roller moving assembly and the roller guide rail.

Through providing the roller moving assembly movably on the base and providing the roller on the roller moving assembly, the roller moving assembly brings the roller to move when it moves on the base, and the roller moving assembly cooperates with the roller guide rail, and the roller moving assembly can move along the roller guide rail, to achieve the moving of the roller with respect to the base.

In the above embodiment, the roller moving assembly comprises: a moving base plate; a rotating assembly, provided on the moving base plate, and the rotating assembly comprises: a rotating drive member, and a first clamp connected to the rotating drive member; a passive rotating member, provided opposite to the rotating drive member, and the passive rotating member can move on the moving base plate, the passive rotating member is provided with a second clamp thereon, and under the effect of the first clamp and the second clamp, the roller is connected to the rotating assembly, and the first clamp can rotate under the effect of the rotating drive member.

The roller moving assembly comprises the moving base plate and the rotating assembly, and the rotating assembly is provided on the moving base plate, the moving of the rotating assembly with respect to the base is achieved through the moving of the moving base plate with respect to the base; the rotating assembly comprises the rotating drive member and the passive rotating member, the first clamp is provided on the rotating drive member, and the first clamp is electrically connected to the rotating drive member, to drive the first clamp to rotate about the axis of the first clamp through the rotating drive member, and the passive rotating member is disposed corresponding to the rotating drive member, and the passive rotating member can move on the moving base plate, and the distance between the passive rotating member and the rotating drive member is adjusted through the moving of the passive rotating member on the moving base plate, and the second clamp is provided on the passive rotating member, and the roller is connected to the rotating assembly under the effect of the first clamp and the second clamp. Through the moving of the passive rotating member with respect to the rotating drive member, the roller is clamped between the first clamp and the second clamp, and when the rotating drive member drives the first clamp to rotate, the first clamp brings the roller to rotate, the second clamp is brought by the roller to rotate passively, and on the roller moving assembly, the roller can move along the extending direction of the roller guide rail with respect to the base, and can further rotate about the axis of the roller with respect to the base, to adjust the relative position of the laser machining assembly and the roller, and to adjust the working surface of the laser machining assembly on the printing plate.

And the moving of the moving base plate on the roller guide rail is achieved through a linear motor, a screw nut and a pinion and rack mechanism.

In the above embodiment, the laser plate making device further comprises a jet assembly provided on the moving base plate corresponding to the roller, and the jet assembly is provided at one side of the rotating assembly, and the working range of the jet assembly covers the printing plate.

The jet assembly is provided on the moving base plate corresponding to the roller, and the jet assembly can spray air to the printing plate to remove the debris and residues generated in the process of engraving or punching the printing plate by the laser, and the jet assembly is provided at one side of the rotating assembly, to prevent the interference of the jet assembly with the rotating of the roller. It can be understood that the working range of the jet assembly covers the printing plate, and the jet assembly can remove the residues and debris in the whole area of the printing plate.

And the jet assembly can be provided at the side of the moving base plate away from the roller. In the above embodiment, the jet assembly comprises: an airflow support, and the size of the airflow support adapts to the size of the roller; and a plurality of nozzles are provided in the airflow support, and in the axial direction of the roller, the working range of the nozzles covers the printing plate.

Through matching the size of the airflow support with the size of the roller, the plurality of nozzles provided in the airflow support can be attached to the outer surface of the roller, and this decreases the distance between the nozzles and the printing plate and thus improves the effect of removing the residues and debris on the printing plate by the nozzles. It can be understood that the closer the distance is, the better the effect of removing the residues is, and, in the axial direction of the roller, the working range of the nozzles covers the printing plate, and thus, when the roller is made to rotate about the axis of the roller, the working range of the nozzles covers the whole working surface of the printing plate, to remove the residues and debris in the whole area of the printing plate.

In the above embodiment, the laser plate making device further comprises an air tube assembly, and the air tube assembly comprises: a first air tube, communicating with the airflow support, and, under the effect of the first air tube, a portion of the nozzles can spray air outward; a second air tube, communicating with the airflow support, and, under the effect of the second air tube, the other portion of the nozzles can suck air from the outside to the inside.

The air tube assembly comprises the first air tube and the second air tube, and the first air tube and the second air tube respectively communicate with the airflow support, and the nozzles communicating with the first air tube spray air outward, and the nozzles communicating with the second air tube suck air from the outside to the inside, and then the nozzles communicating with the first air tube spray air to the outside and blow off the residues and debris on the printing plate, and the nozzles communicating with the second air tube such air from the outside to the inside and suck the residues and debris which are blown off, and this decreases the residues and the debris falling to the vicinity of the printing plate, prevents the residues and debris from accumulating on the moving base plate or the base and then hindering the moving of the roller with respect to the base.

It can be understood that the effect of removing the residues and debris generated in the processing can be effectively improved through adopting a combination method that a portion of the nozzles suck air and a portion of the nozzles spray air.

In the above embodiment, the nozzles are provided at the two sides of the airflow support along the radial direction of the roller, and, when the roller rotates downward, the nozzles under the roller spray air upward, and the nozzles above the roller suck air, or when the roller rotates upward, the nozzles above the roller spray air downward, and the nozzles under the roller suck air.

The nozzles are provided at the two sides of the airflow support along the radial direction of the roller, and the nozzles spray air or suck air along the two sides of the roller in the radial direction. When the roller rotates downward, the nozzles under the roller spray air upward to blow off the residues and debris on the printing plate, and the nozzles above the roller suck air to suck and remove the residues and debris which are blown off, or when the roller rotate upward, the nozzles above the roller spray air downward to blow off the residues and debris on the printing plate, and the nozzles under the roller suck air to suck and remove the residues and debris which are blown off.

In the above embodiment, there are two airflow supports, the distance between the two airflow supports increases gradually from bottom to top, and the roller is provided between the two airflow supports.

There are two airflow supports, to spray air to or suck air from the roller through the two airflow supports, and to remove the residues and debris on the printing plate and improve the removing effect of the residues and debris, and thus, when laser processing is respectively conducted at both the left side and the right side of the roller at the same time, a cleaning and dust sucking airflow can be provided; in addition, the distance between the two airflow supports increases gradually from bottom to top, and the roller is provided between the two airflow supports, and this helps mount the roller from above the two airflow supports.

In the above embodiment, the passive rotating member is hollow, the second clamp is a hollow clamp, and the laser plate making device further comprises a third air tube, connected to the passive rotating member, and under the effect of the third air tube, the passive rotating member can be configured to discharge air to the roller or suck air from the roller.

Through the arrangement that the passive rotating member is hollow therein and the second clamp is a hollow clamp, it helps that the third air tube passes through the second clamp and is then connected to the passive rotating member, and, under the effect of the third air tube, the passive rotating member can be configured to discharge air to the roller or suck air from the roller. When the third air tube sucks air from the roller, a negative pressure is generated in the interior of the roller, the air is drawn outward through the first threaded through hole of the adsorbing block, the first through hole of the roller housing, the valve of the positioning filler and the hollow clamp, and the printing plate is compressed tightly on the adsorbing blocks by the atmospheric pressure difference; when the third air tube discharges air to the interior of the roller, the air is discharged to the outside through the hollow clamp, the valve of the positioning filler, the first through hole of the roller housing and the first threaded through hole of the adsorbing block, and the fully circumferential printing plate falls off the roller.

In the above embodiment, the top wall and/or the side wall of the portal frame is provided with a detecting guide rail, and the laser plate making device further comprises a detecting assembly provided on the detecting guide rail, and the detecting assembly can detect the jumping of the printing plate and the machining quality of the printing plate.

Through providing the detecting guide rail on the top wall and/or the side wall of the portal frame, and providing the detecting assembly on the detecting guide rail, the detecting assembly can move along the detecting guide rail; through detecting the jumping of the printing plate and the machining quality of the printing plate by the detecting assembly, the processing state of the printing plate is acquired; when the printing plate has a machining quality problem, it is found timely, and this avoids the occurrence of relatively more machining quality problems, and thus saves the material cost of the printing plate and time cost.

In the above embodiment, the detecting assembly comprises: a detecting base plate, and the detecting base plate comprises a connecting portion and an adjusting portion which are connected to each other, the connecting portion is configured to cooperate with the detecting guide rail to achieve the moving of the detecting base plate; at least one detecting head, movably provided on the adjusting portion, and the detecting direction of the detecting head faces the roller.

Through the cooperation between the connecting portion of the detecting base plate and the detecting guide rail, the detecting base plate can move along the detecting guide rail; and at least one detecting head is provided on the adjusting portion, and thus, when the connecting portion moves along the detecting guide rail, the angle of the detecting head can be controlled through the adjusting portion, and then the detecting head is aligned with the axis of the roller. In addition, the detecting direction of each detecting head faces the roller, and the machining quality of the printing plate is detected through the detecting head, and this helps detect the processing state or progress of the printing plate.

And the detecting base plate achieves the moving on the detecting guide rail through a linear motor, a screw nut and a pinion and rack mechanism.

And the movable connection between the detecting head and the adjusting portion can be driven directly by a motor, or achieved by a common angle adjusting mechanism such as a crank rocker.

In the above embodiment, the laser plate making device further comprises a protective screen, arranged corresponding to the portal frame, and through the protective screen, the space where the optical path platform is located is independent from the space where the roller is located.

Through providing the protective screen corresponding to the portal frame, the space where the optical path platform is located is independent from the space where the roller is located, to reduce the mutual inference of the components during operation between the space where the optical path platform is located and the space where the roller is located.

An embodiment according to the second aspect of the present invention provides a plate making system according to claim 39, inter alia including: the laser plate making device in any of the above embodiments; a protection cover, at least sleeved outside the base of the laser plate making device; an auxiliary device, provided outside the protection cover, and the auxiliary device communicates with the protection cover, to control the device temperature and the air temperature in the protection cover through the auxiliary device.

The plate making system provided in the present invention comprises the laser plate making device in any of the above embodiments, and thus has the effect in any of the above embodiments, which are not repeated herein. The protection cover is sleeved outside the base of the laser plate making device, and configured to protect each operation component of the laser plate making device provided on the base, and prevent external objects from entering the laser plate making device and then affecting the normal operation of the laser plate making device. The auxiliary device is provided outside the protection cover, and configured to prevent the heat produced in the working of the auxiliary device from affecting the devices inside the protection cover in the laser processing area. The auxiliary device communicates with the protection cover, to control the device temperature and the air temperature within the protection cover through the auxiliary device, and improve the machining quality of the printing plate.

In the above embodiment, the plate making system further comprises: an upper plate area, arranged independently from the base of the laser plate making device, and the upper plate area is provided outside the protection cover; and an upper plate cover, sleeved outside the upper plate area, and the printing plate of the laser plate making device is mounted on the roller of the laser plate making device within the upper plate area.

The upper plate area is arranged independently from the base of the laser plate making device, the printing plate is mounted on the roller in the upper plate area, to prevent the operation on the upper plate area from interfering with the laser processing, meanwhile, in the laser machining process, mounting operations for a plurality of printing plates can be performed to improve the productivity.

In the above embodiment, the plate making system further comprises a transition cover, provided at one side of the upper plate cover and/or the protection cover.

The transition cover is provided at one side of the upper plate cover and/or the protection cover, or the transition cover is provided between the upper plate cover and the protection cover; when the printing plate is mounted on the roller within the upper plate cover, the printing plate is protected by the transition cover.

In the above embodiment, the transition cover is opened with two door bodies, and one of two door bodies corresponding to each transition cover opens, while the other door body closes.

Through opening two door bodies in the transition cover, when one door body opens, the other door body closes, before the opening of the door body, the temperature and humidity inside the transition cover should be adjusted, to prevent the interference with environment parameters such as the temperature and the humidity inside the protection cover and the upper plate cover in the transporting process of the roller and the printing plate.

The additional aspects and advantages of the present invention will be obvious in the following description, or can be understood through the practice of the present invention.
FIG. 1 shows a schematic view of the structure of a laser plate making device according to an embodiment of the present disclosure;
FIG. 2 shows a schematic view of the structure of a laser plate making device according to an embodiment of the present disclosure;
FIG. 3 shows a schematic view of the structure of a laser plate making device according to an embodiment of the present disclosure;
FIG. 4 shows a schematic view of the structure of a laser plate making device according to an embodiment of the present disclosure;
FIG. 5 shows a schematic view of the structure of a laser plate making device according to an embodiment of the present disclosure;
FIG. 6 shows a schematic view of the structure of a laser plate making device according to an embodiment of the present disclosure;
FIG. 7 shows a schematic view of the structure of a laser plate making device according to an embodiment of the present disclosure;
FIG. 8 shows a schematic view of the structure of a laser plate making device according to an embodiment of the present disclosure;
FIG. 9 shows a schematic view of the structure of a laser plate making device according to an embodiment of the present disclosure;
FIG. 10 shows a schematic view of the structure of a laser plate making device according to an embodiment of the present disclosure;
FIG. 11 shows a schematic view of the structure of a laser plate making device according to an embodiment of the present disclosure;
FIG. 12 shows a schematic view of the structure of a laser plate making device according to an embodiment of the present disclosure;
FIG. 13 shows a schematic view of the structure of a laser plate making device according to an embodiment of the present disclosure;
FIG. 14 shows a schematic view of the structure of a laser plate making device according to an embodiment of the present disclosure;
FIG. 15 shows a schematic view of the structure of a laser plate making device according to an embodiment of the present disclosure;
FIG. 16 shows a schematic view of the structure of a laser plate making device according to an embodiment of the present disclosure;
FIG. 17 shows a schematic view of the structure of a laser plate making device according to an embodiment of the present disclosure;
FIG. 18 shows a schematic view of the structure of a laser plate making device according to an embodiment of the present disclosure;
FIG. 19 shows a schematic view of the structure of a laser plate making device according to an embodiment of the present disclosure;
FIG. 20 shows a schematic view of the structure of a laser plate making device according to an embodiment of the present disclosure;
FIG. 21 shows a schematic view of the structure of a laser plate making device according to an embodiment of the present disclosure;
FIG. 22 shows a schematic view of the structure of a laser plate making device according to an embodiment of the present disclosure;
FIG. 23 shows a schematic view of the structure of a laser plate making device according to an embodiment of the present disclosure;
FIG. 24 shows a schematic view of the structure of a laser plate making device according to an embodiment of the present disclosure;
FIG. 25 shows a schematic view of the structure of a laser plate making device according to an embodiment of the present disclosure;
FIG. 26 shows a schematic view of the structure of a laser plate making device according to an embodiment of the present disclosure;
FIG. 27 shows a schematic view of the structure of a laser plate making device according to an embodiment of the present disclosure;
FIG. 28 shows a schematic view of the structure of a laser plate making device according to an embodiment of the present disclosure;
FIG. 29 shows a schematic view of the structure of a laser plate making device according to an embodiment of the present disclosure;
FIG. 30 shows a schematic view of the structure of a laser plate making device according to an embodiment of the present disclosure;
FIG. 31 shows a schematic view of the structure of a laser plate making device according to an embodiment of the present disclosure;
FIG. 32 shows a schematic view of the structure of a laser plate making device according to an embodiment of the present disclosure;
FIG. 33 shows a schematic view of the structure of a laser plate making device according to an embodiment of the present disclosure;
FIG. 34 shows a schematic view of the structure of a laser plate making device according to an embodiment of the present disclosure;
FIG. 35 shows a schematic view of the structure of a laser plate making device according to an embodiment of the present disclosure;
FIG. 36 shows a schematic view of the structure of a laser plate making device according to an embodiment of the present disclosure;
FIG. 37 shows a schematic view of the structure of a laser plate making device according to an embodiment of the present disclosure;
FIG. 38 shows a schematic view of the structure of a laser plate making device according to an embodiment of the present disclosure; and
FIG. 39 shows a schematic view of the structure of a laser plate making device according to an embodiment of the present disclosure.

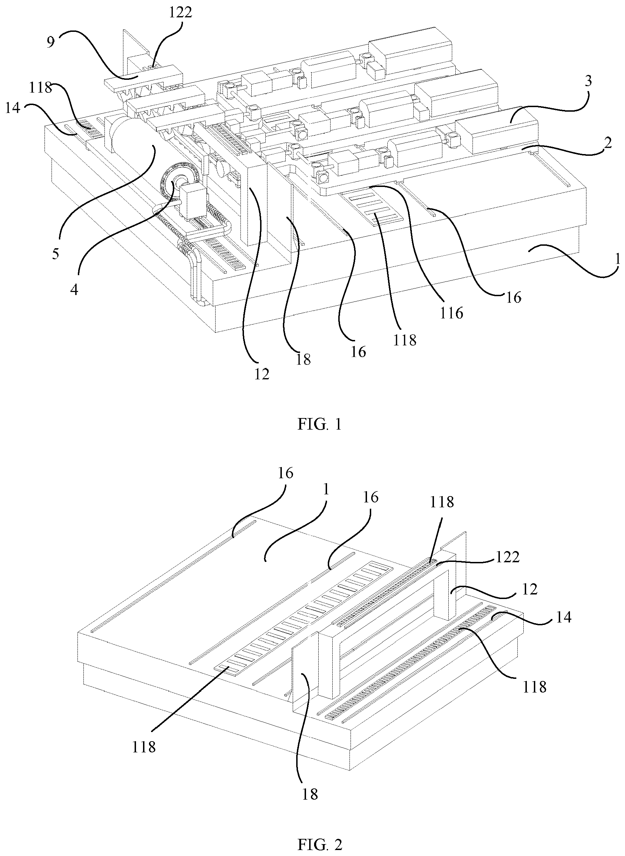

And the corresponding relations between the reference signs and the component names in FIG. 1 to FIG. 39 are as follow:
1 base; 12 portal frame; 122 detecting guide rail; 14 roller guide rail; 16 optical path guide rail; 18 protective screen;
2 optical path platform; 22 support guide portion; 24 processing mounting plate;
3 laser machining assembly; 32 laser optical path; 322 laser generator; 324 optical path protection tube; 326 reflective sheet; 328 beam expanding and collimating device; 3210 shaping device; 3212 focus adjusting device; 3214 laser detecting device; 34 processing head; 342 output head; 344 focusing device; 36 beam splitter;
4 roller; 42 roller body; 422 opening; 424 roller housing; 426 positioning groove; 4262 first through hole; 4264 first blind hole; 48 positioning filler; 482 positioning cone hole; 484 valve; 410 hollow shaft; 4102 second vent; 412 hollow cavity; 414 support cavity; 416 rib plate; 4162 first vent;
5 printing plate; 52 folded edge; 54 second through hole;
6 fixing assembly; 62 fixing strip; 622 first connecting hole assembly; 6222 first step through hole; 6226 second blind hole; 6224 second step through hole; 624 third sealing ring groove; 64 sealing strip; 642 third step through hole; 644 third blind hole; 646 fourth sealing ring groove; 610 connecting member; 612 sealing ring; 66 adsorbing block; 662 adsorbing block body; 664 first positioning column; 666 first positioning groove; 668 first threaded through hole; 6610 fourth step through hole; 6612 first sealing ring groove; 6614 first support surface; 6616 first positioning surface; 68 isolating block; 682 isolating block body; 684 second positioning column; 686 second positioning groove; 688 fifth step through hole; 6810 second sealing ring groove; 6812 second support surface; 6814 second positioning surface; 614 counterweight block; 6142 sixth step through hole;
7 roller moving assembly; 72 moving base plate; 722 moving support; 74 rotating assembly; 742 rotating drive member; 744 first clamp; 746 passive rotating member; 7462 driving member support seat; 7464 support seat guide rail; 748 second clamp;
8 jet assembly; 82 airflow support; 822 nozzle; 84 air tube assembly; 842 first air tube; 844 second air tube; 86 third air tube;
9 detecting assembly; 92 detecting base plate; 922 connecting portion; 924 adjusting portion; 94 detecting head;
10 protection cover; 102 auxiliary device; 106 upper plate cover; 108 transition cover; 1082 door body;
110 line pattern; 112 hole pattern; 116 linear module mover; 118 linear module stator.

To more clearly understand the above purposes, features and advantages of the present disclosure, the present disclosure will be further detailed hereinafter in combination with the accompanying drawings and embodiments. It should be indicated that in the case of no conflict, the embodiments and the features in the embodiments of the present disclosure can be combined with each other.

Many details are illustrated in the following description for the convenience of a thorough understanding to the present disclosure, but the present disclosure can further be implemented using other embodiments other than these described herein. Therefore, the protection scope of the present disclosure is not limited to the embodiments disclosed in the following text.

Some embodiments of the present disclosure are described in the following by referring to FIG. 1 to FIG. 39.

As shown in FIG. 1, an embodiment according to the present disclosure provides a laser plate making device, and defines the following features:

the laser plate making device comprises: a base 1, a roller 4, a printing plate 5, an optical path platform 2 and a laser machining assembly 3. The printing plate 5 is provided on the roller 4, the roller 4 is movably provided on the base 1, and the roller 4 can rotate about the axis of the roller 4 relative to the base land can further move along the axial direction of the roller 4 relative to the base 1, and bring the printing plate 5 provided on the roller 4 to move relative to the base 1, to help process the printing plate 5 and make wider the processing range of the laser machining assembly 3 corresponding to a single optical path platform 2, that is, the laser machining assembly 3 can process patterns in the circumferential area of the printing plate 5, or process patterns along the axial direction of the printing plate 5. And the optical path platform 2 is provided on the base 1, and the optical path platform 2 can move relative to the base 1, and the laser machining assembly 3 is provided on the optical path platform 2. There can be one or multiple optical path platforms 2, each optical path platform 2 is provided with one or multiple laser machining assemblies 3, and the processing range of the laser machining assembly3 can cover the moving range of the printing plate 5 in the axial direction, i.e., the laser machining assembly 3 can process patterns at any position of the printing plate 5, and through providing multiple laser machining assemblies 3, when there is a problem with one laser machining assembly 3 and/or one optical path platform 2, the remaining optical path platforms 2 and the roller 4 move on the base 1, to solve the problem that the remaining normal laser machining assemblies 3 cannot cover the processing range of the roller in the axial direction as the damaged laser machining assembly 3 and/or the optical path platform 2 occupy space.

Furthermore, the laser machining assembly 3 is capable of machining, on the printing plate 5, gravure plate patterns and/or screen plate patterns.

In a further embodiment, in multiple different laser machining assemblies 3, a portion of the laser machining assemblies 3 process the gravure plate patterns on the printing plate 5, and the other portion of the laser machining assemblies 3 process the screen plate patterns on the printing plate 5.

And the laser machining assembly 3 can be wholly provided on the optical path platform 2, and can further be partially provided on the base 1, and its connection with a processing head 34 is achieved through a flying optical path or an optical fiber.

In a further embodiment, there can be one or multiple printing plates 5, the multiple printing plates 5 can be provided on the outer wall of the roller 4 along the axial direction of the roller 4, and can further be provided on the outer wall of the roller 4 along the circumferential direction of the roller 4.

In a further embodiment, the material of the base 1 can choose marble, which can provide more stable support for the roller 4 and the optical path platform 2.

As shown in FIG. 1 and FIG. 2, in addition to the features of the above embodiment, the present disclosure further defines the following features:
a portal frame 12is provided on the base 1, and a roller guide rail 14 provided corresponding to the roller 4 and an optical path guide rail 16 provided corresponding to the optical path platform 2 are respectively provided at the two sides of the portal frame 12, and the roller 4 and the optical path platform 2 respectively achieve through the roller guide rail 14 and the optical path guide rail 16 that the roller 4 moves along the axial direction of the roller 4 and the optical path platform 2 slides on the optical path guide rail 16, to move relative to the base 1.

In a further embodiment, the roller guide rail 14 and the optical path guide rail 16are provided at the front side and the rear side of the portal frame 12, and thus the portal frame 12 distinguishes the optical path platform 2 from the roller 4.

In a further embodiment, the roller guide rail 14 is provided at the front side of the portal frame 12, and the optical path guide rail 16 is provided on the rear side of the portal frame 12.

As shown in FIG. 2, in addition to the features of any of the above embodiments, the present disclosure further defines the following features:

the extending direction of the optical path guide rail 16 is the same with the extending direction of the roller guide rail 14, and the roller 4 moves relative to the base 1 along the axis of the roller 4, or, when the optical path platform 2 slides along the optical path guide rail 16 and then generates relative movement between the roller 4 and the optical path platform 2, along a direction perpendicular to the axis of the roller 4, the distance between the optical path platform 2 and the roller4 does not change, and thus the distance between the laser machining assembly 3 provided on the optical path platform 2 and the printing plate 5 provided on the roller 4 does not change, to reduce, when the optical path platform 2 and the roller 4 respectively slide on the optical path guide rail 16 and the roller guide rail 14, the possibility of generating the change of the processing distance when the laser machining assembly 3 engraves the printing plate 5.

And a linear module mover 116 is provided below the optical path platform.

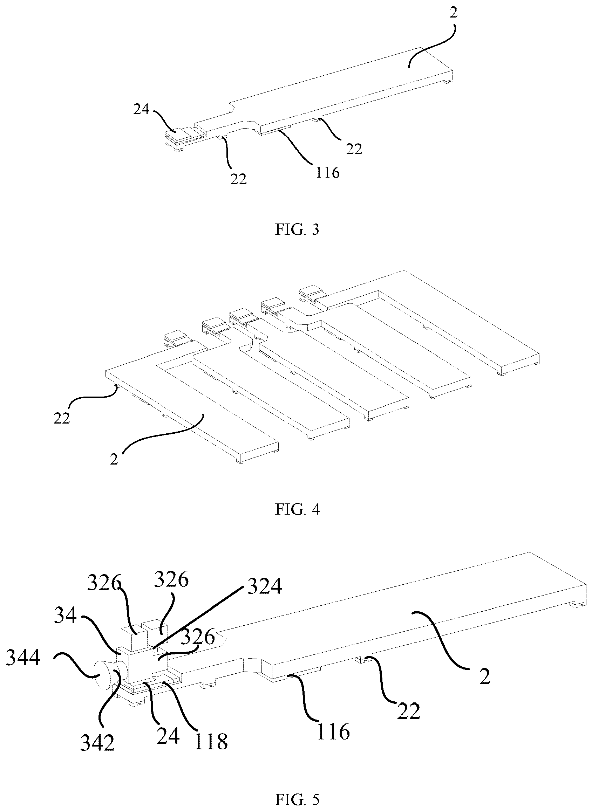

As shown in FIG. 3 and FIG. 4, in addition to the features of any of the above embodiments, the present disclosure further defines the following features:
the laser plate making device further comprises a support guide portion 22 provided below the optical path platform 2. The support guide portion 22 is formed by protruding downward from the lower side of the optical path platform 2, and a groove which cooperates with the optical path guide rail 16 is provided in the support guide portion 22, and the optical path guide rail 16 can extend into the groove in the support guide portion 22, and thus the optical path guide rail 16 can slide within the groove in the support guide portion 22 relative to the optical path platform 2, to limit the moving path of the optical path platform 2; in addition, the support guide portion 22 provides a support force for the optical path platform 2 through abutting on the optical path guide rail 16.

As shown in FIG. 1 and FIG. 2, in addition to the features of any of the above embodiments, the present disclosure further defines the following features:
the optical path platform 2 achieves a straight line movement on the base 1 through a linear motor or a screw nut transmitting mechanism or a pinion and rack mechanism with an anti-backlash design. The linear motor can directly achieve the straight line movement of the platform under the driving of electric power, to help limit the straight line movement of the optical path platform 2 on the base 1 through supplying power to the linear motor. And the structure of the linear motor is compact and the moving speed is fast, which is conducive to the miniaturization of the optical path platform 2 and to improving the moving speed of the optical path platform 2;the screw nut transmitting mechanism makes the optical path platform 2 move relative to the base 1 through transforming the spiral movement of the nut into the straight line movement of the screw, and the nut can be driven through a servo motor, the control speed and the position precision of the servo motor are very accurate, and then the moving precision of the optical path platform 2 can be improved; or, the pinion is driven by the servo motor, the optical path platform moves on the pinion and rack mechanism with an anti-backlash design, and then the moving precision of the optical path platform 2 is ensured.

In a further embodiment, a linear motor stator is provided on the base 1, and a linear motor mover is provided on the lower surface of the optical path platform 2.

In a further embodiment, a screw is provided on the base 1, and a nut is provided on the lower surface of the optical path platform 2.

In a further embodiment, a rack is provided on the base 1, and a pinion is provided on the optical path platform.

As shown in FIG. 5, in addition to the features of any of the above embodiments, the present disclosure further defines the following features:
the laser machining assembly 3 comprises a laser optical path 32 and a processing head 34, and the laser optical path 32 is provided on the optical path platform 2, to provide the laser that the processing needs through the laser optical path 32; one end of the processing head 34 is electrically connected to the laser optical path 32, and the laser optical path 32 supplies laser to the processing head 34, and the processing head 34 is arranged corresponding to the printing plate 5, and the processing head 34 emits the laser to the printing plate 5, to engrave patterns on the printing plate 5.

In a further embodiment, one processing head 34 is electrically connected to one laser optical path 32.

In a further embodiment, one laser optical path 32 is electrically connected to one processing head 34.

In a further embodiment, one laser optical path 32 is electrically connected to multiple processing heads 34 at the same time.

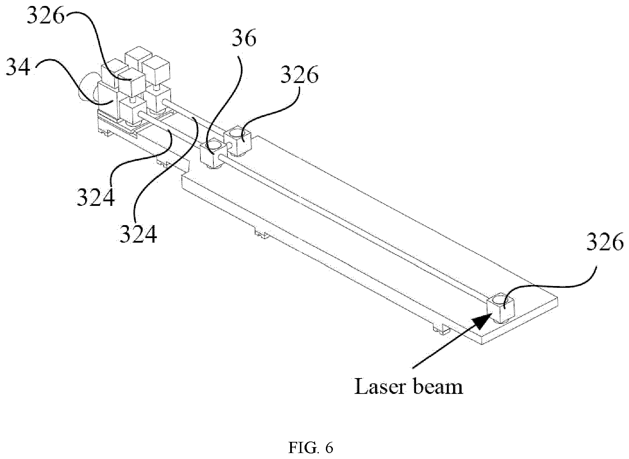

As shown in FIG. 3 and FIG. 6, in addition to the features of any of the above embodiments, the present disclosure further defines the following features:
one end of the optical path platform 2 is provided with a processing mounting plate 24, the processing head 34 is movably provided on the processing mounting plate 24, and the processing head 34 can move in a vertical direction with respect to the processing mounting plate 24, to change the height of the processing head 34 relative to the optical path platform 2 and the roller 4.

In an embodiment, the position of the processing head 34 can be adjusted on the processing mounting plate 24, to change the height in the vertical direction.

In a further embodiment, the processing mounting plate 24 can be a piezoelectric ceramic actuator or a servo electric driven wedge mechanism.

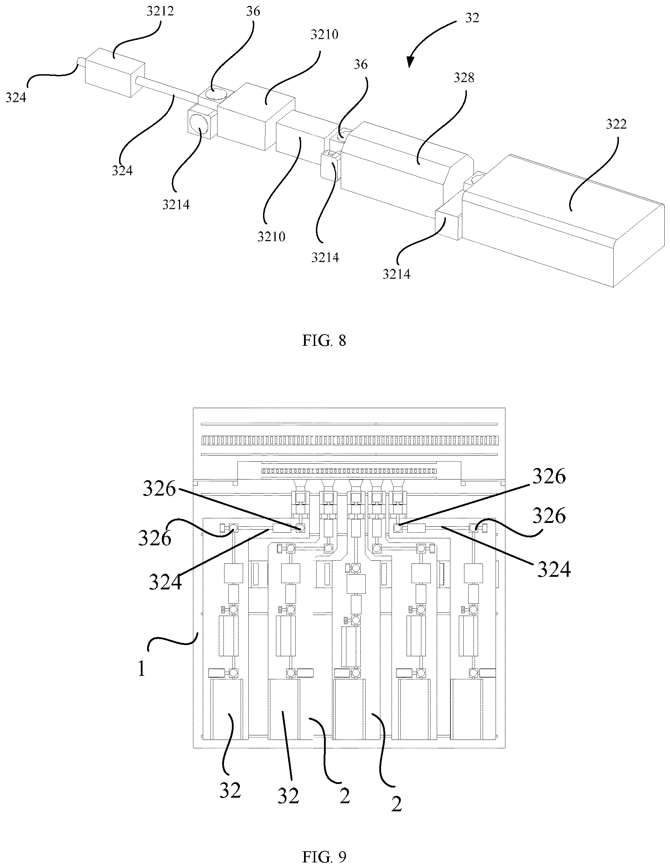

As shown in FIG. 8, in addition to the features of any of the above embodiments, the present disclosure further defines the following features:
the laser optical path 32 comprises a laser generator 322 and an optical path protection tube 324; the laser generator 322 is used for generating the laser, one end of the optical path protection tube 324 is connected to the laser generator 322, and the laser generated from the laser generator is emitted to the optical path protection tube 324; since the optical path protection tube 324 is hollow, the laser can be propagated in the optical path protection tube 324, and meanwhile, the outside influence can be reduced under the effect of the optical path protection tube 324, and the loss of the laser is further reduced in the propagating process of the laser.

In a further embodiment, the laser optical path 32 comprises one optical path protection tube 324 or multiple optical path protection tubes 324, and there can be an included angle between the multiple optical path protection tubes 324, and each optical path protection tube 324 is a straight tube.

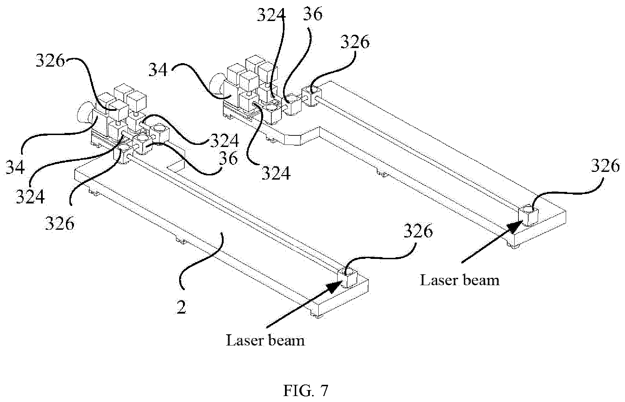

As shown in FIG. 7, in addition to the features of any of the above embodiments, the present disclosure further defines the following features:

the laser optical path 32 further comprises at least one reflective sheet 326, when there are multiple optical path protection tubes 324, and there is an included angle between two adjacent optical path protection tubes 324, when the laser is irradiated on the reflective sheet 326, the reflecting laser and the incident laser present an included angle therebetween, which is not zero, under the reflecting effect of the reflective sheet, to change the direction of the optical path of the laser; and the optical path protection tube 324 is provided between any two adjacent reflective sheets 326, thus after the laser is irradiated on a reflective sheet 326, the direction of the optical path is changed and the laser is emitted into the optical path protection tube 324 and emitted out from the other end of the optical path protection tube 324, and the direction of the optical path is changed again through the other reflective sheet 326, and therefore, the length of the optical path protection tube 324or the reflection angle between the two adjacent reflective sheets 326 can be adjusted according to needs, to change the propagating path of the laser and then align with the processing heads 34 of different positions.

As shown in FIG. 8, in addition to the features of any of the above embodiments, the present disclosure further defines the following features:

the laser optical path 32 further comprises: a beam expanding and collimating device 328, a shaping device 3210, a focus adjusting device 3212 and a detecting device, and the beam expanding and collimating device 328 is provided on the optical path of the laser generated from the laser generator 322, the beam expanding and collimating device 328 can compress the divergence angle of the laser, to reduce the volume that needs to be occupied during the propagation of the laser and improve the propagation efficiency of the laser; the shaping device 3210 is provided on the optical path of the laser generated from the laser generator 322, to adjust the arrangement uniformity of the intensity of a laser beam; the focus adjusting device 3212 can adjust the position of the focus point of the laser, to ensure the energy in the process of laser propagation; the detecting device is provided on the optical path of the laser generated from the laser generator 322, and the power, the focus point and the orientation of the laser are detected through the detecting device, and the optical path propagation between any two of the beam expanding and collimating device 328, the shaping device 3210, the focus adjusting device 3212 and the detecting device is achieved by the optical path protection tube 324, therefore, when the laser is propagated in the beam expanding and collimating device 328, the shaping device 3210, the focus adjusting device 3212 and the detecting device, the laser is propagated through the optical path protection tube 324, to reduce the influence on the laser from external environments and improve the quality of laser propagation.

As shown in FIG. 7 and FIG. 8, in addition to the features of any of the above embodiments, the present disclosure further defines the following features:

the laser generated from the laser generator 322 is emitted into the processing head 34 after passing the beam expanding and collimating device 328, the shaping device 3210 and the focus adjusting device 3212, and the laser generated from the laser generator 322 is emitted into the processing head 34 after the completion of compressing the divergence angle, adjusting the arrangement uniformity of the intensity of the laser beam and adjusting the focus point of the laser, to help improve the precision and the quality of the patterns engraved by the laser.

In a further embodiment, the laser generated from the laser generator 322 is emitted into the processing head 34 after passing the beam expanding and collimating device 328, the shaping device 3210 and the focus adjusting device 3212 successively.

As shown in FIG. 7 and FIG. 8, in addition to the features of any of the above embodiments, the present disclosure further defines the following features:

the laser plate making device further comprises a beam splitter 36 provided on the optical path platform 2, under the effect of the beam splitter 36, the laser flowing into the beam splitter 36 can be converted into multiple optical paths and then emitted outside, and each optical path emitted out of the beam splitter 36 corresponds to one or multiple processing heads 34, and one beam of laser generated from the laser generator 322 emits laser to one or multiple processing heads 34 under the effect of the beam splitter 36, under the precondition that the number of the laser generator 322 is definite, the number of the processing heads 34 is increased to improve the efficiency of a laser engraving operation.

As shown in FIG. 5, in addition to the features of any of the above embodiments, the present disclosure further defines the following features:

the processing head 34 is formed jointly by at least one reflective sheet 326, an output head 342 and a focusing device 344, the laser emitted into the processing head 34 from the laser optical path 32 is reflected by at least one reflective sheet 326 to change the direction of the optical path of the laser, then the laser is emitted into the output head 342, and when the laser is emitted out of the output head 342, after the focusing of the focusing device 344, the energy of the laser is enhanced and then the laser is emitted to the printing plate 5, to engrave patterns on the printing plate 5.

In an embodiment, the processing head 34 is formed jointly by three reflective sheets 326, one output head 342 and one focusing device 344.

In a further embodiment, there is a telescopic optical path protection tube 324 between two adjacent reflective sheets 326, and this does not affect the change of the distance between the reflective sheets 326.

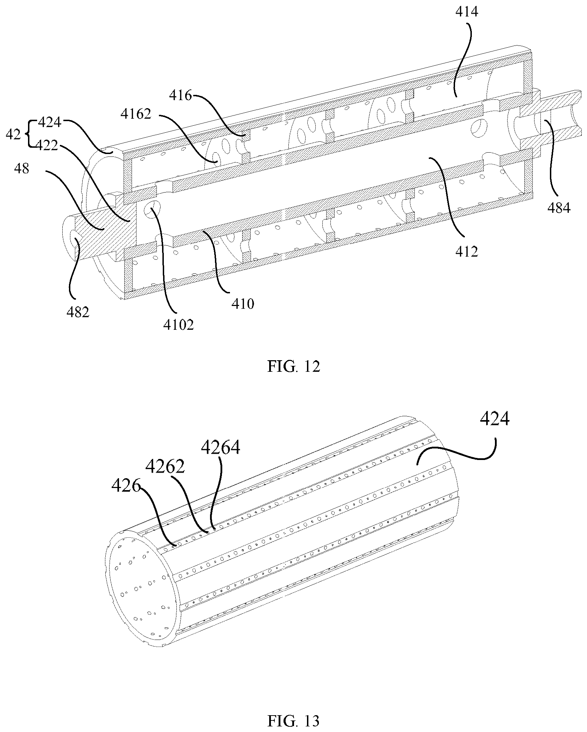

As shown in FIG. 12, in addition to the features of any of the above embodiments, the present disclosure further defines the following features:
the roller 4 comprises: a roller body 42 and a positioning filler 48;the interior of the roller body 42 is disposed to be hollow to reduce the weight of the roller body 42, and the two ends of the roller body 42 are provided with an opening 422, the positioning filler 48 adapts to the shape of the openings 422 in the two ends of the roller body 42, and the openings 422 of the roller body 42 are sealed through the positioning filler 48, therefore, firstly, the roller 4 is clamped and positioned through the positioning filler 48, and secondly, outside impurities are prevented from entering the interior of the roller body 42. And a roller housing 424 is sleeved on the roller body 42, to help arrange the printing plate 5, that is, the printing plate 5 is provided on the roller housing 424, and the roller housing 424 is sleeved on the roller body 42.

In a further embodiment, there are two positioning fillers 48, and one positioning filler 48 is solid, and the other positioning filler 48 is disposed with a through hole to communicate with the interior of the roller body 42.

As shown in FIG. 13, in addition to the features of any of the above embodiments, the present disclosure further defines the following features:

The plurality of positioning grooves 426 extending in the axial direction are provided in the roller housing 424, and the parts can be mounted in an assembling space formed by the positioning grooves 426;the first through hole 4262 and the first blind hole 4264 are provided in the positioning groove 426, and through the first through hole 4262 and the first blind hole 4262, the connection between the roller housing 424 and the roller body 42 or the connection between the roller housing 424 and the printing plate 5 can be achieved. Furthermore, the first blind hole 4262 is provided with the thread, and thus the threaded connections between the roller housing 424 and other parts can be achieved through the first blind hole 4264 and a connecting member 610.

As shown in FIG. 13, in addition to the features of any of the above embodiments, the present disclosure further defines the following features:

There are a plurality of positioning grooves 426 in the roller housing 424, the plurality of positioning grooves 426 are arranged uniformly along the circumferential direction of the roller housing 424, i.e., the included angle formed between any positioning groove 426 and the axis is the same with the included angle formed between an adjacent positioning groove 426 and the axis, and the first through holes 4262 and the first blind holes 4264 are provided in the positioning groove 426 in an embodiment, and this indirectly renders that the objects connected by a plurality of the first through holes 4262 are in a uniformly stressed connection with the roller housing 424, and likewise, the objects connected by a plurality of the first blind holes 4262 are further in a uniformly stressed connection with the roller housing 424. And when fixing assemblies 6 are mounted in the positioning grooves 426 through the first blind holes 4262, the fixing assemblies 6 can be distributed uniformly on the roller housing 424, meanwhile, the first through hole 4262 runs through both the inner side and the outer side of the roller housing 424, and this helps the air in the roller housing 424 communicate with the air outside the roller housing 424 through the first through holes 4262 when the first through holes 4262 are not connected to the remaining structures.

As shown in FIG. 12, in addition to the features of any of the above embodiments, the present disclosure further defines the following features:

The hollow shaft 410 is formed inside the roller body 42,and can provide support for the roller housing 424 to reduce the deformation of the roller housing 424, and achieve the positioning for the roller body 42; the hollow shaft 410 separates the space inside the roller body 42 along the radial direction into a hollow cavity 412 communicating with the opening 422 and a support cavity 414, and the air in the hollow cavity 412 can flow out of the roller body 42 from the opening 422, or the air enters the hollow cavity 412 and the support cavity 414 through the opening 422.

Furthermore, the support cavity 414 is further provided with the rib plate 416; the rib plate 416 is respectively connected to the inner wall of the roller body 42 and the outer wall of the hollow shaft 410 at the two sides along the radial direction, thus the supporting and positioning for the roller housing 424 can be achieved through the rib plate 416, and furthermore, the rib plate 416 can further limit the relative position of the roller housing 424 and the hollow shaft 410.

As shown in FIG. 12, in addition to the features of any of the above embodiments, the present disclosure further defines the following features:

A plurality of first vents 4162 are provided in the rib plate 416, firstly, the weight of the rib plate 416 is reduced, and secondly, the spaces of the support cavities at the two sides of the rib plate 416 communicate with each other; in addition, a plurality of second vents 4102 are provided in the hollow shaft 410 to communicate the hollow cavity 412 with the support cavity 414, and the air in the support cavity 414 communicates with the opening 422 through the second vents 4102 and the hollow cavity 412, and thus the air in the support cavity 414 and the hollow cavity 412 can be in circulation with the air outside the roller 4 through the opening 422.

In a further embodiment, the first vents 4162 are provided uniformly in the rib plate 416 around the hollow shaft 410.

As shown in FIG. 12, in addition to the features of any of the above embodiments, the present disclosure further defines the following features:

The entirety of the positioning filler 48 presents a circular shape. The circle center of the positioning filler 48 is provided on the axis of the roller body 42, and a positioning cone hole 482 is provided at the circle center of the positioning filler 48, and the axis of a clamp coincides with the axis of the roller body 42after the roller body 42 is clamped and fixed through the positioning cone hole 482, and the rotating center line of the roller body 42 coincides with the axis of the roller body 42 when the roller body 42 is brought to rotate, and the rotation of the roller body 42 is more stable.

And when the clamp clamps the positioning filler 48, the positioning cone hole 482 has a guiding function, and the clamp can find the clamping position quickly and accurately.

As shown in FIG. 12, in addition to the features of any of the above embodiments, the present disclosure further defines the following features:

The positioning filler 48 is provided at one end of the roller body 42 and a valve 484 is provided inside the positioning filler 48, when the valve 484 opens, the interior of the roller body 42 can communicate with the outside, i.e., the air can flow into the interior of the roller body 42or flow out of the interior of the roller body 42 through the valve 484, and through drawing the air in the internal space of the roller body 42 through the opened valve 484, a negative pressure is generated in the internal space of the roller body 42, and then the printing plate 5 is adsorbed onto the surface of the roller 4. It can be understood that air is input into the internal space of the roller body 42 through the opened valve 484, and the air pressure of the internal space is greater than the outside air pressure, and then the printing plate 5 is expanded, and this helps take off the printing plate 5 from the roller 4.

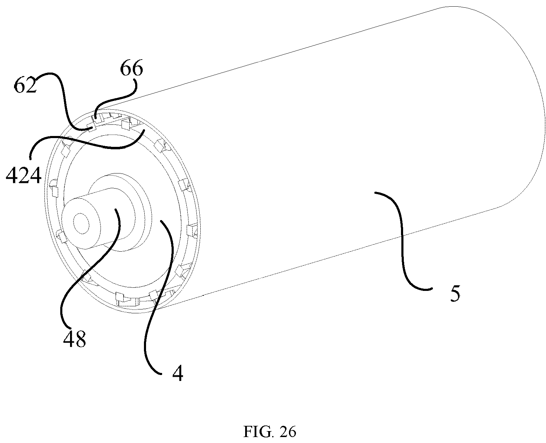

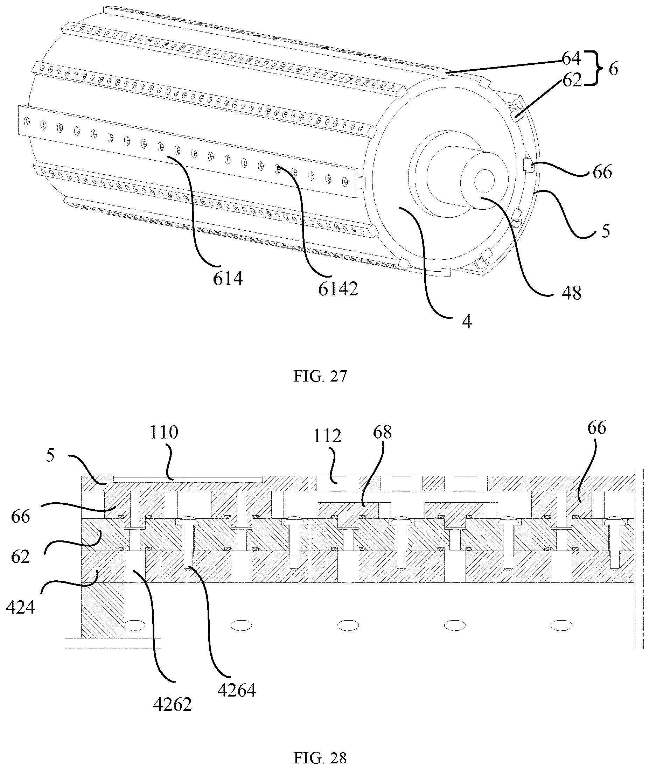

As shown in FIG. 26 and FIG. 27, in addition to the features of any of the above embodiments, the present disclosure further defines the following features:

The roller 4 and the printing plate 5 are arranged at an interval, and there exists the gap between them which allows for air inflow; when the roller 4 rotates, the roller 4 and the printing plate 5 bring the air in the gap to flow, to form an axial airflow in the gap, and this increases the heat dissipation area of the printing plate 5 and improves the heat dissipation efficiency of the printing plate 5, and can reduce the unfavorable effect to the size and material of the printing plate 5 caused by laser processing heat.

As shown in FIG. 27, in addition to the features of any of the above embodiments, the present disclosure further defines the following features:

The laser plate making device further comprises a fixing assembly 6 provided in the positioning groove 426, and the printing plate 5 is fixed to the roller 4 through the fixing assembly 6, and the printing plate 5 can be brought by the roller 4 to move. The fixing assembly 6 forms support at multiple positions on the inner wall surface of the printing plate 5, and the relative position between the printing plate 5 and the roller 4 has a better accuracy, and this helps improve the quality of the engraved patterns.

Furthermore, each positioning groove is provided with one fixing assembly 6; the fixing assembly 6 can be a sealing strip 64 and can further be a fixing strip 62, and meanwhile, the positions and numbers of adsorbing blocks 66 and isolating blocks 68 can be adjusted on the fixing strip 62 according to needs.

As shown in FIG. 26 and FIG. 27, in addition to the features of any of the above embodiments, the present disclosure further defines the following features:

The fixing assembly 6 comprises the fixing strip 62 and the sealing strip 64; the fixing strip 62 is configured to fix the printing plate 5, the sealing strip 64 is configured to seal the through holes in the positioning groove 426, and the portion of the positioning groove 426 which is not covered by the printing plate 5 can be sealed by the sealing strip 64.

In a further embodiment, the printing plate 5 can be a fully circumferential cylindrical printing plate or a non fully circumferential printing plate; the projection of the fully circumferential cylindrical printing plate on the roller housing 424 covers all of the positioning grooves 426, then each positioning groove 426 is provided with the fixing strip 62 to achieve fixing the printing plate 5. The projection of the non fully circumferential printing plate on the roller housing 424 only covers a portion of the positioning grooves 426, then this portion of positioning grooves 426 which are covered are provided with the fixing strip 62 for fixing the printing plate 5, and the portion of the positioning grooves 426 which are not covered are provided with the sealing strip 64 for sealing the through holes in the positioning grooves 426.

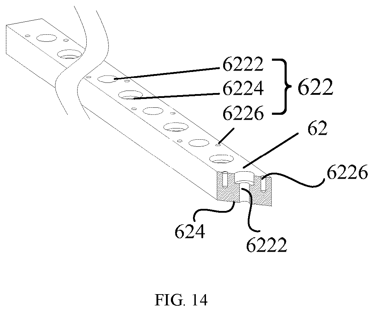

As shown in FIG. 14, in addition to the features of any of the above embodiments, the present disclosure further defines the following features:

The fixing strip 62 presents a rectangular strip shape, and the outer wall profile of the fixing strip 62 cooperates with the positioning groove 426, to achieve the positioning of the fixing strip 62 and reducing the shaking of the fixing assembly 6. In addition, a plurality of first connecting hole assemblies 622 are further provided in the fixing strip 62, the adsorbing block 66 is connected to the fixing strip 62 through the first connecting hole assembly 622, and through the first connecting hole assemblies 622, the air inside the roller body 42 flows out via the first through holes 4262 in the positioning grooves 426, the first connecting hole assemblies 622 and the adsorbing blocks 66, or the air from the outside flows into the internal space of the roller body 42 through the adsorbing blocks 66, the first connecting hole assemblies 622 and the first through holes 4262 in the positioning grooves 426.

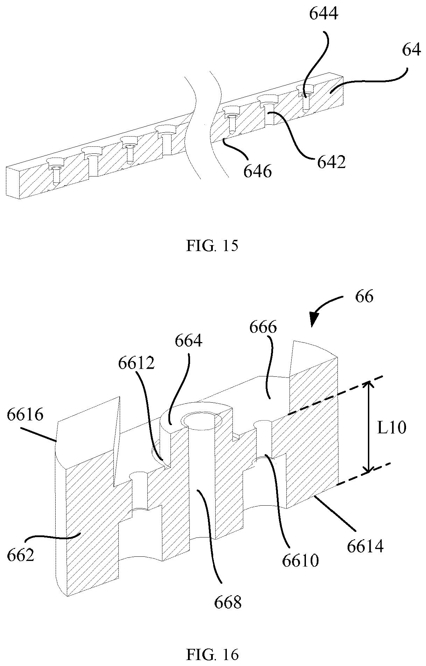

As shown in FIG. 14 and FIG. 15, in addition to the features of any of the above embodiments, the present disclosure further defines the following features:

The first connecting hole assembly 622 comprises: a first step through hole 6222, and a second blind hole 6226 and a second step through hole 6224; the second blind hole 6226 is provided with the internal thread, and a bolt passes through the adsorbing block 66 and extends into the second blind hole 6226, and then the adsorbing block 66 is fixed to the fixing strip 62; firstly, a portion of the adsorbing block 66 extends into the first step through hole 6222, to achieve the positioning of the adsorbing block 66, and secondly, the first step through hole 6222 communicates the adsorbing block 66 with the internal space of the roller body 42, and thus, when the internal space of the roller body 42 presents a negative pressure, the adsorbing blocks 66 adsorb the printing plate 5 and the printing plate 5 is adsorbed to the adsorbing blocks 66, and when the air pressure in the internal space of the roller body 42 is greater than the outside air pressure, the air escapes from the adsorbing blocks 66 and the printing plate 5 is detached from the adsorbing blocks 66; the second step through hole 6224 is provided between any two adjacent first step through holes 6222, and the second step through hole 6224 is provided corresponding to the first blind hole 4264, and the bolt can pass through the second step through hole 6224 and extend into the first blind hole 4264, to achieve a fixed connection between the fixing strip 62 and the positioning groove 426.

As shown in FIG. 14, in addition to the features of any of the above embodiments, the present disclosure further defines the following features:

The number of the second blind holes 6226 in each first connecting hole assembly 622 is two, and thus, when the adsorbing blocks 66 are connected to the fixing strip 62, the moving of the adsorbing blocks 66 are limited through the two second blind holes 6226, and this prevents the case that the freedom of the rotating of the adsorbing blocks 66 cannot be limited completely due to the improper arrangement of the position and the number of the second blind holes 6226, and the adsorbing blocks 66 can rotate around the axis of the second blind holes 6226, and the second blind holes 6226 are symmetrically disposed outside the first step through hole 6222, i.e., the two second blind holes 6226 are provided at the two sides of the first step through hole 6222 in a diameter direction, and the two second blind holes 6226 and the first step through hole 6222 are located in one straight line, and the adsorbing blocks 66 can cover the first step through hole 6222 when they are connected to the second blind holes 6226. Furthermore, through defining that the central axes of the two second blind holes 6226 are not perpendicular to the sidewall of the fixing strip 62, the adsorbing blocks 66 are not perpendicular to the sidewall of the fixing strip 62, and when the plurality of adsorbing blocks 66 are fixed to the fixing strip 62, the included angle between each of the plurality of adsorbing blocks 66 and the sidewall of the fixing strip 62 is not zero, and a passage allowing for the flowing of the air is formed between two adjacent adsorbing blocks 66, and the passage is inclined with respect to the axis of the roller body 42; when the roller body 42 rotates, the plurality of adsorbing blocks 66 form a structure similar to an axial-flow fan, and the adsorbing blocks 66 bring the air to flow, and the air between the printing plate 5 and the surface of the roller housing 424 is impelled to flow along the axial direction of the roller body 42 and then forms an airflow, and the airflow flows axially in the gap between the inner surface of the printing plate 5 and the outer surface of the roller body 42. It is understandable that compared with the passage arranged directly along the axial direction, the passage allowing for the flowing of the air has a larger length, i.e., the heat dissipation area is larger, and this improves the heat dissipation efficiency of the printing plate 5 and can reduce the unfavorable effect to the size and material of the printing plate 5 caused by the laser processing heat.

As shown in FIG. 16, in addition to the features of any of the above embodiments, the present disclosure further defines the following features:

The adsorbing block 66 in an embodiment comprises an adsorbing block body 662, a first positioning column 664, a first positioning groove 666, a first threaded through hole 668 and a fourth step through hole 6610; the first positioning column 664 is provided on the adsorbing block body 662 and extends into the first step through hole 6222, and thus the positioning of the adsorbing block 66 is achieved through the cooperation between the first positioning column 664 and the first step through hole 6222; the shape of the first positioning groove 666 matches the shape of the fixing strip 62, and the first positioning groove 666 is provided at the side of the adsorbing block 66 close to the fixing strip 62, and the fixing strip 62 can extend into the first positioning groove 666 when the adsorbing block 66 is fixed to the fixing strip 62, and the sidewalls at the two sides of the fixing strip 62 abut on the inner wall of the first positioning groove 666, to limit the moving of the adsorbing block 66 along a direction perpendicular to the sidewall of the fixing strip 62, and improve the stability of the adsorbing block 66; in addition, the first threaded through hole 668 coincides with the axis of the first step through hole 6222, and the first threaded through hole 668 communicates with the first step through hole 6222, thus the internal space of the roller body 42 is communicated with the outer space of the roller body 42, and the air can enter the internal space of the roller body 42 through the first threaded through hole 668 and the first step through hole 6222, or flow out from the internal space of the roller body 42 via the first step through hole 6222 and the first threaded through hole 668 successively; the fourth step through hole 6610 is provided in the adsorbing block body 662 and disposed corresponding to the second blind hole 6226, to achieve the fixed connection between the adsorbing block 66 and the fixing strip 62 by passing a bolt through the fourth step through hole 6610 and extending it into the second blind hole 6226.

As shown in FIG. 16, in addition to the features of any of the above embodiments, the present disclosure further defines the following features:

The laser plate making device further comprises a first sealing ring groove 6612; the first sealing ring groove 6612 is provided to wind the first positioning column 664, and this helps dispose a sealing ring 612 in the first sealing ring groove 6612, and the sealing ring winds the first step through hole 6222 and the first threaded through hole 668 to seal the gap between the adsorbing block 66 and the fixing strip 62, and this prevents the air from escaping from the gap between the adsorbing block 66 and the fixing strip 62 when the airflows through the first step through hole 6222 and the first threaded through hole 668.

As shown in FIG. 15, in addition to the features of any of the above embodiments, the present disclosure further defines the following features:

The third step through hole 642 and the third blind hole 644 are provided at an interval in the length direction of the sealing strip 64, and a bolt can pass through the third step through hole 642 and extends into the first blind hole 4264 in the positioning groove 426, to connect the sealing strip 64 to the positioning groove 426.

And the inner wall of the third blind hole 644 is provided with an internal thread, to help achieve the threaded connection through the bolt and improve the stability after screwing the bolt.

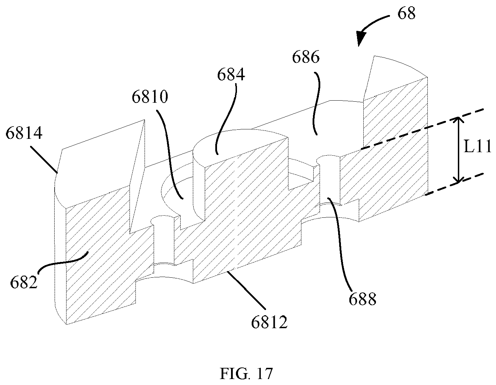

As shown in FIG. 17, in addition to the features of any of the above embodiments, the present disclosure further defines the following features:

The laser plate making device further comprises an isolating block 68 provided on the fixing strip 62 and the sealing strip 64. Firstly, when the isolating block 68 is fixed to the fixing strip 62, the first step through hole 6222 in the fixing strip 62 is sealed, and secondly, the isolating block 68 and the adsorbing block 66 form a structure similar to an axial-flow fan, and the adsorbing block 66 and the isolating block 68 bring the air to flow when the roller body 42 rotates, and the air between the printing plate 5 and the surface of the roller housing 424 is impelled to flow along the axial direction of the roller body 42 and forms an airflow, and the airflow flows axially in the gap between the inner surface of the printing plate 5 and the outer surface of the roller body 42, and the heat dissipation area and the heat dissipation efficiency of the printing plate 5 are improved, and this can reduce the unfavorable effect to the size and material of the printing plate 5 caused by the laser processing heat.

As shown in FIG. 17, in addition to the features of any of the above embodiments, the present disclosure further defines the following features:

The isolating block 68 in an embodiment comprises an isolating block body 682, a second positioning column 684, a second positioning groove 686, and a fifth step through hole 688; the second positioning column 684 can extend into the third step through hole 642, the positioning for the isolating block 68 is achieved by the cooperation between the second positioning column 684 and the third step through hole 642, and the shape of the second positioning groove 686 adapts to the shape of the fixing assembly 6, i.e., the shape of the second positioning groove 686 matches the shape of the fixing strip 62 and the shape of the sealing strip 64, and the second positioning groove 686 is provided at the side of the isolating block 68 close to the fixing assembly 6, and thus, when the isolating block 68 is fixed to the fixing strip 62, the fixing strip 62 can extend into the second positioning groove 686, and the sidewalls at the two sides of the fixing strip 62 abut on the inner wall of the second positioning groove 686, to limit the moving of the isolating block 68 along a direction perpendicular to the sidewall of the fixing strip 62, and then improve the stability of the isolating block 68. In addition, the fifth step through hole 688 is disposed corresponding to the second blind hole 6226, to achieve the connection between the isolating block 68 and the fixing strip 62 through passing the connecting member 610 through the fifth step through hole 688 and the second blind hole 6226. It needs to be explained that the second positioning column 684 extends into the first step through hole 6222 when the isolating block 68 is connected to the fixing strip 62, to seal the first step through hole 6222.

As shown in FIG. 17, in addition to the features of any of the above embodiments, the present disclosure further defines the following features:

The second sealing ring groove 6810 is provided on the isolating block 68, and the second sealing ring groove 6810 is provided to wind the second positioning column 684, to help dispose the sealing ring 612 in the second sealing ring groove 6810, and the sealing ring winds the first step through hole 6222 to seal the gap between the isolating block 68 and the fixing strip 62, and this prevents the air from escaping from the gap between the isolating block 68 and the fixing strip 62 when the airflows through the first step through hole 6222.

As shown in FIG. 16, FIG. 17 and FIG. 28, in addition to the features of any of the above embodiments, the present disclosure further defines the following features:

the minimum distance between the second positioning groove 686 and the side of the isolating block body 682away from the fixing assembly 6 is less than the minimum distance between the first positioning groove 666 and the side of the adsorbing block body 662away from the fixing strip 62, and when the printing plate 5 is adsorbed to the adsorbing block 66, there is a gap between the isolating block 68 and the printing plate 5, and when screen plate patterns are engraved on the printing plate 5 by the laser, the laser will penetrate the printing plate 5. And the isolating blocks 68 are mounted on a position corresponding to the screen plate patterns, firstly, the isolating blocks 68 are fixed to the fixing strips 62, which has a sealing function to them, and secondly, there is an air gap for protection between the isolating blocks 68 and the inner surface of the printing plate 5, and therefore, the laser which engraves hole patterns 112 in the printing plate 5 is not sufficient to damage the isolating black 68 when the laser contacts the isolating block 68. It needs to be explained that the printing pate 5 has a certain thickness and rigidity, although the area where the hole patterns 112 are located does not have any support, they can still maintain the shape under the support of the adsorbing blocks 66 around the isolating blocks 68.

And the number of the isolating blocks 68 on the fixing strip 62 is adjusted according to the size of the area of the hole patterns 112, and the adsorbing blocks 66 still need to be fixed at the left end and the right end of the fixing strip 62 to support and adsorb the printing plate 5.

As shown in FIG. 27, in addition to the features of any of the above embodiments, the present disclosure further defines the following features:
the printing plate 5 presents an arc shape, and when the roller housing 424 needs to rotate, the arc shaped printing plate 5 better matches the shape of the roller housing 424, and this helps processing the patterns, and at least one side of the printing plate 5 in the circumferential direction is formed with the folded edge 52 bending towards the roller 4, and the moving of the printing plate 5 in a direction perpendicular to the fixing strip 62 is limited as the folded edge 52 abuts on the adsorbing block 62 on the fixing strip 62; and the two sides of the printing plate 5 along the axial direction are respectively provided with the second through holes 54 corresponding to the first threaded through holes 668, the connecting member 610 passes through the second through hole 54 and extends into the first threaded through hole 668, and then the two sides of the printing plate 5 along the axial direction are fixed to the adsorbing block 66. In an embodiment, the roller housing 424 is uniformly provided with the fixing strips 62 in the area covered by the printing plate 5, and the printing plate 5 is fixed by the fixing strip 62; the bolt passes through the second through hole 54 in the two sides of the printing plate 5 along the axial direction and is fixed in the first threaded through hole 668 of the adsorbing block 66 in the fixing strip 62, and the arc shaped area of the printing plate 5 is adsorbed by the adsorbing block 66 on the fixing strip 62.

In a further embodiment, the area of the roller housing 424 which is not covered by the printing plate 5 is wholly sealed by the sealing strip 64.

In a further embodiment, when the arc length of the printing plate 5 increases, the sealing strip 64 can be replaced by the fixing strip 62 with the adsorbing block 66; and when the arc length of the printing plate 5 decreases, the fixing strip 62 can be replaced by the sealing strip 64. Furthermore, the counterweight blocks 614 are mounted on one or several sealing strips 64, the number and weight of the counterweight blocks 614 are determined according to the arc length of the printing plate 5, and the purpose is to ensure the dynamic balance of the roller 4.

The counterweight is provided with a sixth step through hole 6142, and the axis of the sixth step through hole 6142 coincides with the third blind hole of the sealing strip, and thus, after passing through the sixth step through hole 6142, a fastener is screwed into the third blind hole, to fix the counterweight block on the sealing strip.

Furthermore, the sixth step through holes 6142 are distributed equidistantly.

And when the printing plate 5 which presents an arc shape is assembled, firstly, the folded edge 52 of the printing plate 5 leans on a positioning surface of the adsorbing block 66, and the positioning surface can be a first positioning surface 6616, and further can be a second positioning surface 6814 of the isolating block 68, and the end of the printing plate 5 along the axial direction is firstly fixed through a screw to the fixing strip 62, then the roller body 42 rotates and the remaining portion of the printing plate 5 gradually contacts the adsorbing block 66, and meanwhile it draws air to the outside through the positioning filler 48 and the printing plate 5 is gradually compressed tightly by the air pressure on the surface of the roller body 42, and finally, the other end of the printing plate 5 along the axial direction is fixed through a screw to the first positioning surface 6616 of the adsorbing block 66 and the second positioning surface 6814 of the isolating block 68 of the fixing strip 62.

It needs to be reminded that the fixing strip 62 is selectively provided with the fixing block 66 and the isolating block 68, and thus, the fixing strip 62 will not directly contact the printing plate 5.

In a further embodiment, before fixing the printing plate 5, it can further be heated appropriately to raise its temperature, and the printing plate 5 is further attached to the roller body 42 as it shrinks when the temperature is lowered.

After the printing plate 5 is fixed to the roller body 42, the valve 484 should be closed timely before drawing air from the positioning filler 48 is stopped, and the printing plate 5should be transferred to the laser machining assembly 3 timely, and the roller 4 maintains the negative pressure in a short time by its own sealing.

As shown in FIG. 26, in addition to the features of any of the above embodiments, the present disclosure further defines the following features:

The printing plate 5 presents a cylindrical shape; when the printing plate 5 is mounted on the roller body 42, the printing plate 5 can be integrally sleeved outside the roller housing 424, and each positioning groove 426 is provided with the fixing strip 62, and the adsorbing block 66 is provided on the fixing strip 62 to sleeve the printing plate 5 outside the adsorbing block 66 and then provide support to the printing plate 5 through the adsorbing block 66, and the curvature radius corresponding to the adsorbing block 66 of the fixing strip 62 is not greater than the radius of the printing plate 5, and thus, when there is a negative pressure inside the roller body 42, the adsorbing block 66 is configured to adsorb the printing plate 5, and the printing plate 5 can be attached tightly to the outer surface of the adsorbing block 66, and this prevents generating a gap between the printing plate 5 and the outer surface of the adsorbing block 66, to close the first threaded through hole 668 in the adsorbing block 66, and thus the printing plate 5 is adsorbed on the adsorbing block 66.

As shown in FIG. 26, in addition to the features of any of the above embodiments, the present disclosure further defines the following features:
when the printing plate 5 which presents a cylindrical shape is assembled, since the size of the printing plate 5 can be changed according to the rising and falling of the temperature, and in an embodiment, when the temperature of the printing plate 5 rises, the integral size of the printing plate 5 increases due to the principle of thermal expansion and cold contraction, i.e., the radius of the printing plate 5 increases, when it is assembled, the temperature of the printing plate 5 is made to rise first, and its inner radius is slightly greater than the distance between the axis of the roller body 42 and the support surface of the adsorbing block 66, and thus the printing plate 5 is smoothly sleeved on the roller body 42, and then, the temperature of the printing plate 5 is made to fall gradually to the same temperature of the roller body 42, and the printing plate 5, which shrinks due to the cooling, is attached to the support surface of the adsorbing block 66 provided on the roller body 42.

It needs to be explained that the temperature of the roller body 42 needs to be consistent with the temperature during the laser processing (for example, the room temperature of 22°C), to prevent the printing plate 5 from falling off the roller 4 due to the reason that the temperature of the printing plate 5 is made to be greater than the temperature of the roller body 42 when the printing plate 5 is engraved by the laser, then the radius of the inner wall of the printing plate5 increases due to thermal expansion, and thus the radius of the inner wall of the printing plate 5 is greater than the distance between the axis of the roller body 42 and the support surface of the adsorbing block 66.

In a further embodiment, the temperature rising of the printing plate 5 should be calculated according to its plate materials such as stainless steel, copper and nickel, as long as the inner radius of the printing plate 5 is slightly greater than the distance between the axis of the roller body and the support surface of the adsorbing block, and the distance difference between them can be in a range of 0.01mm~0. 5mm, preferably 0.02mm.

As shown in FIG. 1 and FIG. 28, in addition to the features of any of the above embodiments, the present disclosure further defines the following features:
the printing plate 5 forms the line pattern 110 sinking from one side to the other side under the effect of the laser machining assembly 3, and the laser can engrave a strip gravure pattern in the printing plate 5which does not penetrate the printing plate 5; or under the effect of the laser machining assembly 3, the printing plate 5 forms the hole pattern 112 which penetrates the two sides of the printing plate 5, and the laser can engrave the hole pattern 112 (i.e., a screen plate pattern) in the printing plate 5which penetrates the printing plate 5; or through the laser machining assembly 3, the strip gravure pattern and the hole pattern 112 can be engraved in the printing plate 5 at the same time. When the entirety of the printing plate 5 forms the line gravure pattern, on the fixing strip 62 are only the adsorbing blocks 66, which have the function of supporting and adsorbing the printing plate 5. When the printing plate 5 forms the hole pattern 112 locally, the isolating blocks 68 are provided in the positioning groove 426 corresponding to the hole pattern 112, firstly, the isolating blocks 68 are fixed to the fixing strip 62 to seal the first step through hole 6222 in the fixing strip 62 to achieve the sealing function, and secondly, an air gap is rendered between the isolating blocks 68 and the inner surface of the printing plate 5, and the laser which engraves the hole pattern 112 in the printing plate 5 is not sufficient to damage the isolating blocks 68 when it passes the air gap and contacts the isolating blocks 68.

In a further embodiment, as the printing plate 5 has a certain thickness and rigidity, although the area where the hole pattern 112 is located does not have any support, it still can maintain the shape under the support of the adsorbing blocks 66 around the isolating blocks 68.

And the number of the isolating blocks 68 on the fixing strip 62 is adjusted according to the size of the area of the hole pattern 112, while the adsorbing blocks 66 still need to be fixed on the left end and the right end of the fixing strip 62, for supporting and adsorbing the printing plate 5.

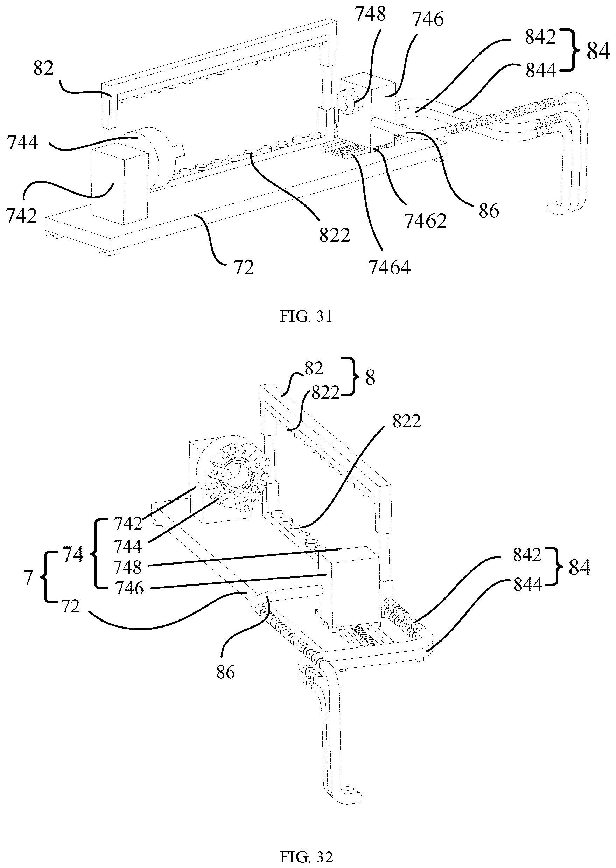

As shown in FIG. 32, in addition to the features of any of the above embodiments, the present disclosure further defines the following features:
the laser plate making device further comprises a roller moving assembly 7 movably provided on the base 1, and the roller moving assembly 7 is provided with the roller 4, and thus, when moving on the base 1, the roller moving assembly 7 brings the roller 4 to move. In an embodiment, the roller moving assembly 7 can move along the roller guide rail 14 through the cooperation between the roller moving assembly 7 and the roller guide rail 14, to achieve the moving of the roller 4 with respect to the base 1.

As shown in FIG. 32, in addition to the features of any of the above embodiments, the present disclosure further defines the following features:
the roller moving assembly 7 in an embodiment comprises a moving base plate 72and a rotating assembly 74, and the rotating assembly 74 is provided on the moving base plate 72, and the moving of the rotating assembly 74 with respect to the base 1 is achieved through the moving of the moving base plate 72 with respect to the base 1; the rotating assembly 74 in an embodiment comprises a rotating drive member 742 and a passive rotating member 746, a first clamp 744 is provided on the rotating drive member 742, and the first clamp 744 is electrically connected to the rotating drive member 742, to drive the first clamp 744 to rotate about the axis of the first clamp 744 through the rotating drive member 742, and the passive rotating member 746 is disposed corresponding to the rotating drive member 742, and the passive rotating member 746 can move on the moving base plate 72, and the distance between the passive rotating member 746 and the rotating drive member 742 is adjusted through the moving of the passive rotating member 746 on the moving base plate 72, and the second clamp 748 is provided on the passive rotating member 746, and the roller 4 is connected to the rotating assembly 74 under the effect of the first clamp 744 and the second clamp 748. In an embodiment, through the moving of the passive rotating member 746 with respect to the rotating drive member 742, the roller 4 is clamped between the first clamp 744 and the second clamp 748, and when the rotating drive member 742 drives the first clamp to rotate, the first clamp 744 brings the roller 4 to rotate, the second clamp 748 is brought by the roller 4 to rotate passively, and on the roller moving assembly 7, the roller 4 can move along the extending direction of the roller guide rail 14 with respect to the base 1, and can further rotate about the axis of the roller 4 with respect to the base 1, to adjust the relative position of the laser machining assembly 3 and the roller 4, and to adjust the working surface of the laser machining assembly 3 on the printing plate 5.

As shown in FIG. 32, in addition to the features of any of the above embodiments, the present disclosure further defines the following features:
the laser plate making device further comprises a jet assembly 8 provided on the moving base plate 72corresponding to the roller 4, and the jet assembly 8 can spray air to the printing plate 5 to remove the debris and residues generated in the process of engraving or punching the printing plate 5 by the laser, and the jet assembly 8 is provided at one side of the rotating assembly 74, to prevent the interference of the jet assembly 8 with the rotating of the roller 4. It can be understood that the working range of the jet assembly 8 covers the printing plate 5 in the axial direction of the roller 4, and the jet assembly 8 can remove the residues and debris in the whole area of the printing plate 5 in the rotating process of the roller 4.

In a further embodiment, the jet assembly 8 can be provided at the side of the moving base plate 72 away from the roller 4. The jet assembly 8 comprises: an airflow support 82, and the size of the airflow support 82 adapts to the size of the roller 4; and a plurality of nozzles 822 are provided in the airflow support 82, and in the axial direction of the roller 4, the working range of the nozzles 822 covers the printing plate 5.

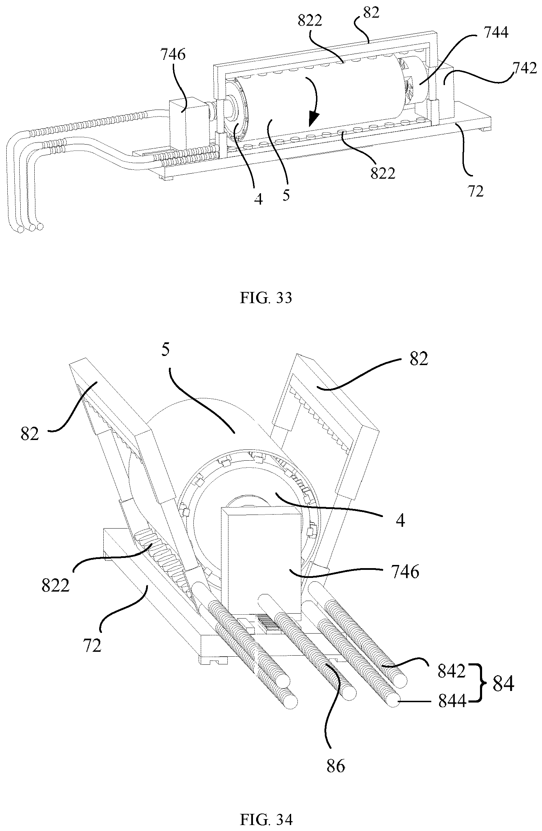

As shown in FIG. 32 and FIG. 33, in addition to the features of any of the above embodiments, the present disclosure further defines the following features:
the size of the airflow support 82 matches the size of the roller 4, and the plurality of nozzles 822 provided in the airflow support 82 can be attached to the outer surface of the roller 4, and this decreases the distance between the nozzles 822 and the printing plate 5 and thus improves the effect of removing the residues and debris on the printing plate 5 by the nozzles 822. It can be understood that the closer the distance is, the better the effect of removing the residues is, and in the axial direction of the roller 4, the working range of the nozzles 822 covers the printing plate 5, and thus, when the roller 4 is made to rotate about the axis of the roller 4, the working range of the nozzles 822 covers the whole working surface of the printing plate 5, to remove the residues and debris in the whole area of the printing plate 5.

As shown in FIG. 32, in addition to the features of any of the above embodiments, the present disclosure further defines the following features:
an air tube assembly 84 comprises a first air tube 842 and a second air tube 844, and the first air tube 842 and the second air tube 844 respectively communicate with the airflow support 82, and the nozzles 822 communicating with the first air tube 842 spray air outward, and the nozzles 822 communicating with the second air tube 844 suck air from the outside to the inside, and then the nozzles 822 communicating with the first air tube 842 spray air to the outside and blow off the residues and debris on the printing plate 5, and the nozzles 822 communicating with the second air tube 844 such air from the outside to the inside and suck the residues and debris which are blown off, and this decreases the residues and the debris falling to the vicinity of the printing plate 5, prevents the residues and debris from accumulating on the moving base plate 72 or the base 1 and then hindering the moving of the roller 4 with respect to the base 1.

It can be understood that the effect of removing the residues and debris generated in the processing can be effectively improved through adopting a combination method that a portion of the nozzles 822 suck air and a portion of the nozzles 822 spray air.

As shown in FIG. 33, in addition to the features of any of the above embodiments, the present disclosure further defines the following features:
the nozzles 822 are provided at the two sides of the airflow support 82 along the radial direction of the roller 4, and the nozzles 822 spray air or suck air along the two sides of the roller 4 in the radial direction. In an embodiment, when the roller 4 rotates downward, the nozzles 822 under the roller 4 spray air upward to blow off the residues and debris on the printing plate 5, and the nozzles 822 above the roller 4 suck air to suck and remove the residues and debris which are blown off, or when the roller 4 rotate upward, the nozzles 822 above the roller 4 spray air downward to blow off the residues and debris on the printing plate 5, and the nozzles 822 under the roller 4 suck air to suck and remove the residues and debris which are blown off.

As shown in FIG. 34, in addition to the features of any of the above embodiments, the present disclosure further defines the following features:
there are two airflow supports 82, to spray air to or suck air from the roller 4 through the two airflow supports 82, and to remove the residues and debris on the printing plate 5 and improve the removing effect of the residues and debris, and thus, when laser processing is respectively conducted at both the left side and the right side of the roller 4 at the same time, a cleaning and dust sucking airflow can be provided; in addition, the distance between the two airflow supports 82 increases gradually from bottom to top, and the roller 4 is provided between the two airflow supports 82, and this helps mount the roller 4 from above the two airflow supports 82.

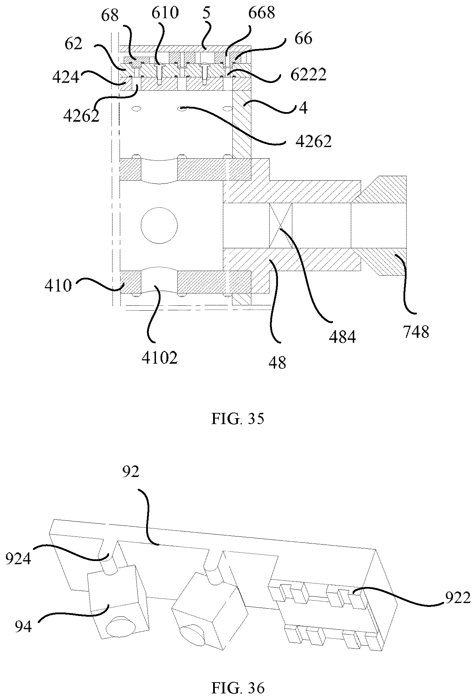

As shown in FIG. 35, in addition to the features of any of the above embodiments, the present disclosure further defines the following features:
the passive rotating member is hollow therein and the second clamp 748 is a hollow clamp, it helps that the third air tube 86 passes through the second clamp 748 and is then connected to the passive rotating member, and under the effect of the third air tube 86, the passive rotating member can be configured to discharge air to or suck air from the roller 4. In an embodiment, when the third air tube 86 sucks air from the roller 4, a negative pressure is generated in the roller 4, the air is drawn outward through the first threaded through hole 668 of the adsorbing block 66, the first through hole 4262 of the roller housing 424, the valve 484 of the positioning filler 48 and the hollow clamp, and the printing plate 5 is compressed tightly on the adsorbing blocks 66 by the atmospheric pressure difference; when the third air tube 86 discharges air to the interior of the roller 4, the air is discharged to the outside through the hollow clamp, the valve 484 of the positioning filler 48, the first through hole 4262 of the roller housing 424 and the first threaded through hole 668 of the adsorbing block 66, and the printing plate 5 falls off the roller 4.

As shown in FIG. 1, FIG. 37 and FIG. 39, in addition to the features of any of the above embodiments, the present disclosure further defines the following features:
a detecting guide rail 122 is provided on the top wall of the portal frame 12, and the detecting assembly 9 is provided on the detecting guide rail 122, the detecting assembly 9 can move along the detecting guide rail 122; through detecting the jumping of the printing plate 5 and the machining quality of the printing plate 5 by the detecting assembly 9, the processing state of the printing plate 5 is acquired; when the printing plate 5 has a machining quality problem, it is found timely, and this avoids the occurrence of relatively more machining quality problems, and thus saves the material cost of the printing plate 5 and time cost.

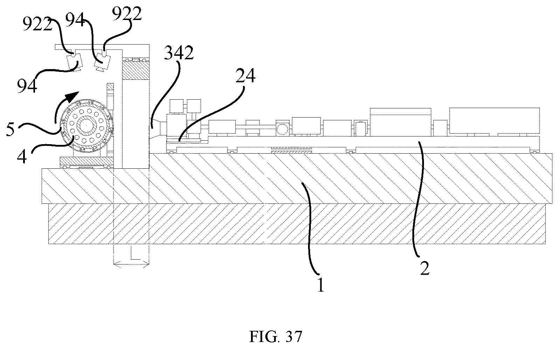

As shown in FIG. 37, in addition to the features of any of the above embodiments, the present disclosure further defines the following features:
the detecting assembly 9 in an embodiment comprises a detecting base plate 92 and at least one detecting head 94, and the connecting portion 922 of the detecting base plate 92 cooperates with the detecting guide rail 122, and the detecting base plate 92 can move along the detecting guide rail 122; and at least one detecting head 94 is provided on the adjusting portion 924, and thus, when the adjusting portion 924 moves along the detecting guide rail 122, the moving of the detecting head 94 with respect to the base 1 can be achieved through the adjusting portion 924. In addition, the detecting direction of each detecting head 94 faces the roller 4, and the machining quality of the printing plate 5 is detected through the detecting head 94, and this helps detect the processing state or progress of the printing plate 5.

In addition, a linear module can further be provided under the detecting base plate 92, and mainly comprises a linear module stator 118 and a linear module mover 116.

In a further embodiment, the movable connection between the detecting head 94 and the adjusting portion 924 can be driven directly by a motor, or achieved by a common angle adjusting mechanism such as a crank rocker.

As shown in FIG. 1, in addition to the features of any of the above embodiments, the present disclosure further defines the following features:
the laser plate making device further comprises a protective screen 18 which is arranged corresponding to the portal frame 12, the space where the optical path platform 2 is located is independent from the space where the roller 4 is located, to reduce the mutual inference of the components during operation between the space where the optical path platform 2 is located and the space where the roller 4 is located.

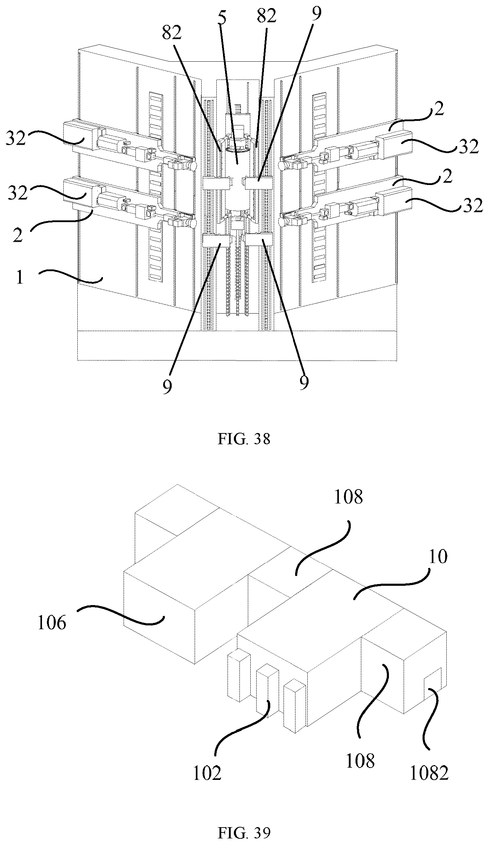

As shown in FIG. 39, another embodiment of the present disclosure provides a plate making system, and further defines the following features:
the plate making system comprises the laser plate making device in any of the above embodiments, and thus has the effect in any of the above embodiments, which are not repeated herein. A protection cover 10 is sleeved outside the base 1 of the laser plate making device, and configured to protect each operation component of the laser plate making device provided on the base 1 and prevent external objects from entering the laser plate making device and then affecting the normal operation of the laser plate making device. An auxiliary device 102 is provided outside the protection cover 10, and configured to prevent the heat produced in the working of the auxiliary device 102 from affecting the devices inside the protection cover 10 in the laser processing area; the auxiliary device 102 communicates with the protection cover 10, to control the device temperature and the air temperature within the protection cover 10 through the auxiliary device 102, and improve the machining quality of the printing plate 5.

As shown in FIG. 39, in addition to the features of any of the above embodiments, the present disclosure further defines the following features:
the laser plate making device further comprises an upper plate area and an upper plate cover 106, and the upper plate area is arranged independently from the base 1 of the laser plate making device, the printing plate 5 is mounted on the roller 4in the upper plate area, to prevent the operation on the upper plate area from interfering with the laser processing, meanwhile, in the laser machining process, mounting operations for a plurality of printing plates 5 can be performed to improve the productivity.

As shown in FIG. 39, in addition to the features of any of the above embodiments, the present disclosure further defines the following features:
the laser plate making device further comprises a transition cover 108 provided at one side of the upper plate cover 106 or the protection cover 10, or the transition cover 108 is provided between the upper plate cover 106 and the protection cover 10; when the printing plate 5 is mounted on the roller4 within the upper plate cover 106, the printing plate5 is protected by the transition cover 108.

As shown in FIG. 39, in addition to the features of any of the above embodiments, the present disclosure further defines the following features:
two door bodies 1082 are opened in the transition cover 108, when one door body 1082 opens, the other door body 1082 closes, before the opening of the door body 1082, the temperature and humidity inside the transition cover 108 should be adjusted, to prevent the interference with environment parameters such as the temperature and the humidity inside the protection cover 10 and the upper plate cover 106 in the transporting process of the roller 4 and the printing plate 5.

As shown in FIG. 1, an embodiment according to the present disclosure provides a laser plate making device, and defines the following features:
the laser plate making device comprises: a marble platform (i.e., the base 1), a roller 4, a printing plate 5, an optical path platform 2, a laser optical path 32, a processing head 34, a fixing strip 62, a sealing strip 64, an adsorbing block 66, an isolating block 68, a roller moving unit (i.e., the roller moving assembly 7), a detecting system (i.e., the detecting assembly 9), a laser processing cover piece (i.e., the protection cover 10), an upper plate preparation area cover piece (i.e., the upper plate cover 106) and an isolation area cover piece (i.e., the transition cover 108). The optical path platform 2 can move along the axial direction of the printing plate 5 on the marble platform, and covers the area of the entire printing plate 5 in the axial direction; the laser optical path 32 can be integrally placed on the optical path platform 2, and can further be placed on the marble platform, and is connected to the processing head 34 through a flying optical path or an optical fiber; multiple different laser processing heads 34 can be arranged in front of the optical path platform 2, the distance between them and the surface of the printing plate 5 can be adjusted along a light emitting direction, and upper and lower positions of them can further be adjusted along a direction perpendicular to the light emitting direction; through adjusting the distribution of the fixing strip 62 and the sealing strip 64, the roller 4 can meet the fixation of the fully circumferential printing plate 5 and the non fully circumferential printing plate 5; the numbers and positions of the adsorbing block 66 and the isolating block 68 are adjusted on the fixing strip 62, and thus they can adapt to the processing needs on a gravure plate or a screen plate; through the length shrinking of the printing plate 5 rendered by the roller 4 due to temperature change and the negative pressure adsorption of the adsorbing block 66, the printing plate 5 is attached tightly to the surface of the roller 4; an included angle is formed between the adsorbing block 66, the isolating block 68 and the fixing strip 62, when the roller 4 rotates, an axial airflow for cooling use is formed between the inner surface of the printing plate 5 and the outer surface of the roller 4; the roller moving unit can move in the axial direction, to compensate the processing space occupied by the failing laser optical path 32; the roller moving unit comprises an airflow assembly support (i.e., the airflow support 82) on which a suction nozzle (i.e., the nozzle 822) is provided along the axial direction of the printing plate 5; the height of the airflow assembly support can be adjusted along a pillar to adapt to the rollers 4 of different diameters; when there are two sets of airflow assembly supports, they are respectively fixed on the roller moving platform in a shape of the inversion of a Chinese character" 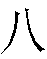 "; the detecting system comprises a sensor (i.e., the detecting head 94) detecting the jumping on the surface of the printing plate 5 and a sensor (i.e., the detecting head 94) detecting the quality of laser processed patterns, and is located on the portal frame 12 overlooking the roller 4, and its position moves with the laser optical path 32 that it detects; a laser processed area and an upper plate fixing area are partitioned by the laser processing cover piece and the upper plate preparation area cover piece, and they are in communication and keep the stability of the environment parameters through the isolation area cover piece.

In detail, as shown in FIG. 1, the marble platform is arranged on the base 1. The base 1 can be formed by a welded frame and peripheral baffles, and can further be composed of several shock struts and peripheral baffles.

As shown in FIG. 2, the marble platform has the portal frame 12, and is provided with several optical path moving guide rails (i.e., the optical path guide rail 16) at one side thereof; a detecting system guide rail (i.e., the detecting guide rail 122) is provided on the portal frame 12; and the other side of the portal frame 12 is provided with the roller moving guide rail (i.e., the roller guide rail 14). A platform linear module stator is provided between the optical path moving guide rails; a detecting device linear module stator is provided between the detecting system guide rails; a roller linear module stator is provided between the roller moving guide rails; the platform linear module stator, the detecting device linear module stator and the roller linear module stator are all integrated components which comprise a straight line movement mechanism and a position feedback sensor; and a protective screen 18 is arranged symmetrically on the marble platform.

As shown in FIG. 3, a platform support (i.e., the support guide portion 22) is provided below the optical path platform 2, and can support the optical path platform 2 and move along the optical path moving guide rail. At least two moving supports are arranged linearly along the direction of the optical path moving guide rails at the positions on the optical platform 2 corresponding to each optical path moving guide rail. In an embodiment, two sliding blocks are provided, i.e., two moving supports are arranged linearly along the direction of the guide rail on the optical path platform corresponding to each guide rail. A preferable combination is that the optical path moving guide rail is a steel guide rail, and the moving support is a rolling linear bearing; a second combination is that the optical path moving guide rail is a marble guide rail, and the moving support is an air flotation or liquid flotation unit; and a third combination is that the optical path moving guide rail is a metal guide rail, and the moving support is a sliding linear bearing.

A platform linear module mover is provided below the optical path platform 2, and is configured to cooperate with the platform linear module stator; in one embodiment, the linear module stator is a linear motor stator, and the linear module mover is a linear motor mover. As an alternative solution, the linear module stator is a screw, and the linear module mover is a servo motor driven nut.

A processing head linear module stator is fixed in front of the optical path platform 2, and a processing head linear module mover which can adjust its position along a straight line is provided on the optical path platform 2. The processing head linear module stator and the processing head linear module mover can be realized by a linear moving mechanism related to by common mechanical knowledge, such as a linear motor stator and a linear motor mover, a screw nut, a pinion and a rack, preferably the linear motor stator and the linear motor mover.

A vertical adjustment module (i.e., the processing mounting plate 24) is further fixed on the processing head linear module mover, can move on the linear module stator together with the linear module mover, and can further change the distance between its top surface and the top surface of the linear module mover. The vertical adjustment module preferably chooses a piezoelectric ceramic actuator, or less preferably chooses a servo motor driven wedge mechanism.

In a further embodiment, as shown in FIG. 4, there can be multiple types of outer shapes of the optical path platform 2.

As shown in FIG. 5, the laser machining assembly 3 is provided on an optical platform, and a lens (i.e., the focusing device 344), the processing head 34 and the reflective sheet (i.e., the reflective sheet 326) are located on the vertical adjustment module, and the reflective sheet is located on the linear module mover 116. A laser beam subjected to beam expansion and collimation is emitted into the reflective sheet from the rear of the reflective sheet, enters the processing head 34 after the reflection of the reflective sheet, and is emitted out to the front after being focused by the lens.

As shown in FIG. 5, the lens and the processing head 34 are further provided, the integral reflective sheet can move left and right together with the processing head linear module mover 116, and meanwhile, the lens, the processing head 34 and the reflective sheet can move up and down together with the vertical adjustment module; a telescopic optical path protection tube 324 is provided between the reflective sheets, which does not affect the change of the distance between the plurality of the reflective sheets; moreover, because the laser is subjected to beam expansion and collimation, the change of the optical distance between different reflective sheets does not affect the transmission quality of the laser, either.

And the processing mounting plate 24 can bring the processing head to move up and down, and the reference sign 22 in the middle is the processing head linear module mover 116, which can bring the processing mounting plate 24 to move left and right.

When the reflective sheet 326 at the leftmost side changes upper and lower positions on the processing mounting plate 24 along with the processing head, the middle reflective sheet 326 and the leftmost reflective sheet 326 move up and down together, and at this moment, the distance between the middle reflective sheet 326 and the rightmost reflective sheet 326 will be changed under the effect of the telescopic optical path protection tube 324.

As shown in FIG. 5, one processing head 34 is provided on the optical platform, and for different processing purposes of etching, punching and the like, the processing head 34 can be chosen from a scanning galvanometer, a rotary cutting galvanometer, a multi-prism galvanometer and a modulator; when a processing purpose is changed, it can adapt to the change of the processing need through replacing the processing head 34.

As shown in FIG. 6, this is another embodiment of the optical platform and the laser machining assembly 3, the laser passes through the reflective sheet 326 and the telescopic optical path protection tube 324 and enters a beam splitting lens (i.e., the beam splitter 36) for beam splitting, a laser beam enters the processing head 34, another laser beam enters the processing head 34 after the reflection of the reflective sheet 326, and the two processing heads 34 can be processing heads 34 of different processing purposes, or processing heads 34 of the same processing purpose.

The two processing heads 34 in FIG. 6 can be mounted on the same vertical adjustment module, and jointly adjust a vertical displacement, or they can be mounted respectively on two vertical adjustment modules and separately adjust their own vertical displacement; a plurality of vertical adjustment modules can be mounted on the same linear module mover 116, and can further be mounted respectively on the linear module movers 116 of different processing heads, and at this moment, the linear module stators 118 of the processing heads corresponding to them are provided.

Based on the above structure design, it can be deduced that three or more processing heads 34 can be arranged in the case that the space of the optical path platform 2 allows.

FIG. 7, similar to FIG. 6, is an embodiment of the combination of the optical platform and the laser machining assembly 3, and the reflection of a flipping reflective sheet is configured to change the laser direction, to adapt to the shapes of different optical path platforms 2.

As shown in FIG. 8, the laser optical path 32 comprises a laser device (i.e., the laser generator 322), a beam expanding and collimating module (i.e., the beam expanding and collimating device 328), a space shaping module (i.e., the shaping device 3210), a dynamic focus adjusting module (i.e., the focus adjusting device 3212) and a detecting module; the laser is connected to each of the above modules through the beam splitting by the beam splitting lens, and is protected by the optical path protection tube 324, and the length of the optical path protection tube 34 should be adjusted along with the specific length between the laser device and respective modules.

In the laser optical path 32, the laser device is configured to generator the laser; the beam expanding and collimating module is configured to compress the divergent angle of the laser beam; the space shaping module is configured to adjust the distribution uniformity of the intensity of the laser beam; the dynamic focus adjusting module is configured to quickly adjust the position of the focus point of the laser; the function of the detecting module (i.e., the laser detecting device 3214) can be the power detection, focus point detection and orientation detection for the laser beam respectively, or can further be one of them.

As shown in FIG. 9, the telescopic optical path protection tube 324 is configured to connect the reflective sheet 326 in the laser machining assembly 3 as shown in FIG. 5, when the linear module mover 116 of the processing head of the reflective sheet moves with respect to a stator, as shown in FIG. 5, the telescopic optical path protection tube 324 can protect the laser, while does not interfere with the moving of the reflective sheet.

As shown in FIG. 9, one type of the arrangement of the optical path is as follows: five sets of optical path platforms 2 are provided on the marble platform, and they are respectively provided with a set of laser optical path 32 thereon, and the direction of the laser optical path is changed through the reflection of the reflective sheet and adapts to the shape of the optical path platform 2 where it is located. The five optical path platforms 2 can move respectively along the guide rail (i.e., the optical path guide rail 16) on the marble platform.

It can be understood that the numbers of the optical path platform 2 and the laser optical path 32 can further be one, two, three, four or more than five, and the specific number is adjusted according to the size of the marble platform.

The arrangement solution of the optical path shown in FIG. 9 is suitable for a laser optical path system that requires strictly unchanged optical distance between various components and cannot transmit laser through the optical fiber.

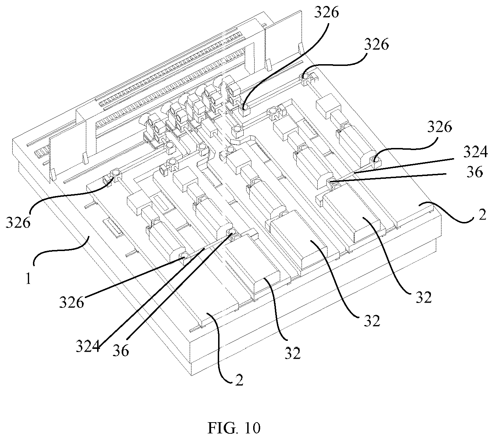

As shown in FIG. 10, a second type of the arrangement of the optical path is as follows: besides providing the laser of the laser optical path 32, the laser device of the laser optical path 32 further provides the laser to the laser optical path 32 through the beam splitting of the beam splitting lens and under the protection of the telescopic optical path protection tube 324.

When a plurality of optical path platforms 2 move respectively, the telescopic optical path protection tube 324 can adjust by itself according to the change of the spacing of different optical path platforms 2, and will not affect their movement, and will not affect the transmission of the laser in each laser optical path 32, either.

The arrangement of the optical path has a beneficial effect of saving the laser devices for the laser optical path 32, and is suitable for an optical path system which can not transmit the laser using the optical fiber and allows for a certain change of the optical length of elements.

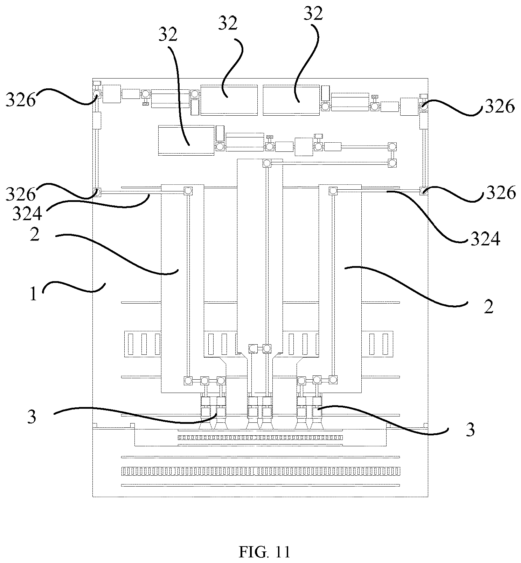

As shown in FIG. 11, the laser machining assemblies 3 are respectively provided on the optical path platform 2; the laser optical paths 32 are all fixed on the marble, under the protection of the telescopic optical path protection tube 324, the laser is transmitted to the laser machining assembly 3 through the flying optical path.

When the arrangement solution of the optical path as shown in FIG. 11 is adopted, although the laser optical path 32 is arranged on the marble platform, the optical path platform 2 still keeps sufficient space, and therefore, when the type of the laser optical path 32 changes, the device can be changed into the arrangement solution as shown in FIG. 9 and FIG. 10.

The arrangement solution of the optical path as shown in FIG. 11 is suitable for a laser optical path system which is relatively sensitive to the motion and vibration and allows for a certain change of the optical length of elements.

For the arrangement solutions of the optical path shown in FIG. 10 and FIG. 11, an alternative method is to use a deformable optical fiber (not shown in the figures) to substitute the protection of the telescopic optical path protection tube 324 and propagate the laser.

As shown in FIG. 12, the roller 4 is composed of a hollow shaft 410, a side rib plate (i.e., the rib plate 416), a ventilation rib plate (i.e., the rib plate 416), a roller housing 424, a sealing plug (i.e., the positioning filler 48), a hollow plug (i.e., the positioning filler 48) and a valve 484.

The hollow shaft comprises a hollow shaft core (i.e., the hollow cavity 412) and a vent hole (i.e., opening 422) arranged in the axial direction. The side rib plate 416 is respectively fixed at the left side and the right side of the hollow shaft, and the ventilation rib plates 416 are arranged therebetween. Vent holes (i.e., the first vent 4162) are arranged in the ventilation rib plate 416; the side rib plate 416 and the ventilation rib plate 416 jointly play a role of positioning and supporting the roller housing 424; the ventilation rib plate 416 separates the hollow shaft, the side rib plate 416 and the roller housing 424 into several cavities, and the vent holes reduce weight and keep the communication between the respective cavities.

The sealing plug and the hollow plug are respectively fixed at the left side and the right side of the hollow shaft, and the sealing plug is a solid structure and seals the hollow shaft core of the hollow shaft from one side; the hollow plug is fixed at the other side of the hollow shaft, and the hollow shaft 410 is provided with inner holes (i.e., the second vent 4102); the valve 484 is further fixed in the inner hole and has the function of limiting whether the inner hole of the hollow plug is in communication with the atmosphere; the valve 484 can be all kinds of manual or automatic valves 484, preferably a pneumatic valve; as the relevant valves 484 are mature components, its specific structure is not drawn in FIG. 12 and only its function in the present patent is explained herein.

In addition, the sealing plug and the hollow plug respectively comprise an outer circle for positioning and a central cone hole for positioning, and they are configured to clamp and position the roller 4.

Furthermore, the fixing method of the hollow shaft, the side rib plate 416, the ventilation rib plate 416, the roller housing 424, the sealing plug and the hollow plug should be able to ensure air tightness, preferably, fixing through welding is adopted.

As shown in FIG. 13, positioning grooves 426 are arranged uniformly in the circumferential direction in the outer surface of the roller housing 424, and through holes (i.e., the first through hole 4262) and threaded blind holes (i.e., the first blind hole 4264) are arranged in an embodiment and uniformly in each positioning groove 426.

As shown in FIG. 14, the fixing strip 62 is in a rectangular strip shape, in which first step through holes 6222 and the second step through holes 6224 are arranged in an embodiment and uniformly, and symmetrical threaded blind holes (i.e., the second blind hole 6226) are provided near the first step through hole 6222; a sealing ring groove (i.e., the third sealing ring groove 624) is provided below the fixing strip 62; the connecting line of the centers of the two symmetrical threaded blind holes is not perpendicular to the long side surface of the fixing strip 62.

As shown in FIG. 15,the threaded blind hole (i.e., the third blind hole 644) with a countersunk hole, the step through hole (i.e., the third step through hole 642) and the sealing ring groove (i.e., the fourth sealing ring groove 646) are arranged in an embodiment and uniformly in the sealing strip 64.

As shown in FIG. 16, the adsorbing block 66 has a sealing ring groove (i.e., the first sealing ring groove 6612), a positioning column (i.e., the first positioning column 664), a first positioning groove 666, a support surface (i.e., the first support surface 6614) and a positioning surface (i.e., the first positioning surface 6616), and the support surface is curved; the center of the positioning column has a threaded through hole (i.e., the first threaded through hole 668) and a threaded through hole (i.e., the fourth step through hole 6610) with a countersunk hole.

As shown in FIG. 16 and FIG. 17, the isolating block 68 has a sealing ring groove (i.e., the second sealing ring groove 6810), a positioning cylinder (i.e., the second positioning column 684), the second positioning groove 686, an end surface, and the threaded through hole (i.e., the fifth step through hole 668) with a countersunk hole. A distance L11 between the end surface (i.e., the second support surface 6812) and the second positioning groove 686 is less than a distance L10 between the support surface (i.e., the first support surface 6614) and the second positioning groove 686 of the adsorbing block 66.

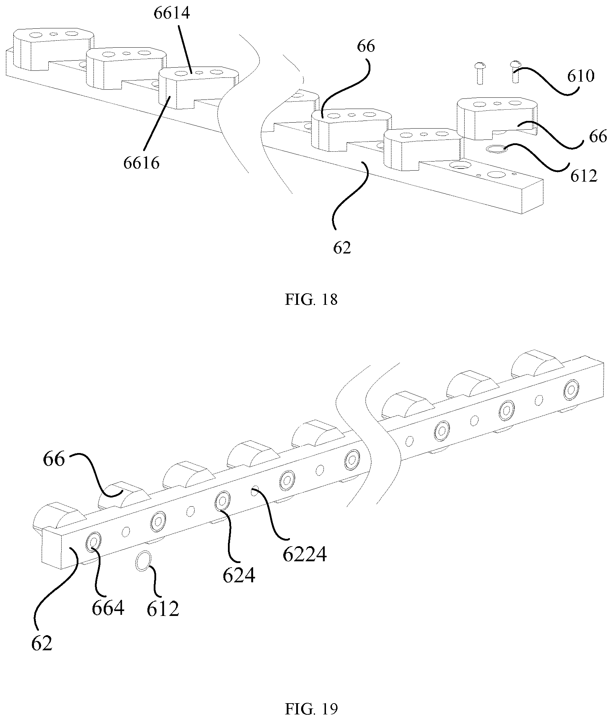

As shown in FIG. 18, the adsorbing block 66 is fixed to the fixing strip 62 through a screw (i.e., the connecting member 610), and the first positioning groove 666 is clamped in the fixing strip 62, the positioning cylinder is inserted into the step hole, and the screw is screwed into the threaded hole; the positioning surface (i.e., the first positioning surface 6616) of the mounted adsorbing block 66 is parallel to the side surface of the fixing strip 62; and there is further a sealing ring 612 between the adsorbing block 66 and the fixing strip 62, which is fixed in the sealing ring groove.

As shown in FIG. 19, the parallel relation between the positioning surface of the adsorbing block 66 and the side surface of the fixing strip 62 is observed from another angle. In addition, the sealing ring 612 is embedded in each sealing ring groove which is arranged uniformly on the bottom of the fixing strip 62.

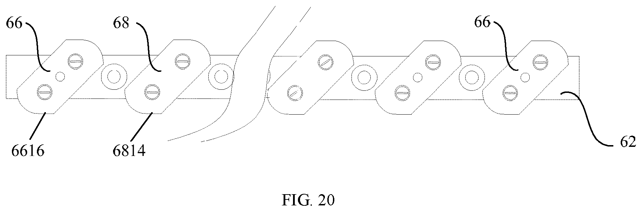

As shown in FIG. 20, besides the adsorbing block 66, the isolating block 68 can further be fixed on the fixing strip 62; the positioning edge (i.e., the second positioning surface 6814) of the isolating block 68 and the positioning edge (i.e., the first positioning surface 6616) of the adsorbing block 66 are coplanar, and both of them are parallel to the side surface of the fixing strip 62; since the connecting line of the centers of the two threaded blind holes of the fixing strip 62 is not perpendicular to the long side surface of the fixing strip 62, an included angle is formed between the adsorbing block 66 and the fixing strip 62, and between the isolating block 68 and the fixing strip 62, and the included angles are the same.

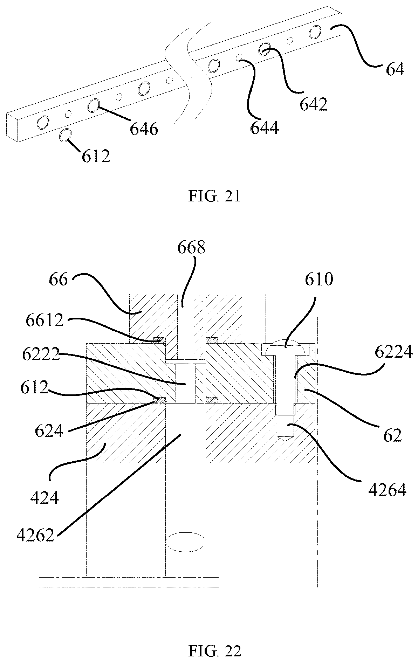

As shown in FIG. 21, the sealing ring 612 is embedded in each sealing ring groove (i.e., the fourth sealing ring groove 646), which is arranged uniformly below the sealing strip 64.

As shown in FIG. 22, the fixing strip 62 can be fixed on the positioning groove 426 in the roller housing 424 through screws, the sealing ring 612 between the roller housing 424 and the fixing strip 62 and the sealing ring between the adsorbing block 66 and the fixing strip 62 have an airtight function; the through hole (i.e., the firs through hole 4262) of the roller housing 424, the step through hole (i.e., the first step through hole 6222) of the fixing strip 62 and the threaded through hole (i.e., the first threaded through hole 668) of the adsorbing block 66 are concentric and communicated.

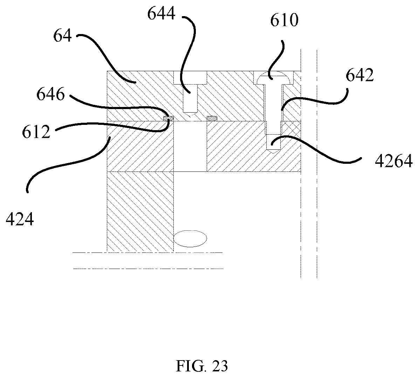

As shown in FIG. 23, the sealing strip 64 can be fixed on the positioning groove 426 in the roller housing 424 through the third step through hole 642 and the screw. The sealing ring 612 between the roller housing 424 and the sealing strip 64 has the airtight function.

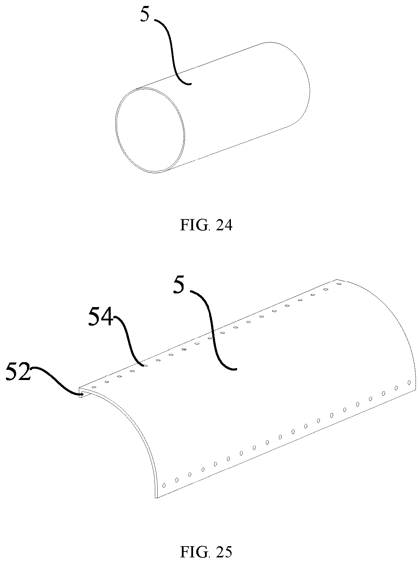

There are multiple types of printing plates 5 which can be processed, for example, FIG. 24 shows a fully circumferential cylindrical printing plate 5; FIG. 25 shows a non fully circumferential printing plate 5, which has a folded edge 52 thereon; a through hole (i.e., the second through hole 54) is provided in the upper and lower sides of the printing plate 5, and the diameter, the position and the number of the through hole match the threaded through hole (i.e., the first threaded through hole 668) of the adsorbing block 66.

As shown in FIG. 26, when the printing plate 5 is a fully circumferential printing plate 5, the fixing method of the roller 4 is to sleeve the printing plate 5 integrally on the roller 4. Then, on the roller housing 424 are only the fixing strips 62, the absorbing blocks 66 are provided on the fixing strips 62, the curvature radius of the support surface of the adsorbing blocks 66 is not greater than the radius of the fully circumferential printing plate 5, and therefore, the adsorbing blocks 66 can support and adsorb the printing plate 5.

It should be noted that the temperature of the roller 4 should be consistent with the temperature during the laser processing (for example, the room temperature of 22°C), and meanwhile, the temperature of the printing plate 5 is managed to rise slightly, and its inner radius is slightly greater than the distance (i.e., the actual outer radius of the roller 4) between the axis of the roller 4 and the support surface of the adsorbing block 66, and then the printing plate 5 is smoothly sleeved on the roller 4; and then, the temperature of the printing plate 5 is gradually lowered to the same temperature with the roller 4, and the printing plate 5 shrinks due to the lowering of the temperature and thus is attached to the surface of the roller 4.

And in the mounting process of the plate, the temperature rising of the printing plate 5 should be calculated according to its plate materials such as the stainless steel, copper and nickel, as long as the inner radius of the printing plate 5 is slightly greater than the actual outer radius of the roller 4. Furthermore, the inner radius of the printing plate 5 is greater than the outer radius of the roller 4 by 0.01mm~0.05mm.

The printing plate 5 can be sleeved on the surface of the roller 4 tightly only by the variation of the temperature, and the printing plate 5 can further be attached tightly to the surface of the roller 4 through the negative pressure inside the roller 4 caused by drawing air from a hollow shaft head to the outside in the laser machining process; when the laser machining is completed, the interior of the roller 4 is ventilated through the hollow shaft head, and the air escapes from the threaded through hole of the adsorbing block 66, the printing plate 5 is forced to expand, and thus the printing plate 5 can be made to fall off the roller 4.

As shown in FIG. 27, when the printing plate 5 is a non fully circumferential printing plate 5, the fixing strips 62 are arranged uniformly in the area of the roller housing 424 which is covered by the printing plate 5 and are used for fixing the printing plate 5; a screw (i.e., the connecting member 610) passes through the through holes (i.e., the second through hole 54) in the upper and lower sides of the printing plate 5, and is fixed in the threaded through hole (i.e., the first threaded through hole 668) of the adsorbing block 66 on the fixing strip 62, and the arc-shaped area of the printing plate 5 is adsorbed by the adsorbing block 66 on the fixing strip 62; the folded edge 52 of the printing plate 5 leans on the positioning surface of the adsorbing block 66.

The area of the roller housing 424 which is not covered by the printing plate 5 is wholly sealed by sealing strip 64; through holes are arranged uniformly in the counterweight (i.e., the counterweight block 614), which cooperate with the diameter, the position and the number of the threaded blind hole of the sealing strip 64, and the counterweight is fixed to the sealing strip 64 through screws; the threaded blind hole (i.e., the third blind hole 644)of each sealing strip 64 can be configured to fix the counterweight; the mass and the fixing position of the counterweight are changed according to the change of the printing plate 5, which has a function of keeping the dynamic balance of the roller 4.

When the arc length of the non fully circumferential printing plate 5 increases, the sealing strip 64 can be replaced by an edge fixing strip with the adsorbing block 66; when the arc length of the non fully circumferential printing plate 5 decreases, the positioning strip can be replaced by the sealing strip 64.

When the non fully circumferential printing plate 5 is fixed, firstly, the folded edge 52 of the printing plate 5 leans on the positioning surface of the adsorbing block 66, one end of the printing plate 5 is fixed to the adsorbing block 66 of the fixing strip 62 through screws, and then, the roller 4 rotates and makes the remaining portion of the printing plate 5 gradually contact the adsorbing block 66, and meanwhile draws air to the outside through a hollow plug, and the printing plate 5 is gradually compressed by atmospheric pressure on the surface of the roller 4, and finally, the other end of the printing plate 5 is fixed to the fixing strip 62 through the screw. Before fixing the printing plate 5, the printing plate 5 can be heated properly and the temperature rises, and thus the printing plate 5 is further attached to the roller 4 tightly due to its shrinking after the temperature is lowered.

After the printing plate 5 is fixed to the roller 4, the valve 484 should be closed timely before drawing the air from the hollow plug is stopped, and the printing plate should be transferred timely to the laser processing cover piece (i.e., the protection cover 10), and the roller 4 maintains a negative pressure in a short period of time by its own sealing.

As shown in FIG. 28, the printing plate 5 has two types of patterns, and one is a line pattern 110 (i.e., the gravure pattern) which does not penetrate the printing plate 5 and the other one is a hole pattern 112(i.e., the screen plate pattern) which penetrates the printing plate 5; when the entirety of the printing plate 5 forms the line pattern 110, on the fixing strip 62 are only the adsorbing blocks 66, which have the function of supporting and adsorbing the printing plate 5; when the printing plate 5 forms the hole pattern 112 locally, the adsorbing block 66 provided on the position corresponding to it is replaced by the isolating block 68; firstly, the isolating blocks 68 are fixed to the fixing strip 62 to achieve a function of sealing it, and secondly, since L11 is less than the L10, there exists an air gap which has a protection function between the isolating blocks 68 and the inner surface of the printing plate 5, and the laser which engraves the hole pattern 112 in the printing plate 5 is not sufficient to damage the isolating blocks 68 when it contacts the isolating blocks 68; as the printing plate 5 has a certain thickness and rigidity, although the area where the hole pattern 112 is located does not have any support, it still can maintain the shape under the support of the adsorbing blocks 66 around the isolating blocks 68; the number of the isolating blocks 68 on the fixing strip 62 is adjusted according to the size of the area of the hole pattern 112, while the adsorbing blocks 66 still need to be fixed on the left end and the right end of the fixing strip 62, for supporting and adsorbing the printing plate 5.

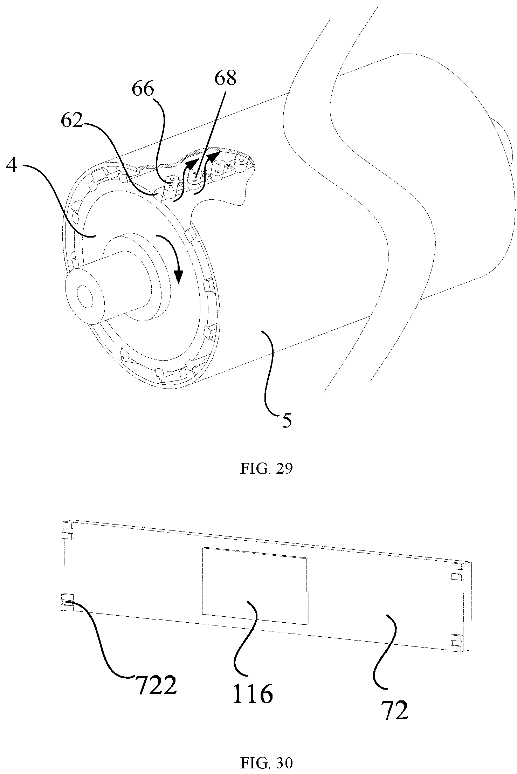

As shown in FIG. 29, when the roller 4 rotates in the direction as shown in the figure, the adsorbing block 66 and the isolating block 68 respectively have an included angle with the fixing strip 62, it is similar to an axial-flow fan in terms of the structural form and objective effect, and thus, the air between the printing plate 5 and the surface of the roller can be impelled to flow along the axial direction of the roller 4 and form an airflow. Since the included angle between the adsorbing block 66 and the fixing strip 62 is identical with the included angle between the isolating block 68 and the fixing strip 62, the change of the numbers of the adsorbing blocks 66 and the isolating blocks 68 on the fixing strips 62 does not affect their effect to the airflow; and the airflow flows axially in the gap between the inner surface of the printing plate 5 and the outer surface of the roller 4, and this increases the heat dissipation area and the heat dissipation efficiency of the printing plate 5, and can reduce the unfavorable effect to the size and material of the printing plate 5 caused by the laser processing heat.

As shown in FIG. 30, a roller moving unit comprises a roller moving chassis (i.e., the moving base plate 72), on which the roller linear module mover 116 and a roller moving support (i.e., the moving support 722) are fixed, and the roller linear module mover 116 cooperates with the roller linear module stator, and the roller moving support cooperates with the roller moving guide rail (i.e., the roller guide rail 14); a preferable combination is that the roller moving guide rail is a steel guide rail, and the roller moving support is a rolling linear bearing; a second combination is that the roller moving guide rail is a marble guide rail, and the roller moving support is an air flotation or liquid flotation unit; and a third combination is that the roller moving guide rail is a metal guide rail, and the roller moving support is a sliding linear bearing.

As shown in FIG. 31, a rotating driving device (i.e., the rotating assembly 74), preferably a chuck, is provided on one side of the roller moving chassis, a clamp (i.e., the first clamp 744) is fixed on the rotating driving device, and it has the function of fixing the roller and bringing the roller to rotate; a tailstock (i.e., the passive rotating member 746) is provided on the other side of the roller moving chassis, a hollow clamp (i.e., the second clamp 748) is provided on the tailstock, and it has the function of supporting the roller and communicating with the air tube; an airflow assembly support (i.e., the airflow support 82) is provided at the side surfaces of a rotating power device and the tailstock, and its height can be adjusted manually or automatically up and down along a column, and it has the function of adapting to the rollers 4 of different diameters.

A row of suction nozzles (i.e., the nozzle 822) and nozzles 822 are fixed on the airflow assembly support, and cover the length of the entirety of the printing plate 5 in the axial direction.

As shown in FIG. 31, the tailstock can slide left and right on a tailstock guide rail (i.e., the support seat guide rail 7464) using a tailstock support (i.e., the driving member support seat 7462), and the sliding power and the position of the tailstock are controlled by a tailstock linear module stator (which is located on the roller moving chassis) and a tailstock linear module mover (which is located on the bottom of the tailstock, not shown in FIG. 31); the tailstock linear module stator and the tailstock linear module mover can be any automatic or manual linear moving mechanism and locking device related to by common mechanical knowledge, preferably a screw nut mechanism driven by a servo motor.

As shown in FIG. 32, the roller moving unit is further provided with a telescopic air tube (i.e., the air tube assembly 84), and the air tubes (i.e., the first air tube 842 and the second air tube 844) are connected to the airflow assembly support, and are respectively used for air admission and air suction; the air tube (i.e., the third air tube 86) is connected to the tailstock, and is connected to the hollow clamp through an internal pipe, and is used for air admission or air suction; since the hollow clamp can rotate, the air tube (i.e., the third air tube 86) and the internal pipe of the tailstock keep fixed, and they are connected to each other through a rotary joint; the rotary joint is a mature product in the market, and thus the present patent does not relate to its specific structure.

As shown in FIG. 32, the roller moving unit can fix and bring the roller 4 to rotate through the roller clamp (i.e., the first clamp 744) and the hollow clamp (i.e., the second clamp 748), and the hollow plug (i.e., the positioning filler 48) of the roller 4 is connected to the hollow clamp, and a solid shaft head (i.e., the positioning filler 48) is connected to the roller clamp.

The positions of the suction nozzles and the nozzles 822 ensure that their air sucking direction and their air blowing direction are opposite to the linear velocity direction of the printing plate 5, that is, when the roller 4 rotates along the direction as shown by the arrow in FIG. 33, the nozzles 822 spray air upward, and the suction nozzles suck air, which has a function of removing the residues and debris generated by the laser in engraving or punching the printing plate 5.

As shown in FIG. 32 and FIG. 33, the airflow assembly support is located at one side of the roller moving unit, and sucking dust and blowing air are conducted from the upper side and the lower side of the roller 4 and the printing plate 5; the roller 4 with the printing plate 5 should enter the roller moving platform from the other side opposite to the airflow assembly support.

As shown in FIG. 34, the roller moving unit can further have two sets of airflow assembly supports, and this has a function of providing a cleaning and dust sucking airflow when the laser machining is conducted from the left side and the right side of the roller 4 at the same time; the airflow assembly supports are fixed on the roller moving platform in a shape of the inversion of a Chinese character " 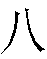 ", and this aims to mount the roller 4 and the printing plate 5 from the top of the roller moving platform; the fixing positions of the suction nozzles on the airflow assembly support are opposite to the fixing positions of the nozzles 822 on the airflow assembly support, and this ensures that the air blowing direction of the nozzles 822 is opposite to the linear velocity direction of the printing plate 5.

When the roller 4 is fixed, the tailstock is first brought by the tailstock linear module stator and the tailstock linear module mover to move on the tailstock guide rail in a direction away from the rotating driving device, and thus a mounting space is generated. When the clamp contacts the roller 4, the tailstock moves again towards the direction of the rotating driving device of the roller, until the hollow clamp withstands the roller 4.

As shown in FIG. 35, when the hollow clamp withstands the hollow shaft head, the valve 484 is opened, the air tube (i.e., the third air tube 86) starts drawing, and the air is drawn to the outside via a spiral through hole (i.e., the first threaded through hole 668) of the adsorbing block 66, the through hole (i.e., the first through hole 4262) of the roller housing 424, the vent hole (i.e., the second vent 4102) of the hollow shaft, the valve 484 and the hollow clamp (i.e., the second hollow clamp 748), and the printing plate 5 is still pressed tightly on the surface of the roller by atmospheric pressure difference.

As shown in FIG. 36, the detecting system comprises a detecting system platform (i.e., the detecting base plate 92), a detecting platform support (i.e., the connecting portion 922) and a detecting device linear module mover 116 are provided below the detecting system platform, and they respectively cooperates with the detecting device guide rail and the detecting device linear module stator 118; the detecting system platform is driven by the detecting device linear module stator 118 and the detecting device linear module mover 116 and moves along the detecting device guide rail.

A detecting head 94 and the adjusting device (i.e., the adjusting portion 924) of the detecting head 94 are further provided on the detecting system platform, and the detecting head 94 can adjust its angle when driven by the adjusting device of the detecting head 94; the adjusting device can adopt an angle adjusting mechanism related to by common mechanical knowledge such as an angle adjusting mechanism driven directly by an electric motor or a crank rocker mechanism, and the present patent only introduces its specific function, but the specific structure is not drawn in FIG. 36.

As shown in FIG. 1, the detecting system platform can move along the detecting device guide rail; when the optical path platform 2 moves along the optical path guide rail 16, the corresponding detecting device further moves synchronously along the detecting device guide rail.

Each optical path platform 2 and each laser optical path 32 are monitored by a corresponding detecting device; each detecting system can only monitor the processing area of one laser optical path 32, and can further monitor the processing areas of multiple laser optical paths 32 in turn using a reciprocating motion method.

FIG. 1 shows that multiple optical path platforms 2 and laser optical paths 32 conduct the processing at the same time; if an optical path platform 2 or an laser optical path 32 fails, as it occupies the area of the marble platform, it will hinder the moving of the remaining optical path platforms 2, and this renders that the processing range of the remaining laser optical paths 32 which work normally cannot cover the entire area of the printing plate 5 in the axial direction; and then, the roller moving unit moves along the roller moving guide rail, and then can compensate the missing processing area.

As shown in FIG. 31, the air tube assembly 84 of the roller moving unit is connected to the internal tube of the base 1, and since the air tube is telescopic, the moving of the roller moving unit on the roller moving guide rail renders the falling off or cracking of the air tube.

As shown in FIG. 37, when the diameter of the printing plate 5 increases, the linear module mover 116 of the processing head 34 moves to the right; when the diameter of the printing plate 5 decreases, the linear module mover 116 of the processing head 34 moves to the left, and this ensures that the distance between the lens and the printing plate 5 always remains a distance required by the laser processing.

As shown in FIG. 37, under the adjustment of the detecting head adjusting device (i.e., the adjusting portion 924), the detecting head 94 can be always aligned with the axis of the printing plate 5; when the roller 4 rotates in the direction as shown by the arrow in FIG. 37, preferably, the detecting head 94 can choose a sensor that can detect the jumping on the surface of the printing plate 5, which has a function of detecting whether the jumping of the printing plate 5 goes beyond a range allowed by the laser processing; the detecting head 94 preferably chooses a visual sensor, which has a function of detecting the quality of the laser processing on the printing plate 5. When the printing plate 5 rotates in the direction as shown by the arrow in FIG. 37, the printing plate 5 is firstly detected by the detecting head 94, then is subjected to the laser processing by the lens, and finally is subjected to the quality detection by the detecting head 94.

As shown in FIG. 37, when the optical path platform 2 moves along the optical path guide rail 16 and jumps up and down due to the error of the guide rail, a vertical adjustment module can adjust the error of upper and lower positions of the optical path platform 2.

FIG. 38 shows a vertical layout of the marble platform which is perpendicular to the base 1; the marble platform has two sets of portal frames 12, which are respectively provided with the detecting device; the moving directions of both the optical path platform 2 and the roller moving platform are perpendicular to the base 1; and two sets of airflow assembly supports are provided on the roller moving platform.

Compared with the horizontal layout as shown in FIG. 1, according to the vertical layout shown in FIG. 38, the number of the laser optical paths 32 which can conduct laser processing within the length range of the printing plate 5 can be doubled, and the processing efficiency is further improved; the vertical layout as shown in FIG. 38 can further be the horizontal layout in which the optical paths are opposite to each other in a horizontal direction and the moving direction of the optical path platform 2 is parallel to the base 1.

As shown in FIG. 39, the components such as the marble platform, the optical path platform 2 and the laser optical path 32 are located within a laser processing area cover piece, and this has a function of isolating the outside and ensuring stable temperature and humidity inside the cover piece; an auxiliary device 102 is provided at the outer side of the cover piece (i.e., the protection cover 10), and its function comprises, while is not limited to, the air refrigeration of the air and relevant components in the cover piece, the air supply and air discharge of the relevant components and the water refrigeration of relevant elements; the auxiliary device 102 is located outside the laser processing area cover piece, which has the function of preventing the heat produced by the working of the auxiliary device 102 from affecting the devices in the laser processing area cover piece.

As shown in FIG. 39, the printing plate 5 is mounted on the roller 4 inside the upper plate preparation area cover piece, which aims to prevent an upper plate operation from interfering with the laser processing, and meanwhile conduct a mounting operation for multiple printing plates 5 in the laser processing process and then improve the production efficiency.

There is a transition area cover piece between the laser processing area cover piece and the upper plate area cover piece and outside them, which is used for protection; each transition area cover piece has two automatic doors (i.e., the door body 1082); when one automatic door is opened while the other automatic door is closed, before the transition area cover piece opens the automatic door, the internal temperature and humidity should be adjusted, which aims to prevent interfering with the environment parameters such as the temperature and the humidity inside the laser processing area cover piece and the upper plate preparation area cover piece during transferring the roller 4 and the printing plate 5.

The roller 4 subjected to the mounting of the printing plate 5 and the roller 4 in which the laser engraving on the printing plate 5 has been accomplished are transferred between the laser processing area cover piece, the upper plate area cover piece and the transition area cover piece through a trolley, an AGV or a crane, preferably, transferring is conducted through the AGV.

According to the laser plate making device provided in the present invention, the optical path platform can mount multiple different processing heads to process the gravure plate and the screen plate, and the laser plate making device can process the gravure plate patterns and the screen plate patterns on one printing plate or multiple printing plates at the same time, and can process the gravure patterns which do not penetrate the printing plate and can further process the screen plate patterns which penetrate the printing plate, and processes patterns through multiple sets of laser devices at the same time, and then improves the processing efficiency of the printing plate; the laser processing head and the laser device can transmit laser therebetween without depending on the optical fiber and thus the present invention has a relatively good adaptation to the type and power of the laser devices; the optical path of the laser device and the processing head can be totally placed on the optical path platform, and the optical path of the laser device can be placed on the marble platform and is connected to the processing head using the flying optical path or the optical fiber, and therefore, during the trial period of the device, if the power or type of the laser device or the transmission mode of the laser changes, the device can adapt flexibly and has a relatively good upgrading and improving ability. By the axial moving of the roller, the problem can be solved that the processing space of the remaining laser devices is occupied and then production is affected if any of multiple sets of laser devices is damaged; the configured roller can fix not only the fully circumferential cylindrical printing plate, but further the non fully circumferential arc-shaped printing plate; in the rotating process of the roller, an axial airflow can be produced in the gap between the inner surface of the printing plate and the roller, which improves the cooling area and the efficiency of the printing plate and reduces the harmful influence caused by the heat produced in the laser engraving process; each set of laser device has the corresponding detecting device which conducts detection to the jumping of the printing plate before the processing and conducts the evaluation to the quality after the processing; the fixing of the printing plate on the roller and the laser engraving on the printing plate are conducted respectively in different cover pieces, and they are isolated by the transition cover piece and thus do not affect each other, and this prevents any harmful influence on the environment factors such as the temperature and the humidity of the laser processing area.

The terms of "first", "second" and "third" are used only for the purpose of description and shall not be understood to indicate or imply any relative importance; and the term of "multiple" indicates two or more, unless otherwise explicitly specified or defined; the terms of "mount", "connected to", "connect with", "fixing" and the like should be understood in a broad sense, for example, the term "connected to" may be a fixed connection, and may further be a removable connection, or an integral connection; and the term of "connect with" may be a direct connection and may further be an indirect connection through an intermediate medium. A person of ordinary skills in the art could understand the specific meanings of the terms in the present invention defined in the appended claims.

Further, it needs to be understood that the orientation or position relations indicated by the terms of "upper", "lower", "left", "right", "front", "rear" and the like are based on the orientation or position relations shown in the accompanying drawings, and they are just intended to conveniently describe the present application and simplify the description, and are not intended to indicate or imply that the devices or units as indicated should have specific orientations or should be configured or operated in specific orientations, and then should not be construed as limitations to the present application.

In the description of the present specification, the descriptions of the phrases "one embodiment", "some embodiments" and "specific embodiments" and the like mean that the specific features, structures, materials or characteristics described in combination with the embodiment(s) or example(s) are included in at least one embodiment or example of the present invention. In the specification, the schematic representation of the above phrases does not necessarily refer to the same embodiment or example. Moreover, the particular features, structures, materials or characteristics described may be combined in a suitable manner in any one or more of the embodiments or examples.

The descriptions above are only preferred embodiments of the present invention, and are not configured to limit the present invention. For a person skilled in the art, the present invention may have various changes and variations which are falling under the scope of protection of the present invention as defined in the appended claims.

## Claims

1. A laser plate making device, comprising:
a base (1);
a roller (4), movably provided on the base (1), wherein the roller (4) is rotatable relative to the base (1), moves along the axial direction of the roller (4), and is provided with a printing plate (5);
at least one optical path platform (2), movably provided on the base (1), wherein each optical path platform (2) is provided with at least one laser machining assembly (3), the processing range of the laser machining assembly (3) covers the moving range of the printing plate (5) in the axial direction through the movement of the optical path platform (2) and/or the roller (4), and
the laser machining assembly (3) is capable of machining, on the printing plate (5), gravure plates and/or screen plates;
**characterized in that** there is a gap between the roller (4) and the printing plate (5), so that, in use, an axial airflow is formed in the gap when the roller (4) rotates;
the roller (4) comprises:
a roller body (42), wherein the roller body (42) is hollow, the two ends of the roller body (42) are respectively provided with an opening (422), and the roller body (42) is sleeved by a roller housing (424);
a positioning filler (48), provided at the two ends of the roller body (42), wherein the positioning filler (48) adapts to the shape of the opening (422), so as to seal the openings (422) of the roller body (42) through the positioning filler (48);
the roller housing (424) is provided with a plurality of positioning grooves (426) extending in an axial direction, each positioning groove (426) is provided with a first through hole (4262) and a first blind hole (4264);
an internal thread is provided on the inner wall of the first blind hole (4264);
the laser plate making device further comprises:
a fixing assembly (6), provided in the positioning groove (426), wherein the fixing assembly (6) is configured to fix the relative position between the printing plate (5) and the roller (4);
the fixing assembly (6) comprises:
a fixing strip (62) and a sealing strip (64),
a portion of the positioning grooves (426) which are covered by the projection of the printing plate (5) on the roller housing (424) are provided with the fixing strips (62), the printing plate (5) is fixed through the fixing strips (62), and each positioning groove (426) is provided with the fixing strip (62) or the sealing strip (64);
the fixing strip (62) presents a rectangular strip shape, and is provided with a plurality of first connecting hole assemblies (622), and
adsorbing blocks (66), provided on the fixing strips (62), and the adsorbing blocks (66) are connected with the fixing strips (62) through the first connecting hole assemblies (622).

2. The laser plate making device according to claim 1, wherein, the base (1) is provided with a portal frame (12), the two sides of the portal frame (12) are respectively provided with a roller guide rail (14) provided corresponding to the roller (4) and an optical path guide rail (16) provided corresponding to the optical path platform (2), to achieve the movement of the roller (4) in the axial direction through the roller guide rail (14) and achieve the movement of the optical path platform (2) through the optical path guide rail (16).

3. The laser plate making device according to claim 2, wherein, the extending direction of the optical path guide rail (16) is the same with the extending direction of the roller guide rail (14).

4. The laser plate making device according to claim 2, further comprising:
a support guide portion (22), provided below the optical path platform (2), and the moving path of the optical path platform (2) is limited through the cooperation between the support guide portion (22) and the optical path guide rail (16).

5. The laser plate making device according to claim 1, wherein,
the optical path platform (2) achieves a straight line movement on the base (1) through a linear motor; or
the optical path platform (2) achieves a straight line movement on the base (1) through a screw nut transmitting mechanism, or
the optical path platform (2) achieves the straight line movement through a pinion and rack mechanism with an anti-backlash design.

6. The laser plate making device according to claim 1, wherein, the laser machining assembly (3) comprises:
a laser optical path (32), provided on the optical path platform (2);
a processing head (34), wherein one end of the processing head (34) is electrically connected to the laser optical path (32), and the processing head (34) is provided corresponding to the printing plate (5), to achieve the processing through emitting a laser to the printing plate (5) by the processing head (34).

7. The laser plate making device according to claim 6, wherein, one end of the optical path platform (2) is provided with a processing mounting plate (24), the processing head (34) is provided on the processing mounting plate (24), and the processing head (34) is able to move in a vertical direction with respect to the processing mounting plate (24),
Wherein, the processing mounting plate (24) is able to drive the processing head (34) to move forward and backward on the optical path platform (2) along the light emitting direction of the processing head (34).

8. The laser plate making device according to claim 6, wherein, the laser optical path (32) comprises:
a laser generator (322), used for generating laser;
at least one optical path protection tube (324), wherein the optical path protection tube (324) is hollow, one end of the optical path protection tube (324) is connected to the laser generator (322), and the laser is propagated in the optical path protection tube (324).

9. The laser plate making device according to claim 8, wherein, the laser optical path (32) further comprises:
at least one reflective sheet (326), wherein direction of the optical path of the laser is able to be changed under the effect of the reflective sheet (326);
wherein, the optical path protection tube (324) is provided between any two adjacent reflective sheets (326).

10. The laser plate making device according to claim 8, wherein, the laser optical path (32) further comprises:
a beam expanding and collimating device (328), provided on the optical path of the laser generated from the laser generator (322), wherein the beam expanding and collimating device (328) is able to compress the divergence angle of the laser;
a shaping device (3210), provided on the optical path of the laser generated from the laser generator (322), wherein the shaping device (3210) is able to change the arrangement uniformity of the intensity of a laser beam;
a focus adjusting device (3212), provided on the optical path of the laser generated from the laser generator (322), wherein the focusing adjusting device (3212) is able to adjust the position of the focus point of the laser;
a detecting device, provided on the optical path of the laser generated from the laser generator (322), wherein the detecting device is able to achieve one or multiple of a power detection, a focus point detection and an orientation detection for the laser,
wherein, the optical path propagation between any two of the beam expanding and collimating device (328), the shaping device (3210), the focus adjusting device (3212) and the detecting device is achieved by the optical path protection tube (324).

11. The laser plate making device according to claim 10, wherein, the laser generated from the laser generator (322) is emitted into the processing head (34) after passing the beam expanding and collimating device (328), the shaping device (3210) and the focus adjusting device (3212).

12. The laser plate making device according to claim 8, further comprising:
a beam splitter (36), provided on the optical path platform (2), and the laser flowing to the beam splitter (36) emits at least two optical paths under the effect of the beam splitter (36),
wherein the optical paths emitted out of the beam splitter (36) correspond to at least one processing head (34).

13. The laser plate making device according to claim 6, wherein, the processing head (34) comprises:
at least one reflective sheet (326), an output head (342) and a focusing device (344),
wherein, the laser emitted into the processing head (34) from the laser optical path (32) is emitted to the printing plate (5) to achieve processing after passing the reflective sheet (326), the output head (342) and the focusing device (344) successively.

14. The laser plate making device according to claim 1, wherein, the plurality of positioning grooves (426) are uniformly provided in the roller housing (424), the first through hole (4262) runs through both the inner side and the outer side of the roller housing (424), and the first through holes (4262) and the first blind holes (4264) are provided in the positioning groove (426) alternatively.

15. The laser plate making device according to claim 1, wherein, the roller body (42) is formed with a hollow shaft (410) therein, the hollow shaft (410) separates the space inside the roller body (42) along the radial direction into a hollow cavity (412) communicating with the opening (422) and a support cavity (414); the roller (4) further comprises:
a rib plate (416), provided in the support cavity (414), wherein the rib plate (416) is respectively connected to the inner wall of the roller body (42) and the outer wall of the hollow shaft (410) at the two sides distributed along the radial direction.

16. The laser plate making device according to claim 15, wherein, a plurality of first vents (4162) are provided in the rib plate (416), and a plurality of second vents (4102) are provided in the hollow shaft (410).

17. The laser plate making device according to claim 1, wherein, the rotating axis of the positioning filler (48) is provided on the axis of the roller body (42), and a positioning cone hole (482) is provided at the rotating axis of the positioning filler (48).

18. The laser plate making device according to claim 17, wherein, a valve (484) is provided inside the positioning filler (48) which is provided at one end of the roller body (42), and the printing plate (5) is able to be limited to be adsorbed to the roller (4) or to fall off the roller (4) through the valve (484).

19. The laser plate making device according to claim 1, wherein, the first connecting hole assembly (622) comprises:
a first step through hole (6222), and a second blind hole (6226) arranged outside the first step through hole (6222) along the radial direction;
a second step through hole (6224), provided between any two adjacent first step through holes (6222), wherein the second step through hole (6224) is arranged corresponding to the first blind hole (4264); and
a third sealing ring groove (624), winding the side of the fixing strip (62) away from the first step through hole (6222),
wherein, the inner wall of the second blind hole (6226) is provided with an internal thread.

20. The laser plate making device according to claim 19, wherein, there are two second blind holes (6226) in the first connecting hole assembly (622), the two second blind holes (6226) are symmetrically arranged outside the first step through hole (6222), and the central axes of the two second blind holes (6226) are not perpendicular to the sidewall of the fixing strips (62).

21. The laser plate making device according to claim 19, wherein, the adsorbing block (66) comprises:
an adsorbing block body (662);
a first positioning column (664), provided on the adsorbing block body (662), wherein the first positioning column (664) is arranged corresponding to the first step through hole (6222);
a first positioning groove (666), provided at the side of the adsorbing block body (662) close to the fixing strip (62), wherein the shape of the first positioning groove (666) adapts to the shape of the fixing strip (62);
a first threaded through hole (668), provided in the first positioning column (664), wherein the first threaded through hole (668) coincides with the axis of the first step through hole (6222); and
a fourth step through hole (6610), disposed corresponding to the second blind hole (6226).

22. The laser plate making device according to claim 21, further comprising:
a first sealing ring groove (6612), provided to wind the first positioning column (664).

23. The laser plate making device according to claim 21, wherein, a third step through hole (642) and a third blind hole (644) are provided at an interval in the length direction of the sealing strip (64),
wherein the inner wall of the third blind hole (644) is provided with an internal thread, and a fourth sealing ring groove (646) is provided at the other side of the sealing strip (64) opposite to the third blind hole (644);
further comprising:
an isolating block (68), provided on the fixing strip (62).

24. The laser plate making device according to claim 23, wherein, the isolating block (68) comprises:
an isolating block body (682);
a second positioning column (684), provided on the isolating block body (682), wherein the second positioning column (684) is disposed corresponding to the third step through hole (642);
a second positioning groove (686), provided at the side of the isolating block body (682) close to the fixing assembly (6), and the shape of the positioning groove (426) matches the shape of the fixing assembly (6);
a fifth step through hole (688), disposed corresponding to the second blind hole (6226), wherein, the connection between the isolating block (68) and the fixing strip (62) is achieved through passing a connecting member (610) through the fifth step through hole (688) and the second blind hole (6226).

25. The laser plate making device according to claim 24, further comprising:
a second sealing ring groove (6810), provided to wind the second positioning column (684).

26. The laser plate making device according to claim 24, wherein, the minimum distance between the second positioning groove (686) and the side of the isolating block body (682) away from the fixing assembly (6) is less than the minimum distance between the first positioning groove (666) and the side of the adsorbing block body (662) away from the fixing strip (62), and there is a gap between the isolating block (68) and the printing plate (5).

27. The laser plate making device according to claim 21, wherein, the printing plate (5) presents an arc shape, at least one side of the printing plate (5) in the circumferential direction is formed with a folded edge (52) bending towards the roller (4), and the two sides of the printing plate (5) along the axial direction are respectively provided with the second through holes (54) corresponding to the first threaded through holes (668).

28. The laser plate making device according to claim 1, wherein,
the printing plate (5) presents a cylindrical shape,
wherein, each positioning groove (426) is provided with the fixing strip (62), and the curvature radius corresponding to the adsorbing block (66) of the fixing strip (62) is not greater than the radius of the inner surface of the printing plate (5); and
the size of the printing plate (5) is able to be changed according to the rising and falling of the temperature; when the printing plate (5) is mounted on the roller (4), the printing plate (5) is heated and the inner diameter of the printing plate (5) is greater than the outer diameter of the roller (4), and then the printing plate (5) is cooled and the printing plate (5) is attached to the roller (4).

29. The laser plate making device according to claim 23, wherein,
under the effect of laser machining assembly (3), the printing plate (5) forms a line pattern (110) sinking from one side to the other side; and/or
under the effect of laser machining assembly (3), the printing plate (5) forms a hole pattern (112) which penetrates the two side of the printing plate (5),
wherein, the adsorbing blocks (66) are provided in the positioning groove (426) in the roller (4) corresponding to the line pattern (110), and the isolating blocks (68) are provided in the positioning groove (426) in the roller (4) corresponding to the hole pattern (112).

30. The laser plate making device according to claim 23, wherein, the printing plate (5) presents a nonfully circumferential arc shape, and the laser plate making device further comprises:
a counterweight block (614), detachably connected to the sealing strip (64),
wherein the counterweight block (614) and the printing plate (5) are respectively provided at the two sides of the axis of the roller (4);
a sixth step through hole (6142), provided in the counterweight block (614), wherein the axis of the sixth step through hole (6142) coincides with the axis of the third blind hole (644), and
wherein, the connection between the counterweight block (614) and the sealing strip (64) is achieved through passing a fastener through the sixth step through hole (6142) and the third blind hole (644).

31. The laser plate making device according to claim 2, further comprising:
a roller moving assembly (7), movably provided on the base (1), wherein the roller moving assembly (7) is provided with the roller (4), to achieve the moving of the roller (4) with respect to the base (1) through the cooperation between the roller moving assembly (7) and the roller guide rail (14).

32. The laser plate making device according to claim 31, wherein, the roller moving assembly (7) comprises:
a moving base plate (72);
a rotating assembly (74), provided on the moving base plate (72), wherein the rotating assembly (74) comprises:
a rotating drive member (742), and a first clamp (744) electrically connected to the rotating drive member (742);
a passive rotating member (746), provided opposite to the rotating drive member (742), wherein the passive rotating member (746) is able to move on the moving base plate (72), the passive rotating member (746) is provided with a second clamp (748) thereon, and under the effect of the first clamp (744) and the second clamp (748), the roller (4) is connected to the rotating assembly (74), and
wherein, the first clamp (744) is able to rotate under the effect of the rotating drive member (742).

33. The laser plate making device according to claim 32, further comprising:
a jet assembly (8) provided on the moving base plate (72) corresponding to the roller (4), wherein the jet assembly (8) is provided at one side of the rotating assembly (74), and the working range of the jet assembly (8) covers the printing plate (5).

34. The laser plate making device according to claim 33, wherein, the jet assembly (8) comprises:
an airflow support (82), wherein the size of the airflow support (82) adapts to the size of the roller (4);
wherein, a plurality of nozzles (822) are provided in the airflow support (82), and in the axial direction of the roller (4), the working range of the nozzles covers the printing plate (5).

35. The laser plate making device according to claim 34, further comprising:
an air tube assembly (84), comprising:
a first air tube (842), communicating with the airflow support (82), wherein, under the effect of the first air tube (842), a portion of the nozzles (822) is able to spray air outward;
a second air tube (844), communicating with the airflow support (82), wherein, under the effect of the second air tube (844), the other portion of the nozzles (822) is able to suck air from the outside to the inside;
wherein, the nozzles (822) are provided at the two sides of the airflow support (82) along the radial direction of the roller (4),
when the roller (4) rotates downward, the nozzles (822) under the roller (4) spray air upward, and the nozzles (822) above the roller (4) suck air, or
when the roller (4) rotates upward, the nozzles (822) above the roller (4) spray air downward, and the nozzles (822) under the roller (4) suck air.

36. The laser plate making device according to claim 35, wherein, there are two airflow supports (82), the distance between the two airflow supports (82) increases gradually from bottom to top, and the roller (4) is provided between the two airflow supports (82).

37. The laser plate making device according to claim 33, wherein, the passive rotating member (746) is hollow, the second clamp (748) is a hollow clamp, and the laser plate making device further comprises:
a third air tube (86), connected to the passive rotating member (746), and under the effect of the third air tube (86), the passive rotating member (746) is able to be configured to discharge air to the roller (4) or suck air from the roller (4).

38. The laser plate making device according to claim 2, wherein, the top wall and/or the side wall of the portal frame (12) is provided with a detecting guide rail (122), and the laser plate making device further comprises:
a detecting assembly (9), provided on the detecting guide rail (122), wherein the detecting assembly (9) is able to detect the jumping of the printing plate (5) and the machining quality of the printing plate (5);
wherein, the detecting assembly (9) comprises:
a detecting base plate (92), wherein the detecting base plate (92) comprises a connecting portion (922) and an adjusting portion (924) which are connected to each other, the connecting portion (922) is configured to cooperate with the detecting guide rail (122) to achieve the moving of the detecting base plate (92);
at least one detecting head (94), movably provided on the adjusting portion (924), and the detecting direction of the detecting head (94) faces the roller (4); and/or
the laser plate making device further comprising:
a protective screen (18), arranged corresponding to the portal frame (12), and through the protective screen (18), the space where the optical path platform (2) is located is independent from the space where the roller (4) is located.

39. A plate making system, comprising:
the laser plate making device in any of claim 1 to claim 38;
a protection cover (10), at least sleeved outside the base (1) of the laser plate making device;
an auxiliary device (102), provided outside the protection cover (10), wherein the auxiliary device (102) communicates with the protection cover (10), to control the device temperature and the air temperature in the protection cover (10) through the auxiliary device (102).

40. The plate making system according to claim 39, further comprising:
an upper plate area, arranged independently from the base (1) of the laser plate making device, wherein the upper plate area is provided outside the protection cover (10); and
an upper plate cover (106), sleeved outside the upper plate area, wherein the printing plate (5) of the laser plate making device is mounted on the roller (4) of the laser plate making device within the upper plate area;
a transition cover (108), provided at one side of the upper plate cover (106) and/or the protection cover (10),
wherein, the transition cover (108) is opened with two door bodies (1082), and one of two door bodies (1082) corresponding to each transition cover opens, while the other door body (1082) closes.

## Patentansprüche

1. Eine Laserplattenherstellungsvorrichtung, umfassend:
eine Basis (1);
eine Rolle (4), beweglich vorgesehen auf der Basis (1), wobei die Rolle (4) relativ zu der Basis (1) rotierbar ist, sich entlang der axialen Richtung der Rolle (4) bewegt, und mit einer Druckplatte (5) versehen ist;
mindestens eine Optikpfadplattform (2), beweglich vorgesehen auf der Basis (1), wobei jede Optikpfadplattform (2) mit mindestens einer
Laserbearbeitungsbaugruppe (3) versehen ist, der Bearbeitungsbereich der Laserbearbeitungsbaugruppe (3) den Bewegungsbereich der Druckplatte (5) in der axialen Richtung durch die Bewegung der Optikpfadplattform (2) und/oder der Rolle (4) abdeckt, und
die Laserbearbeitungsbaugruppe (3) fähig ist, auf der Druckplatte (5) Tiefdruckplatten und/oder Siebplatten zu bearbeiten;
**dadurch gekennzeichnet, dass** es einen Spalt zwischen der Rolle (4) und der Druckplatte (5) gibt, sodass, im Gebrauch, ein axialer Luftstrom in dem Spalt gebildet wird, wenn die Rolle (4) rotiert;
die Rolle (4) umfasst:
einen Rollenkörper (42), wobei der Rollenkörper (42) hohl ist, die zwei Enden des Rollenkörpers (42) jeweils mit einer Öffnung (422) versehen sind, und der Rollenkörper (42) von einem Rollengehäuse (424) umhüllt ist;
einen Positionierungsfüller (48), vorgesehen an den zwei Enden des Rollenkörpers (42), wobei der Positionierungsfüller (48) an die Form der Öffnung (422) angepasst ist, um dadurch die Öffnungen (422) des Rollenkörpers (42) durch den Positionierungsfüller (48) zu versiegeln;
das Rollengehäuse (424) ist mit einer Vielzahl von Positionierungsnuten (426) versehen, die sich in einer axialen Richtung erstrecken, jede Positionierungsnut (426) ist mit einem ersten Durchgangsloch (4262) und einem ersten Sackloch (4264) versehen;
ein Innengewinde ist auf der Innenwand des ersten Sacklochs (4264) vorgesehen;
die Laserplattenherstellungsvorrichtung umfasst ferner:
eine Befestigungsanordnung (6), vorgesehen in der Positionierungsnut (426), wobei die Befestigungsanordnung (6) konfiguriert ist, die relative Position zwischen der Druckplatte (5) und der Rolle (4) zu befestigen;
die Befestigungsanordnung (6) umfasst:
einen Befestigungsstreifen (62) und einen Dichtungsstreifen (64),
ein Teil der Positionierungsnuten (426), die durch die Projektion der Druckplatte (5) auf dem Rollengehäuse (424) abgedeckt sind, sind mit den Befestigungsstreifen (62) versehen, die Druckplatte (5) wird durch die Befestigungsstreifen (62) befestigt, und jede Positionierungsnut (426) ist mit dem Befestigungsstreifen (62) oder dem Dichtungsstreifen (64) versehen;
der Befestigungsstreifen (62) stellt eine rechteckige Streifenform dar, und ist mit einer Vielzahl von ersten Verbindungsloch-Anordnungen (622) versehen; und Adsorptionsblöcke (66), vorgesehen auf den Befestigungsstreifen (62), und die Adsorptionsblöcke (66) sind mit den Befestigungsstreifen (62) durch die ersten Verbindungsloch-Anordnungen (622) verbunden.

2. Die Laserplattenherstellungsvorrichtung nach Anspruch 1, wobei die Basis (1) mit einem Portalrahmen (12) versehen ist, die zwei Seiten des Portalrahmens (12) jeweils mit einer Rollen-Führungsschiene (14), vorgesehen entsprechend der Rolle (4), und einer Optikpfad-Führungsschiene (16), vorgesehen entsprechend der Optikpfadplattform (2), versehen sind, um die Bewegung der Rolle (4) in der axialen Richtung durch die Rollen-Führungsschiene (14) zu erreichen und die Bewegung der Optikpfadplattform (2) durch die Optikpfad-Führungsschiene (16) zu erreichen.

3. Die Laserplattenherstellungsvorrichtung nach Anspruch 2, wobei die Erstreckungsrichtung der Optikpfad-Führungsschiene (16) dieselbe ist wie die Erstreckungsrichtung der Rollen-Führungsschiene (14).

4. Die Laserplattenherstellungsvorrichtung nach Anspruch 2, ferner umfassend:
einen Stützführungsabschnitt (22), vorgesehen unter der Optikpfadplattform (2), und der Bewegungsweg der Optikpfadplattform (2) wird durch die Zusammenarbeit zwischen dem Stützführungsabschnitt (22) und der Optikpfad-Führungsschiene (16) begrenzt.

5. Die Laserplattenherstellungsvorrichtung nach Anspruch 1, wobei,
die Optikpfadplattform (2) eine geradlinige Bewegung auf der Basis (1) durch einen Linearmotor erreicht; oder
die Optikpfadplattform (2) eine geradlinige Bewegung auf der Basis (1) durch einen Schraubenmutter-Übertragungsmechanismus erreicht; oder
die Optikpfadplattform (2) die geradlinige Bewegung durch einen Ritzel-und-Zahnstangen-Mechanismus mit einem Anti-Rückschlag-Design erreicht.

6. Die Laserplattenherstellungsvorrichtung nach Anspruch 1, wobei die Laserbearbeitungsbaugruppe (3) umfasst:
einen Laseroptikpfad (32), vorgesehen auf der Optikpfadplattform (2);
einen Bearbeitungskopf (34), wobei ein Ende des Bearbeitungskopfs (34) elektrisch mit dem Laseroptikpfad (32) verbunden ist, und der Bearbeitungskopf (34) entsprechend der Druckplatte (5) vorgesehen ist, um die Bearbeitung durch Emittieren eines Lasers zu der Druckplatte (5) durch den Bearbeitungskopf (34) zu erreichen.

7. Die Laserplattenherstellungsvorrichtung nach Anspruch 6, wobei ein Ende der Optikpfadplattform (2) mit einer Bearbeitungsmontageplatte (24) versehen ist, der Bearbeitungskopf (34) auf der Bearbeitungsmontageplatte (24) vorgesehen ist, und der Bearbeitungskopf (34) fähig ist, sich in einer vertikalen Richtung relativ zu der Bearbeitungsmontageplatte (24) zu bewegen,
wobei die Bearbeitungsmontageplatte (24) fähig ist, den Bearbeitungskopf (34) anzutreiben, sich vorwärts und rückwärts auf der Optikpfadplattform (2) entlang der Lichtemissionsrichtung des Bearbeitungskopfs (34) zu bewegen.

8. Die Laserplattenherstellungsvorrichtung nach Anspruch 6, wobei der Laseroptikpfad (32) umfasst:
einen Lasergenerator (322), verwendet zum Erzeugen von Laser;
mindestens ein Optikpfadschutzrohr (324), wobei das Optikpfadschutzrohr (324) hohl ist, ein Ende des Optikpfadschutzrohrs (324) mit dem Lasergenerator (322) verbunden ist, und der Laser in dem Optikpfadschutzrohr (324) übertragen wird.

9. Die Laserplattenherstellungsvorrichtung nach Anspruch 8, wobei der Laseroptikpfad (32) ferner umfasst:
mindestens ein Reflexionsblatt (326), wobei die Richtung des Optikpfads des Lasers unter dem Effekt des Reflexionsblatts (326) geändert werden kann;
wobei das Optikpfadschutzrohr (324) zwischen beliebigen zwei benachbarten Reflexionsblättern (326) vorgesehen ist.

10. Die Laserplattenherstellungsvorrichtung nach Anspruch 8, wobei der Laseroptikpfad (32) ferner umfasst:
eine Strahlaufweitungs- und Kollimationsvorrichtung (328), vorgesehen auf dem Optikpfad des von dem Lasergenerator (322) erzeugten Lasers, wobei die Strahlaufweitungs- und Kollimationsvorrichtung (328) fähig ist, den Divergenzwinkel des Lasers zu komprimieren;
eine Formungsvorrichtung (3210), vorgesehen auf dem Optikpfad des von dem Lasergenerator (322) erzeugten Lasers, wobei die Formungsvorrichtung (3210) fähig ist, die Anordnungsuniformität der Intensität eines Laserstrahls zu ändern; eine Fokusanpassungsvorrichtung (3212), vorgesehen auf dem Optikpfad des von dem Lasergenerator (322) erzeugten Lasers, wobei die Fokusanpassungsvorrichtung (3212) fähig ist, die Position des Fokuspunkts des Lasers anzupassen;
eine Erfassungsvorrichtung, vorgesehen auf dem Optikpfad des von dem Lasergenerator (322) erzeugten Lasers, wobei die Erfassungsvorrichtung fähig ist, eines oder mehrere von einer Leistungserfassung, einer Fokuspunkterfassung und einer Orientierungserfassung für den Laser zu erreichen,
wobei die Optikpfadübertragung zwischen beliebigen zwei der Strahlaufweitungs- und Kollimationsvorrichtung (328), der Formungsvorrichtung (3210), der Fokusanpassungsvorrichtung (3212) und der Erfassungsvorrichtung durch das Optikpfadschutzrohr (324) erreicht wird.

11. Die Laserplattenherstellungsvorrichtung nach Anspruch 10, wobei der von dem Lasergenerator (322) erzeugte Laser in den Bearbeitungskopf (34) emittiert wird, nachdem er die Strahlaufweitungs- und Kollimationsvorrichtung (328), die Formungsvorrichtung (3210) und die Fokusanpassungsvorrichtung (3212) passiert hat.

12. Die Laserplattenherstellungsvorrichtung nach Anspruch 8, ferner umfassend:
einen Strahlteiler (36), vorgesehen auf der Optikpfadplattform (2), und der zu dem Strahlteiler (36) fließende Laser emittiert mindestens zwei Optikpfade unter dem Effekt des Strahlteilers (36),
wobei die aus dem Strahlteiler (36) emittierten Optikpfade mindestens einem Bearbeitungskopf (34) entsprechen.

13. Die Laserplattenherstellungsvorrichtung nach Anspruch 6, wobei der Bearbeitungskopf (34) umfasst:
mindestens ein Reflexionsblatt (326), einen Ausgabekopf (342) und eine Fokussierungsvorrichtung (344),
wobei der aus dem Laseroptikpfad (32) in den Bearbeitungskopf (34) emittierte Laser zu der Druckplatte (5) emittiert wird, um die Bearbeitung zu erreichen, nachdem er nacheinander das Reflexionsblatt (326), den Ausgabekopf (342) und die Fokussierungsvorrichtung (344) passiert hat.

14. Die Laserplattenherstellungsvorrichtung nach Anspruch 1, wobei die Vielzahl von Positionierungsnuten (426) gleichmäßig in dem Rollengehäuse (424) vorgesehen sind, das erste Durchgangsloch (4262) sowohl durch die Innenseite als auch die Außenseite des Rollengehäuses (424) hindurchläuft, und die ersten Durchgangslöcher (4262) und die ersten Sacklöcher (4264) abwechselnd in der Positionierungsnut (426) vorgesehen sind.

15. Die Laserplattenherstellungsvorrichtung nach Anspruch 1, wobei der Rollenkörper (42) mit einer Hohlwelle (410) darin gebildet ist, die Hohlwelle (410) den Raum innerhalb des Rollenkörpers (42) entlang der radialen Richtung in einen Hohlraum (412), kommunizierend mit der Öffnung (422), und einen Stützraum (414) trennt; die Rolle (4) ferner umfasst:
eine Rippenplatte (416), vorgesehen in dem Stützraum (414), wobei die Rippenplatte (416) jeweils mit der Innenwand des Rollenkörpers (42) und der Außenwand der Hohlwelle (410) an den zwei Seiten verbunden ist, verteilt entlang der radialen Richtung.

16. Die Laserplattenherstellungsvorrichtung nach Anspruch 15, wobei eine Vielzahl von ersten Entlüftungen (4162) in der Rippenplatte (416) vorgesehen ist, und eine Vielzahl von zweiten Entlüftungen (4102) in der Hohlwelle (410) vorgesehen ist.

17. Die Laserplattenherstellungsvorrichtung nach Anspruch 1, wobei die Rotationsachse des Positionierungsfüllers (48) auf der Achse des Rollenkörpers (42) vorgesehen ist, und ein Positionierungs-Kegelloch (482) an der Rotationsachse des Positionierungsfüllers (48) vorgesehen ist.

18. Die Laserplattenherstellungsvorrichtung nach Anspruch 17, wobei ein Ventil (484) innerhalb des Positionierungsfüllers (48) vorgesehen ist, welcher an einem Ende des Rollenkörpers (42) vorgesehen ist, und die Druckplatte (5) fähig ist, begrenzt zu werden, um an die Rolle (4) adsorbiert zu werden oder von der Rolle (4) abzufallen durch das Ventil (484).

19. Die Laserplattenherstellungsvorrichtung nach Anspruch 1, wobei die erste Verbindungsloc h-Anordnung (622) umfasst:
ein erstes Stufen-Durchgangsloch (6222), und ein zweites Sackloch (6226), angeordnet außerhalb des ersten Stufen-Durchgangslochs (6222) entlang der radialen Richtung;
ein zweites Stufen-Durchgangsloch (6224), vorgesehen zwischen beliebigen zwei benachbarten ersten Stufen-Durchgangslöchern (6222), wobei das zweite Stufen-Durchgangsloch (6224) entsprechend dem ersten Sackloch (4264) angeordnet ist; und
eine dritte Dichtungsringnut (624), windend die Seite des Befestigungsstreifens (62) weg von dem ersten Stufen-Durchgangsloch (6222),
wobei die Innenwand des zweiten Sacklochs (6226) mit einem Innengewinde versehen ist.

20. Die Laserplattenherstellungsvorrichtung nach Anspruch 19, wobei es zwei zweite Sacklöcher (6226) in der ersten Verbindungsloc h-Anordnung (622) gibt, die zwei zweiten Sacklöcher (6226) symmetrisch außerhalb des ersten Stufen-Durchgangslochs (6222) angeordnet sind, und die Zentralachsen der zwei zweiten Sacklöcher (6226) nicht senkrecht zu der Seitenwand der Befestigungsstreifen (62) sind.

21. Die Laserplattenherstellungsvorrichtung nach Anspruch 19, wobei der Adsorptionsblock (66) umfasst:
einen Adsorptionsblockkörper (662);
eine erste Positionierungssäule (664), vorgesehen auf dem Adsorptionsblockkörper (662), wobei die erste Positionierungssäule (664) entsprechend dem ersten Stufen-Durchgangsloch (6222) angeordnet ist;
eine erste Positionierungsnut (666), vorgesehen an der Seite des Adsorptionsblockkörpers (662) nahe zu dem Befestigungsstreifen (62), wobei die Form der ersten Positionierungsnut (666) an die Form des Befestigungsstreifens (62) angepasst ist;
ein erstes Gewinde-Durchgangsloch (668), vorgesehen in der ersten Positionierungssäule (664), wobei das erste Gewinde-Durchgangsloch (668) mit der Achse des ersten Stufen-Durchgangslochs (6222) zusammenfällt; und
ein viertes Stufen-Durchgangsloch (6610), angeordnet entsprechend dem zweiten Sackloch (6226).

22. Die Laserplattenherstellungsvorrichtung nach Anspruch 21, ferner umfassend:
eine erste Dichtungsringnut (6612), vorgesehen, um die erste Positionierungssäule (664) zu winden.

23. Die Laserplattenherstellungsvorrichtung nach Anspruch 21, wobei ein drittes Stufen-Durchgangsloch (642) und ein drittes Sackloch (644) mit einem Abstand in der Längenrichtung des Dichtungsstreifens (64) vorgesehen sind,
wobei die Innenwand des dritten Sacklochs (644) mit einem Innengewinde versehen ist, und eine vierte Dichtungsringnut (646) an der anderen Seite des Dichtungsstreifens (64) gegenüber dem dritten Sackloch (644) vorgesehen ist; ferner umfassend:
einen Isolationsblock (68), vorgesehen auf dem Befestigungsstreifen (62).

24. Die Laserplattenherstellungsvorrichtung nach Anspruch 23, wobei der Isolationsblock (68) umfasst:
einen Isolationsblockkörper (682);
eine zweite Positionierungssäule (684), vorgesehen auf dem Isolationsblockkörper (682), wobei die zweite Positionierungssäule (684) entsprechend dem dritten Stufen-Durchgangsloch (642) angeordnet ist;
eine zweite Positionierungsnut (686), vorgesehen an der Seite des Isolationsblockkörpers (682) nahe zu der Befestigungsanordnung (6), und die Form der Positionierungsnut (426) mit der Form der Befestigungsanordnung (6) übereinstimmt;
ein fünftes Stufen-Durchgangsloch (688), angeordnet entsprechend dem zweiten Sackloch (6226), wobei die Verbindung zwischen dem Isolationsblock (68) und dem Befestigungsstreifen (62) erreicht wird durch Durchführen eines Verbindungselements (610) durch das fünfte Stufen-Durchgangsloch (688) und das zweite Sackloch (6226).

25. Die Laserplattenherstellungsvorrichtung nach Anspruch 24, ferner umfassend:
eine zweite Dichtungsringnut (6810), vorgesehen, um die zweite Positionierungssäule (684) zu winden.

26. Die Laserplattenherstellungsvorrichtung nach Anspruch 24, wobei der minimale Abstand zwischen der zweiten Positionierungsnut (686) und der Seite des Isolationsblockkörpers (682) weg von der Befestigungsanordnung (6) kleiner ist als der minimale Abstand zwischen der ersten Positionierungsnut (666) und der Seite des Adsorptionsblockkörpers (662) weg von dem Befestigungsstreifen (62), und es einen Spalt zwischen dem Isolationsblock (68) und der Druckplatte (5) gibt.

27. Die Laserplattenherstellungsvorrichtung nach Anspruch 21, wobei die Druckplatte (5) eine Bogenform präsentiert, mindestens eine Seite der Druckplatte (5) in der Umfangsrichtung mit einer gefalteten Kante (52) gebildet ist, die sich zu der Rolle (4) biegt, und die zwei Seiten der Druckplatte (5) entlang der axialen Richtung jeweils mit den zweiten Durchgangslöchern (54) versehen sind, entsprechend den ersten Gewinde-Durchgangslöchern (668).

28. Die Laserplattenherstellungsvorrichtung nach Anspruch 1, wobei,
die Druckplatte (5) eine zylindrische Form präsentiert,
wobei jede Positionierungsnut (426) mit dem Befestigungsstreifen (62) versehen ist, und der Krümmungsradius entsprechend dem Adsorptionsblock (66) des Befestigungsstreifens (62) nicht größer ist als der Radius der Innenoberfläche der Druckplatte (5); und
die Größe der Druckplatte (5) fähig ist, geändert zu werden entsprechend dem Steigen und Fallen der Temperatur; wenn die Druckplatte (5) auf der Rolle (4) montiert ist, wird die Druckplatte (5) erhitzt und der Innendurchmesser der Druckplatte (5) ist größer als der Außendurchmesser der Rolle (4), und dann wird die Druckplatte (5) gekühlt und die Druckplatte (5) wird an die Rolle (4) angefügt.

29. Die Laserplattenherstellungsvorrichtung nach Anspruch 23, wobei, unter dem Effekt der Laserbearbeitungsbaugruppe (3) die Druckplatte (5) ein Linienmuster (110) bildet, sinkend von einer Seite zu der anderen Seite; und/oder unter dem Effekt der Laserbearbeitungsbaugruppe (3) die Druckplatte (5) ein Lochmuster (112) bildet, welches die zwei Seiten der Druckplatte (5) durchdringt, wobei die Adsorptionsblöcke (66) in der Positionierungsnut (426) in der Rolle (4) vorgesehen sind, entsprechend dem Linienmuster (110), und die Isolationsblöcke (68) in der Positionierungsnut (426) in der Rolle (4) vorgesehen sind, entsprechend dem Lochmuster (112).

30. Die Laserplattenherstellungsvorrichtung nach Anspruch 23, wobei die Druckplatte (5) eine nicht-vollständig-umfangsgerichtete Bogenform präsentiert, und die Laserplattenherstellungsvorrichtung ferner umfasst:
einen Gegengewichtsblock (614), lösbar verbunden mit dem Dichtungsstreifen (64),
wobei der Gegengewichtsblock (614) und die Druckplatte (5) jeweils an den zwei Seiten der Achse der Rolle (4) vorgesehen sind;
ein sechstes Stufen-Durchgangsloch (6142), vorgesehen in dem Gegengewichtsblock (614), wobei die Achse des sechsten Stufen-Durchgangslochs (6142) mit der Achse des dritten Sacklochs (644) zusammenfällt, und
wobei die Verbindung zwischen dem Gegengewichtsblock (614) und dem Dichtungsstreifen (64) erreicht wird durch Durchführen eines Befestigungselements durch das sechste Stufen-Durchgangsloch (6142) und das dritte Sackloch (644).

31. Die Laserplattenherstellungsvorrichtung nach Anspruch 2, ferner umfassend:
eine Rollenbewegungsanordnung (7), beweglich vorgesehen auf der Basis (1), wobei die Rollenbewegungsanordnung (7) mit der Rolle (4) versehen ist, um die Bewegung der Rolle (4) relativ zu der Basis (1) durch die Zusammenarbeit zwischen der Rollenbewegungsanordnung (7) und der Rollen-Führungsschiene (14) zu erreichen.

32. Die Laserplattenherstellungsvorrichtung nach Anspruch 31, wobei die Rollenbewegungsanordnung (7) umfasst:
eine Bewegungsbasisplatte (72);
eine Rotationsanordnung (74), vorgesehen auf der Bewegungsbasisplatte (72), wobei die Rotationsanordnung (74) umfasst:
ein Rotationsantriebselement (742), und eine erste Klemme (744), elektrisch verbunden mit dem Rotationsantriebselement (742);
ein passives Rotationselement (746), vorgesehen gegenüber dem Rotationsantriebselement (742), wobei das passive Rotationselement (746) fähig ist, sich auf der Bewegungsbasisplatte (72) zu bewegen, das passive Rotationselement (746) mit einer zweiten Klemme (748) darauf versehen ist, und unter dem Effekt der ersten Klemme (744) und der zweiten Klemme (748) die Rolle (4) mit der Rotationsanordnung (74) verbunden ist, und
wobei die erste Klemme (744) fähig ist, unter dem Effekt des Rotationsantriebselements (742) zu rotieren.

33. Die Laserplattenherstellungsvorrichtung nach Anspruch 32, ferner umfassend:
eine Strahlanordnung (8), vorgesehen auf der Bewegungsbasisplatte (72) entsprechend der Rolle (4), wobei die Strahlanordnung (8) an einer Seite der Rotationsanordnung (74) vorgesehen ist, und der Arbeitsbereich der Strahlanordnung (8) die Druckplatte (5) abdeckt.

34. Die Laserplattenherstellungsvorrichtung nach Anspruch 33, wobei die Strahlanordnung (8) umfasst:
eine Luftstromstütze (82), wobei die Größe der Luftstromstütze (82) an die Größe der Rolle (4) angepasst ist;
wobei eine Vielzahl von Düsen (822) in der Luftstromstütze (82) vorgesehen ist, und in der axialen Richtung der Rolle (4) der Arbeitsbereich der Düsen die Druckplatte (5) abdeckt.

35. Die Laserplattenherstellungsvorrichtung nach Anspruch 34, ferner umfassend:
eine Luftrohranordnung (84), umfassend:
ein erstes Luftrohr (842), kommunizierend mit der Luftstromstütze (82), wobei unter dem Effekt des ersten Luftrohrs (842) ein Teil der Düsen (822) fähig ist, Luft nach außen zu sprühen;
ein zweites Luftrohr (844), kommunizierend mit der Luftstromstütze (82), wobei unter dem Effekt des zweiten Luftrohrs (844) der andere Teil der Düsen (822) fähig ist, Luft von außen nach innen zu saugen;
wobei die Düsen (822) an den zwei Seiten der Luftstromstütze (82) entlang der radialen Richtung der Rolle (4) vorgesehen sind,
wenn die Rolle (4) nach unten rotiert, sprühen die Düsen (822) unter der Rolle (4) Luft nach oben, und die Düsen (822) über der Rolle (4) saugen Luft, oder wenn die Rolle (4) nach oben rotiert, sprühen die Düsen (822) über der Rolle (4) Luft nach unten, und die Düsen (822) unter der Rolle (4) saugen Luft.

36. Die Laserplattenherstellungsvorrichtung nach Anspruch 35, wobei es zwei Luftstromstützen (82) gibt, der Abstand zwischen den zwei Luftstromstützen (82) sich allmählich von unten nach oben vergrößert, und die Rolle (4) zwischen den zwei Luftstromstützen (82) vorgesehen ist.

37. Die Laserplattenherstellungsvorrichtung nach Anspruch 33, wobei das passive Rotationselement (746) hohl ist, die zweite Klemme (748) eine hohle Klemme ist, und die Laserplattenherstellungsvorrichtung ferner umfasst:
ein drittes Luftrohr (86), verbunden mit dem passiven Rotationselement (746), und unter dem Effekt des dritten Luftrohrs (86) das passive Rotationselement (746) fähig ist, konfiguriert zu werden, um Luft zu der Rolle (4) auszuleiten oder Luft von der Rolle (4) zu saugen.

38. Die Laserplattenherstellungsvorrichtung nach Anspruch 2, wobei die obere Wand und/oder die Seitenwand des Portalrahmens (12) mit einer Erfassungs-Führungsschiene (122) versehen ist, und die Laserplattenherstellungsvorrichtung ferner umfasst:
eine Erfassungsanordnung (9), vorgesehen auf der Erfassungs-Führungsschiene (122), wobei die Erfassungsanordnung (9) fähig ist, das Springen der Druckplatte (5) und die Bearbeitungsqualität der Druckplatte (5) zu erfassen;
wobei die Erfassungsanordnung (9) umfasst:
eine Erfassungsbasisplatte (92), wobei die Erfassungsbasisplatte (92) einen Verbindungsabschnitt (922) und einen Anpassungsabschnitt (924) umfasst, die miteinander verbunden sind, der Verbindungsabschnitt (922) konfiguriert ist, mit der Erfassungs-Führungsschiene (122) zusammenzuarbeiten, um die Bewegung der Erfassungsbasisplatte (92) zu erreichen;
mindestens einen Erfassungskopf (94), beweglich vorgesehen auf dem Anpassungsabschnitt (924), und die Erfassungsrichtung des Erfassungskopfs (94) zu der Rolle (4) zeigt; und/oder
die Laserplattenherstellungsvorrichtung ferner umfassend:
einen Schutzschirm (18), angeordnet entsprechend dem Portalrahmen (12), und durch den Schutzschirm (18) der Raum, wo die Optikpfadplattform (2) angeordnet ist, unabhängig von dem Raum ist, wo die Rolle (4) angeordnet ist.

39. Ein Plattenherstellungssystem, umfassend:
die Laserplattenherstellungsvorrichtung nach einem der Ansprüche 1 bis 38; eine Schutzabdeckung (10), mindestens außerhalb der Basis (1) der Laserplattenherstellungsvorrichtung umhüllt;
eine Hilfsvorrichtung (102), vorgesehen außerhalb der Schutzabdeckung (10), wobei die Hilfsvorrichtung (102) mit der Schutzabdeckung (10) kommuniziert, um die Vorrichtungstemperatur und die Lufttemperatur in der Schutzabdeckung (10) durch die Hilfsvorrichtung (102) zu steuern.

40. Das Plattenherstellungssystem nach Anspruch 39, ferner umfassend:
einen obere-Platte-Bereich, unabhängig von der Basis (1) der Laserplattenherstellungsvorrichtung angeordnet, wobei der obere-Platte-Bereich außerhalb der Schutzabdeckung (10) vorgesehen ist; und
eine obere-Platte-Abdeckung (106), umhüllt außerhalb des obere-Platte-Bereichs, wobei die Druckplatte (5) der Laserplattenherstellungsvorrichtung auf der Rolle (4) der Laserplattenherstellungsvorrichtung innerhalb des obere-Platte-Bereichs montiert ist;
eine Übergangsabdeckung (108), vorgesehen an einer Seite der obere-Platte-Abdeckung (106) und/oder der Schutzabdeckung (10),
wobei die Übergangsabdeckung (108) mit zwei Türkörpern (1082) geöffnet wird, und einer von zwei Türkörpern (1082), entsprechend jeder Übergangsabdeckung, öffnet, während der andere Türkörper (1082) schließt.

## Revendications

1. Dispositif de fabrication de planche au laser, comprenant :
une base (1) ;
un rouleau (4), disposé de manière mobile sur la base (1), dans lequel le rouleau (4) est capable de tourner par rapport à la base (1), se déplace le long de la direction axiale du rouleau (4), et est pourvu d'une planche d'impression (5) ;
au moins une plateforme de trajet optique (2), disposée de manière mobile sur la base (1), dans lequel chaque plateforme de trajet optique (2) est pourvue d'au moins un ensemble d'usinage au laser (3), la plage de traitement de l'ensemble d'usinage au laser (3) couvre la plage de déplacement de la planche d'impression (5) dans la direction axiale à travers le déplacement de la plateforme de trajet optique (2) et/ou du rouleau (4), et
l'ensemble d'usinage au laser (3) est capable d'usiner, sur la planche d'impression (5), des planches de gravure et/ou des planches tramées ;
**caractérisé en ce qu'**il y a un espace entre le rouleau (4) et la planche d'impression (5), de telle sorte que, lors de l'utilisation, un flux d'air axial est formé dans l'espace lorsque le rouleau (4) tourne ;
le rouleau (4) comprend :
un corps de rouleau (42), dans lequel le corps de rouleau (42) est creux, les deux extrémités du corps de rouleau (42) sont respectivement pourvues d'une ouverture (422), et le corps de rouleau (42) est emmanché par un logement de rouleau (424) ;
une charge de positionnement (48), disposée au niveau des deux extrémités du corps de rouleau (42), dans lequel la charge de positionnement (48) s'adapte à la forme de l'ouverture (422), de façon à sceller les ouvertures (422) du corps de rouleau (42) à travers la charge de positionnement (48) ;
le logement de rouleau (424) est pourvu d'une pluralité de rainures de positionnement (426) s'étendant dans une direction axiale, chaque rainure de positionnement (426) est pourvue d'un premier trou traversant (4262) et d'un premier trou borgne (4264) ;
un taraudage interne est disposé sur la paroi interne du premier trou borgne (4264) ;
le dispositif de fabrication de planche au laser comprend en outre :
un ensemble de fixation (6), disposé dans la rainure de positionnement (426), dans lequel l'ensemble de fixation (6) est configuré pour fixer la position relative entre la planche d'impression (5) et le rouleau (4) ;
l'ensemble de fixation (6) comprend :
une bande de fixation (62) et une bande d'étanchéité (64),
une partie des rainures de positionnement (426) qui sont couvertes par la saillie de la planche d'impression (5) sur le logement de rouleau (424) sont pourvues des bandes de fixation (62), la planche d'impression (5) est fixée à travers les bandes de fixation (62), et chaque rainure de positionnement (426) est pourvue de la bande de fixation (62) ou de la bande d'étanchéité (64) ;
la bande de fixation (62) présente une forme de bande rectangulaire, et est pourvue d'une pluralité de premiers ensembles de trous de liaison (622), et
des blocs adsorbants (66), disposés sur les bandes de fixation (62), et les blocs adsorbants (66) sont reliés aux bandes de fixation (62) à travers les premiers ensembles de trous de liaison (622).

2. Dispositif de fabrication de planche au laser selon la revendication 1, dans lequel, la base (1) est pourvue d'un cadre de portique (12), les deux côtés du cadre de portique (12) sont respectivement pourvus d'un rail de guidage de rouleau (14) disposé en correspondance avec le rouleau (4) et d'un rail de guidage de trajet optique (16) disposé en correspondance avec la plateforme de trajet optique (2), pour réaliser le déplacement du rouleau (4) dans la direction axiale à travers le rail de guidage de rouleau (14) et réaliser le déplacement de la plateforme de trajet optique (2) à travers le rail de guidage de trajet optique (16).

3. Dispositif de fabrication de planche au laser selon la revendication 2, dans lequel, la direction d'extension du rail de guidage de trajet optique (16) est la même que la direction d'extension du rail de guidage de rouleau (14).

4. Dispositif de fabrication de planche au laser selon la revendication 2, comprenant en outre :
une partie de guidage de support (22), disposée en-dessous de la plateforme de trajet optique (2), et le trajet de déplacement de la plateforme de trajet optique (2) est restreint à travers la coopération entre la partie de guidage de support (22) et le rail de guidage de trajet optique (16).

5. Dispositif de fabrication de planche au laser selon la revendication 1, dans lequel,
la plateforme de trajet optique (2) réalise un déplacement en ligne droite sur la base (1) au moyen d'un moteur linéaire ; ou
la plateforme de trajet optique (2) réalise un déplacement en ligne droite sur la base (1) au moyen d'un mécanisme de transmission vis-écrou, ou
la plateforme de trajet optique (2) réalise le déplacement en ligne droite au moyen d'un mécanisme pignon-crémaillère avec une conception anti-jeu.

6. Dispositif de fabrication de planche au laser selon la revendication 1, dans lequel, l'ensemble d'usinage au laser (3) comprend :
un trajet optique laser (32), disposé sur la plateforme de trajet optique (2) ;
une tête de traitement (34), dans lequel une extrémité de la tête de traitement (34) est reliée électriquement au trajet optique laser (32), et la tête de traitement (34) est disposée en correspondance avec la planche d'impression (5), pour réaliser le traitement en émettant un laser vers la planche d'impression (5) par la tête de traitement (34).

7. Dispositif de fabrication de planche au laser selon la revendication 6, dans lequel, une extrémité de la plateforme de trajet optique (2) est pourvue d'une planche de montage de traitement (24), la tête de traitement (34) est disposée sur la planche de montage de traitement (24), et la tête de traitement (34) est capable de se déplacer dans une direction verticale par rapport à la planche de montage de traitement (24),
dans lequel, la planche de montage de traitement (24) est capable d'entraîner la tête de traitement (34) en mouvement vers l'avant et vers l'arrière sur la plateforme de trajet optique (2) le long de la direction d'émission de lumière de la tête de traitement (34).

8. Dispositif de fabrication de planche au laser selon la revendication 6, dans lequel, le trajet optique laser (32) comprend :
un générateur laser (322), utilisé pour générer un laser ;
au moins un tube de protection de trajet optique (324), dans lequel le tube de protection de trajet optique (324) est creux, une extrémité du tube de protection de trajet optique (324) est reliée au générateur laser (322), et le laser est propagé dans le tube de protection de trajet optique (324).

9. Dispositif de fabrication de planche au laser selon la revendication 8, dans lequel, le trajet optique laser (32) comprend en outre :
au moins une feuille réfléchissante (326), dans lequel la direction du trajet optique du laser peut être changée sous l'effet de la feuille réfléchissante (326) ; dans lequel, le tube de protection de trajet optique (324) est disposé entre deux feuilles réfléchissantes (326) adjacentes quelconques.

10. Dispositif de fabrication de planche au laser selon la revendication 8, dans lequel, le trajet optique laser (32) comprend en outre :
un dispositif d'expansion et de collimation de faisceau (328), disposé sur le trajet optique du laser généré à partir du générateur laser (322), dans lequel le dispositif d'expansion et de collimation de faisceau (328) est capable de comprimer l'angle de divergence du laser ;
un dispositif de mise en forme (3210), disposé sur le trajet optique du laser généré à partir du générateur laser (322), dans lequel le dispositif de mise en forme (3210) est capable de changer l'uniformité d'agencement de l'intensité d'un faisceau laser ;
un dispositif de réglage de focalisation (3212), disposé sur le trajet optique du laser généré à partir du générateur laser (322), dans lequel le dispositif de réglage de focalisation (3212) est capable de régler la position du point de focalisation du laser ;
un dispositif de détection, disposé sur le trajet optique du laser généré à partir du générateur laser (322), dans lequel le dispositif de détection est capable de réaliser une ou plusieurs parmi une détection de puissance, une détection de point focal et une détection d'orientation pour le laser,
dans lequel, la propagation de trajet optique entre deux quelconques parmi le dispositif d'expansion et de collimation de faisceau (328), le dispositif de mise en forme (3210), le dispositif de réglage de focalisation (3212) et le dispositif de détection est réalisée par le tube de protection de trajet optique (324).

11. Dispositif de fabrication de planche au laser selon la revendication 10, dans lequel, le laser généré à partir du générateur laser (322) est émis dans la tête de traitement (34) après passage à travers le dispositif d'expansion et de collimation de faisceau (328), le dispositif de mise en forme (3210) et le dispositif de réglage de focalisation (3212).

12. Dispositif de fabrication de planche au laser selon la revendication 8, comprenant en outre :
un diviseur de faisceau (36), disposé sur la plateforme de trajet optique (2), et le laser se propageant vers le diviseur de faisceau (36) émet au moins deux trajets optiques sous l'effet du diviseur de faisceau (36),
dans lequel les trajets optiques émis hors du diviseur de faisceau (36) correspondent à au moins une tête de traitement (34).

13. Dispositif de fabrication de planche au laser selon la revendication 6, dans lequel, la tête de traitement (34) comprend :
au moins une feuille réfléchissante (326), une tête de sortie (342) et un dispositif de focalisation (344),
dans lequel, le laser émis dans la tête de traitement (34) à partir du trajet optique laser (32) est émis vers la planche d'impression (5) pour réaliser un traitement après passage à travers la feuille réfléchissante (326), la tête de sortie (342) et le dispositif de focalisation (344) successivement.

14. Dispositif de fabrication de planche au laser selon la revendication 1, dans lequel, la pluralité de rainures de positionnement (426) sont disposées de manière uniforme dans le logement de rouleau (424), le premier trou traversant (4262) s'étend à la fois à travers le côté interne et le côté externe du logement de rouleau (424), et les premiers trous traversants (4262) et les premiers trous borgnes (4264) sont disposés dans la rainure de positionnement (426) en alternance.

15. Dispositif de fabrication de planche au laser selon la revendication 1, dans lequel, le corps de rouleau (42) est formé avec un arbre creux (410) à l'intérieur de celui-ci, l'arbre creux (410) sépare l'espace à l'intérieur du corps de rouleau (42) le long de la direction radiale en une cavité creuse (412) en communication avec l'ouverture (422) et une cavité de support (414) ; le rouleau (4) comprend en outre :
une planche tramée (416), disposée dans la cavité de support (414), dans lequel la planche tramée (416) est reliée respectivement à la paroi interne du corps de rouleau (42) et à la paroi externe de l'arbre creux (410) au niveau des deux côtés répartis le long de la direction radiale.

16. Dispositif de fabrication de planche au laser selon la revendication 15, dans lequel, une pluralité de premiers évents (4162) est disposée dans la planche tramée (416), et une pluralité de deuxièmes évents (4102) est disposée dans l'arbre creux (410).

17. Dispositif de fabrication de planche au laser selon la revendication 1, dans lequel, l'axe de rotation de la charge de positionnement (48) est disposé sur l'axe du corps de rouleau (42), et un trou de cône de positionnement (482) est disposé au niveau de l'axe de rotation de la charge de positionnement (48).

18. Dispositif de fabrication de planche au laser selon la revendication 17, dans lequel, une soupape (484) est disposée à l'intérieur de la charge de positionnement (48) qui est disposée au niveau d'une extrémité du corps de rouleau (42), et la planche d'impression (5) peut être restreinte d'être adsorbée sur le rouleau (4) ou de tomber du rouleau (4) à travers la soupape (484).

19. Dispositif de fabrication de planche au laser selon la revendication 1, dans lequel, le premier ensemble de trous de liaison (622) comprend :
un premier trou traversant étagé (6222), et un deuxième trou borgne (6226) ménagé à l'extérieur du premier trou traversant étagé (6222) le long de la direction radiale ;
un deuxième trou traversant étagé (6224), disposé entre deux premiers trous traversants étagés (6222) adjacents, dans lequel le deuxième trou traversant étagé (6224) est ménagé en correspondance avec le premier trou borgne (4264) ; et
une troisième rainure de bague d'étanchéité (624), enroulant le côté de la bande de fixation (62) à l'écart du premier trou traversant étagé (6222),
dans lequel, la paroi interne du deuxième trou borgne (6226) est pourvue d'un taraudage interne.

20. Dispositif de fabrication de planche au laser selon la revendication 19, dans lequel, il y a deux deuxièmes trous borgnes (6226) dans le premier ensemble de trous de liaison (622), les deux deuxièmes trous borgnes (6226) sont ménagés symétriquement à l'extérieur du premier trou traversant étagé (6222), et les axes centraux des deux deuxièmes trous borgnes (6226) ne sont pas perpendiculaires à la paroi latérale des bandes de fixation (62).

21. Dispositif de fabrication de planche au laser selon la revendication 19, dans lequel, le bloc adsorbant (66) comprend :
un corps de bloc adsorbant (662) ;
une première colonne de positionnement (664), disposée sur le corps de bloc adsorbant (662), dans lequel la première colonne de positionnement (664) est ménagée en correspondance avec le premier trou traversant étagé (6222) ;
une première rainure de positionnement (666), disposée sur le côté du corps de bloc adsorbant (662) à proximité de la bande de fixation (62), dans lequel la forme de la première rainure de positionnement (666) s'adapte à la forme de la bande de fixation (62) ;
un premier trou traversant taraudé (668), disposé dans la première colonne de positionnement (664), dans lequel le premier trou traversant taraudé (668) coïncide avec l'axe du premier trou traversant étagé (6222) ; et
un quatrième trou traversant étagé (6610), disposé en correspondance avec le deuxième trou borgne (6226).

22. Dispositif de fabrication de planche au laser selon la revendication 21, comprenant en outre :
une première rainure de bague d'étanchéité (6612), disposée de façon à enrouler la première colonne de positionnement (664).

23. Dispositif de fabrication de planche au laser selon la revendication 21, dans lequel, un troisième trou traversant étagé (642) et un troisième trou borgne (644) sont disposés avec un intervalle dans la direction de la longueur de la bande d'étanchéité (64),
dans lequel la paroi interne du troisième trou borgne (644) est pourvue d'un taraudage interne, et une quatrième rainure de bague d'étanchéité (646) est disposée sur l'autre côté de la bande d'étanchéité (64) à l'opposé du troisième trou borgne (644) ;
comprenant en outre :
un bloc isolant (68), disposé sur la bande de fixation (62).

24. Dispositif de fabrication de planche au laser selon la revendication 23, dans lequel, le bloc isolant (68) comprend :
un corps de bloc isolant (682) ;
une deuxième colonne de positionnement (684), disposée sur le corps de bloc isolant (682), dans lequel la deuxième colonne de positionnement (684) est disposée en correspondance avec le troisième trou traversant étagé (642) ;
une deuxième rainure de positionnement (686), disposée sur le côté du corps de bloc isolant (682) à proximité de l'ensemble de fixation (6), et la forme de la rainure de positionnement (426) épouse la forme de l'ensemble de fixation (6) ;
un cinquième trou traversant étagé (688), disposé en correspondance avec le deuxième trou borgne (6226), dans lequel, la liaison entre le bloc isolant (68) et la bande de fixation (62) est réalisée en faisant passer un élément de liaison (610) à travers le cinquième trou traversant étagé (688) et le deuxième trou borgne (6226).

25. Dispositif de fabrication de planche au laser selon la revendication 24, comprenant en outre :
une deuxième rainure de bague d'étanchéité (6810), disposée de façon à enrouler la deuxième colonne de positionnement (684).

26. Dispositif de fabrication de planche au laser selon la revendication 24, dans lequel, la distance minimale entre la deuxième rainure de positionnement (686) et le côté du corps de bloc isolant (682) à l'écart de l'ensemble de fixation (6) est plus petite que la distance minimale entre la première rainure de positionnement (666) et le côté du corps de bloc adsorbant (662) à l'écart de la bande de fixation (62), et il y a un espace entre le bloc isolant (68) et la planche d'impression (5).

27. Dispositif de fabrication de planche au laser selon la revendication 21, dans lequel, la planche d'impression (5) présente une forme en arc, au moins un côté de la planche d'impression (5) dans la direction circonférentielle est formé avec un bord plié (52) courbé vers le rouleau (4), et les deux côtés de la planche d'impression (5) le long de la direction axiale sont respectivement pourvus des deuxièmes trous traversants (54) en correspondance avec les premiers trous traversants taraudés (668).

28. Dispositif de fabrication de planche au laser selon la revendication 1, dans lequel,
la planche d'impression (5) présente une forme cylindrique,
dans lequel, chaque rainure de positionnement (426) est pourvue de la bande de fixation (62), et le rayon de courbure en correspondance avec le bloc adsorbant (66) de la bande de fixation (62) n'est pas plus grand que le rayon de la surface interne de la planche d'impression (5) ; et
la taille de la planche d'impression (5) peut être changée en fonction de l'élévation et de la chute de la température ; lorsque la planche d'impression (5) est montée sur le rouleau (4), la planche d'impression (5) est chauffée et le diamètre interne de la planche d'impression (5) est plus grand que le diamètre externe du rouleau (4), puis la planche d'impression (5) est refroidie et la planche d'impression (5) est attachée au rouleau (4).

29. Dispositif de fabrication de planche au laser selon la revendication 23, dans lequel,
sous l'effet d'un ensemble d'usinage au laser (3), la planche d'impression (5) forme un motif de ligne (110) s'enfonçant d'un côté à l'autre côté ; et/ou sous l'effet d'un ensemble d'usinage au laser (3), la planche d'impression (5) forme un motif de trou (112) qui pénètre dans les deux côtés de la planche d'impression (5),
dans lequel, les blocs adsorbants (66) sont disposés dans la rainure de positionnement (426) dans le rouleau (4) en correspondance avec le motif de ligne (110), et les blocs isolants (68) sont disposés dans la rainure de positionnement (426) dans le rouleau (4) en correspondance avec le motif de trou (112).

30. Dispositif de fabrication de planche au laser selon la revendication 23, dans lequel, la planche d'impression (5) présente une forme en arc non complètement circonférentielle, et le dispositif de fabrication de planche au laser comprend en outre :
un bloc de contrepoids (614), relié de manière amovible à la bande d'étanchéité (64),
dans lequel le bloc de contrepoids (614) et la planche d'impression (5) sont respectivement disposés au niveau des deux côtés de l'axe du rouleau (4) ;
un sixième trou traversant étagé (6142), disposé dans le bloc de contrepoids (614), dans lequel l'axe du sixième trou traversant étagé (6142) coïncide avec l'axe du troisième trou borgne (644), et
dans lequel, la liaison entre le bloc de contrepoids (614) et la bande d'étanchéité (64) est réalisée en faisant passer un élément de fixation à travers le sixième trou traversant étagé (6142) et le troisième trou borgne (644).

31. Dispositif de fabrication de planche au laser selon la revendication 2, comprenant en outre :
un ensemble de déplacement de rouleau (7), disposé de manière mobile sur la base (1), dans lequel l'ensemble de déplacement de rouleau (7) est pourvu du rouleau (4), pour réaliser le déplacement du rouleau (4) par rapport à la base (1) à travers la coopération entre l'ensemble de déplacement de rouleau (7) et le rail de guidage de rouleau (14).

32. Dispositif de fabrication de planche au laser selon la revendication 31, dans lequel, l'ensemble de déplacement de rouleau (7) comprend :
une planche de base mobile (72) ;
un ensemble rotatif (74), disposé sur la planche de base mobile (72), dans lequel l'ensemble rotatif (74) comprend :
un élément d'entraînement rotatif (742), et une première pince (744) reliée électriquement à l'élément d'entraînement rotatif (742) ;
un élément rotatif passif (746), disposé à l'opposé de l'élément d'entraînement rotatif (742), dans lequel l'élément rotatif passif (746) est capable de se déplacer sur la planche de base mobile (72), l'élément rotatif passif (746) est pourvu d'une deuxième pince (748) sur celui-ci, et sous l'effet de la première pince (744) et de la deuxième pince (748), le rouleau (4) est relié à l'ensemble rotatif (74), et
dans lequel, la première pince (744) est capable de tourner sous l'effet de l'élément d'entraînement rotatif (742).

33. Dispositif de fabrication de planche au laser selon la revendication 32, comprenant en outre :
un ensemble de jet (8) disposé sur la planche de base mobile (72) en correspondance avec le rouleau (4), dans lequel l'ensemble de jet (8) est disposé sur un côté de l'ensemble rotatif (74), et la plage de travail de l'ensemble de jet (8) couvre la planche d'impression (5).

34. Dispositif de fabrication de planche au laser selon la revendication 33, dans lequel, l'ensemble de jet (8) comprend :
un support de flux d'air (82), dans lequel la taille du support de flux d'air (82) s'adapte à la taille du rouleau (4) ;
dans lequel, une pluralité de buses (822) est disposée dans le support de flux d'air (82), et dans la direction axiale du rouleau (4), la plage de travail des buses couvre la planche d'impression (5).

35. Dispositif de fabrication de planche au laser selon la revendication 34, comprenant en outre :
un ensemble de tube à air (84), comprenant :
un premier tube à air (842), en communication avec le support de flux d'air (82), dans lequel, sous l'effet du premier tube à air (842), une partie des buses (822) est capable de pulvériser de l'air vers l'extérieur ;
un deuxième tube à air (844), en communication avec le support de flux d'air (82), dans lequel, sous l'effet du deuxième tube à air (844), l'autre partie des buses (822) est capable d'aspirer de l'air de l'extérieur vers l'intérieur ;
dans lequel, les buses (822) sont disposées au niveau des deux côtés du support de flux d'air (82) le long de la direction radiale du rouleau (4),
lorsque le rouleau (4) tourne vers le bas, les buses (822) au-dessous du rouleau (4) pulvérisent de l'air vers le haut, et les buses (822) au-dessus du rouleau (4) aspirent de l'air, ou
lorsque le rouleau (4) tourne vers le haut, les buses (822) au-dessus du rouleau (4) pulvérisent de l'air vers le bas, et les buses (822) au-dessous du rouleau (4) aspirent de l'air.

36. Dispositif de fabrication de planche au laser selon la revendication 35, dans lequel, il y a deux supports de flux d'air (82), la distance entre les deux supports de flux d'air (82) augmente graduellement du bas vers le haut, et le rouleau (4) est disposé entre les deux supports de flux d'air (82).

37. Dispositif de fabrication de planche au laser selon la revendication 33, dans lequel, l'élément rotatif passif (746) est creux, la deuxième pince (748) est une pince creuse, et le dispositif de fabrication de planche au laser comprend en outre :
un troisième tube à air (86), relié à l'élément rotatif passif (746), et sous l'effet du troisième tube à air (86), l'élément rotatif passif (746) peut être configuré pour évacuer l'air vers le rouleau (4) ou aspirer l'air du rouleau (4).

38. Dispositif de fabrication de planche au laser selon la revendication 2, dans lequel, la paroi supérieure et/ou la paroi latérale du cadre de portique (12) est pourvue d'un rail de guidage de détection (122), et le dispositif de fabrication de planche au laser comprend en outre :
un ensemble de détection (9), disposé sur le rail de guidage de détection (122), dans lequel l'ensemble de détection (9) est capable de détecter le saut de la planche d'impression (5) et la qualité d'usinage de la planche d'impression (5) ; dans lequel, l'ensemble de détection (9) comprend :
une planche de base de détection (92), dans lequel la planche de base de détection (92) comprend une partie de liaison (922) et une partie de réglage (924) qui sont reliées l'une à l'autre, la partie de liaison (922) est configurée pour coopérer avec le rail de guidage de détection (122) pour réaliser le déplacement de la planche de base de détection (92) ;
au moins une tête de détection (94), disposée de manière mobile sur la partie de réglage (924), et la direction de détection de la tête de détection (94) est en regard du rouleau (4) ; et/ou
le dispositif de fabrication de planche au laser comprenant en outre :
un écran de protection (18), ménagé en correspondance avec le cadre de portique (12), et à travers l'écran de protection (18), l'espace où se trouve la plateforme de trajet optique (2) est indépendant de l'espace où se trouve le rouleau (4).

39. Système de fabrication de planche, comprenant :
le dispositif de fabrication de planche au laser selon l'une de la revendication 1 à la revendication 38 ;
un couvercle de protection (10), au moins emmanché à l'extérieur de la base (1) du dispositif de fabrication de planche au laser ;
un dispositif auxiliaire (102), disposé à l'extérieur du couvercle de protection (10), dans lequel le dispositif auxiliaire (102) est en communication avec le couvercle de protection (10), pour réguler la température du dispositif et la température de l'air dans le couvercle de protection (10) à travers le dispositif auxiliaire (102).

40. Système de fabrication de planche selon la revendication 39, comprenant en outre :
une zone de planche supérieure, ménagée indépendamment de la base (1) du dispositif de fabrication de planche au laser, dans lequel la zone de planche supérieure est disposée à l'extérieur du couvercle de protection (10) ; et
un couvercle de planche supérieure (106), emmanché à l'extérieur de la zone de planche supérieure, dans lequel la planche d'impression (5) du dispositif de fabrication de planche au laser est montée sur le rouleau (4) du dispositif de fabrication de planche au laser à l'intérieur de la zone de planche supérieure ;
un couvercle de transition (108), disposé sur un côté du couvercle de planche supérieure (106) et/ou du couvercle de protection (10),
dans lequel, le couvercle de transition (108) est ouvert avec deux corps de porte (1082), et l'un des deux corps de porte (1082) correspondant à chaque couvercle de transition s'ouvre, alors que l'autre corps de porte (1082) se ferme.
